(19) Europäisches Patentamt / European Patent Office / Office européen des brevets

(11) **EP 3 860 827 B1**

(12) **EUROPÄISCHE PATENTSCHRIFT**

(45) Veröffentlichungstag und Bekanntmachung des Hinweises auf die Patenterteilung:
26.10.2022 Patentblatt 2022/43

(21) Anmeldenummer: **19791169.6**

(22) Anmeldetag: **01.10.2019**

(51) Internationale Patentklassifikation (IPC):
*B29C 64/124* (2017.01)    *B29C 64/343* (2017.01)
*B29C 64/393* (2017.01)    *B29C 64/245* (2017.01)
*B33Y 10/00* (2015.01)    *B33Y 30/00* (2015.01)
*B33Y 40/00* (2020.01)

(52) Gemeinsame Patentklassifikation (CPC):
**B29C 64/124; B29C 64/245; B29C 64/343;
B29C 64/393; B33Y 10/00; B33Y 30/00;
B33Y 40/00;** B29C 64/255

(86) Internationale Anmeldenummer:
**PCT/EP2019/076609**

(87) Internationale Veröffentlichungsnummer:
**WO 2020/070136 (09.04.2020 Gazette 2020/15)**

(54) **DEFORMATIONSERKENNUNG VON WANNEN**

DEFORMATION DETECTION OF TROUGHS

DÉTECTION DE DÉFORMATIONS DE CUVES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **01.10.2018 AT 508382018**

(43) Veröffentlichungstag der Anmeldung:
**11.08.2021 Patentblatt 2021/32**

(73) Patentinhaber:
• **DENTSPLY SIRONA Inc.
York, 17401-2991 (US)**
• **Sirona Dental Systems GmbH
64625 Bensheim (DE)**

(72) Erfinder:
• **MICHALICA, Thomas
2351 Wiener Neudorf (AT)**
• **HASENZAHL, Thomas
64625 Bensheim (DE)**
• **SCHMIDT, Christian
64625 Bensheim (DE)**
• **STAHL, Christian
64625 Bensheim (DE)**

(74) Vertreter: **Özer, Alpdeniz et al
Sirona Dental Systems GmbH
Corporate Legal
Fabrikstraße 31
64625 Bensheim (DE)**

(56) Entgegenhaltungen:
AT-A1- 518 566        US-A1- 2015 064 298
US-A1- 2018 194 080

**Beschreibung**

Die Erfindung betrifft eine Vorrichtung gemäß Anspruch 1 für eine Anlage zum schichtweisen Aufbau eines Körpers aus einer durch Strahlung härtbaren Substanz, mit einer einen Wannenboden aufweisenden Wanne zur Aufnahme der durch Strahlung härtbaren Substanz, mit einer über dem Wannenboden angeordneten und in Bezug auf den Wannenboden höhenverstellbaren Bauplattform, und mit einem mit dem Wannenboden zusammenwirkenden Sensor, wobei der Wannenboden zumindest teilweise flexibel ausgebildet ist.

Die Erfindung betrifft zudem ein Verfahren gemäß Anspruch 13 zum schichtweisen Aufbau eines Körpers aus einer durch Strahlung härtbaren Substanz, die in einer Wanne aufgenommen wird, welche einen Wannenboden aufweist, und für jede zu bildende Schicht des Körpers eine in Bezug auf den Wannenboden höhenverstellbare Bauplattform in eine Höhe über dem Wannenboden verfahren wird, welche einen Abstand zwischen der Bauplattform oder der zuletzt gebildeten Schicht des Körpers zum Wannenboden im Ausmaß mindestens der Dicke der zu bildenden Schicht des Körpers definiert, die durch Strahlung härtbare Substanz zur Bildung der Schicht des Körpers selektiv mittels einer Strahlungsquelle durch Bestrahlung ausgehärtet wird, und die höhenverstellbare Bauplattform mit der daran anhaftenden, ausgehärteten Schicht des Körpers von einer Ruhelage des Wannenbodens weg bewegt wird, um Raum für die Ausbildung einer nächsten Schicht zwischen der ausgehärteten Schicht des Körpers und dem Wannenboden zu schaffen, wobei der Wannenboden zumindest teilweise flexibel ausgebildet ist und zumindest ein Verfahrensparameter von einem mit dem Wannenboden zusammenwirkenden Sensor erfasst wird.

Vorrichtungen bzw. Verfahren zum schichtweisen Aufbau eines dreidimensionalen Körpers aus einer durch Strahlung härtbaren Substanz sind auch unter den Begriffen 3D-Druck, additive manufacturing oder rapid prototyping bekannt. Dabei wird die Querschnittsinformation der durch elektromagnetische Strahlung schichtweise auszuhärtenden Substanz, beispielsweise eines Foto-Harzes, im Allgemeinen durch ein Maskenprojektionsverfahren oder durch eine Laser-Quelle erstellt. In generativen Fertigungsmaschinen, welche einen bspw. kontinuierlichen Druckprozess ermöglichen, werden für die Belichtung des Querschnittes bzw. der Schichten, meist pixelgesteuerte DLP (Digital Light Processing)-, MEMS (Microelectromechanical Systems)-, LC (liquid crystal)-Displays, LED-Displays oder steuerbare Laser eingesetzt. Dabei wird durch die Belichtung aus der flüssigen, fotosensitiven Substanz eine feste Schicht generiert. Diese Schicht haftet dabei an einem Träger an und wird von einer Referenzfläche durch Anheben des Trägers gelöst bzw. entfernt. In darauffolgenden Fertigungsschritten fungiert die von der Referenzfläche abgelöste, ausgehärtete Schicht als Träger. So wird sukzessive ein dreidimensionaler Körper aus der fotosensitiven Substanz gezogen bzw. gebildet.

Die härtbare Substanz ist im Allgemeinen in einer Wanne mit einem strahlungsdurchlässigen und zumindest teilweise flexiblen Wannenboden aufgenommen. Mit dem flexiblen Wannenboden können die beim Trennvorgang der ausgehärteten Schicht vom Wannenboden entstehenden Abzugskräfte minimiert werden, um zu vermeiden, dass zu hohe Abzugskräfte den zu generierenden Körper beschädigen oder von der Bauplattform trennen.

Ein bekanntes Problem ist dabei die fehlende Information, wann sich der generierte Körper von dem Wannenboden gelöst hat. Dementsprechend wird meist auf einen Erfahrungswert zurückgegriffen, welcher zusätzlich in Abhängigkeit von eingebrachter Strahlungsintensität und Geometrie der ausgehärteten Teilschicht variiert werden kann.

Die EP 2 173 538 B2 betrifft eine Vorrichtung zum Herstellen eines dreidimensionalen Bauteils durch Verfestigen eines verfestigbaren Materials, mit einer Strahlungsquelle, einem Bauteil-Träger mit einer den Bauteil tragenden Plattform, einem Behälter zur Aufnahme von verfestigbarem Material, einem flexiblen Film oder eine Folie im Baubereich des Bauteils, einer Verschiebeeinrichtung zum Verschieben des Bauteil-Trägers, einem Sensor und einer mit dem Sensor verbundenen Steuereinheit zum Steuern der Verschiebeeinrichtung und der Strahlungsquelle. Der Sensor ist angeordnet, um einen Druck oder eine Spannung auf einem flexiblen Film oder einer flexiblen Folie in der Baufläche abzutasten oder zu messen. Dabei erlaubt der Sensor eine Echtzeitbeobachtung von prozesskritischen Faktoren. Der gemessene Wert wird an die Steuereinheit ausgegeben, um mittels der Verschiebeeinrichtung die Bewegung bzw. die Bewegungsgeschwindigkeit des Bauteil-Trägers anzupassen.

US 2018/0194080 A1 offenbart ein Verfahren zur Herstellung von drei-dimensionalen Objekten durch Verwendung von kontinuierlicher und nicht-kontinuierlicher Verfestigung.

AT 518 566 A1 offenbart eine Vorrichtung zur Bildung formstabiler Objekte.

US 2015/0064298 A1 offenbart ein Stereolithographisches Apparatus.

Obgleich die bekannten Vorrichtungen zur Erfassung und Steuerung einzelner Prozessparameter ausgebildet sind, besteht Bedarf an verbesserten Vorrichtungen, insbesondere an einer weitergehenden Erfassung und Steuerung von Prozessparametern.

Es ist nun Aufgabe der Erfindung, eine Vorrichtung und ein Verfahren wie eingangs angegeben zu schaffen, welche(s) auf möglichst einfache und zuverlässige Weise eine Erfassung und Steuerung von Prozessparametern und somit eine rasche Herstellung von schichtweise aufgebauten Körpern mit möglichst geringem Ausschuss ermöglicht. Zudem sollen Fehlzustände im Herstellungsvorgang zuverlässig erfasst oder vermieden werden.

Hierfür sieht die Erfindung eine Vorrichtung wie in Anspruch 1 und ein Verfahren wie in Anspruch 13 definiert vor. Vorteilhafte Ausführungsformen und Weiterbildungen sind in den abhängigen Ansprüchen angegeben.

Gemäß der Erfindung ist vorgesehen, dass eine Kammer vorgesehen ist, wobei die Kammer von einer Unterseite des Wannenbodens begrenzt ist, wobei der Sensor eingerichtet ist, eine Volumenänderung der Kammer zu detektieren und ein Sensorsignal bereitzustellen, aus dem ein Vorzeichen der Volumenänderung ermittelbar ist.

Die Vorrichtung, die zumindest ein Teil einer Anlage zum schichtweisen Aufbau eines Körpers aus einer durch Strahlung härtbaren Substanz ist, weist zur Aufnahme der durch Strahlung härtbaren Substanz eine Wanne mit einem zumindest teilweise flexibel ausgebildeten Wannenboden auf. Die Wanne ist hierfür in einem Ausmaß flüssigkeitsdicht ausgebildet, welches ein unbeabsichtigtes Ausfließen der härtbaren Substanz (des aushärtbaren Materials) durch die Wanne hindurch verhindert. Die härtbare Substanz kann beispielsweise durch elektromagnetische Strahlung, insbesondere durch Licht, wie sichtbares Licht oder UV (Ultraviolettes)-Licht, aushärtbar sein. Insbesondere kann die härtbare Substanz ein Harz sein. Dabei kann die härtbare Substanz eine Viskosität beispielsweise im Bereich zwischen jener von Wasser und jener eines breiigen oder pastösen Stoffs aufweisen. Über dem Wannenboden ist eine Bauplattform angeordnet, welche in Bezug auf den Wannenboden höhenverstellbar eingerichtet ist. Die Bauplattform, welche zweckmäßig als ebene Platte ausgebildet ist, dient als Plattform, auf welcher der Körper durch bereichsweise Bestrahlung einzelner Schichten der härtbaren Substanz schichtweise aufgebaut wird. Mit der Höhenverstellung der Bauplattform wird der Abstand zwischen der Bauplattform und dem Wannenboden verstellt, d.h. die Höhe der Bauplattform ist als Abstand zum (belasteten oder unbelasteten, im Wesentlichen horizontalen) Wannenboden definiert. Die Vorrichtung weist zudem einen mit dem Wannenboden zusammenwirkenden Sensor auf, um damit Auslenkungen des flexiblen Wannenbodens aus einer belasteten oder unbelasteten Ruhelage erfassen zu können. Hierfür ist eine Kammer vorgesehen, welche von einer Unterseite des Wannenbodens begrenzt ist. Somit ist der Wannenboden ein Teil eines Kammergehäuses der Kammer, welche unterhalb der Wanne (d.h. auf einer im Betrieb der härtbaren Substanz gegenüberliegenden Seite des Wannenbodens) vorgesehen ist und in welcher Kammer ein komprimierbares oder im Wesentlichen unkomprimierbares Medium aufgenommen ist. Demnach ist ein Teil der Kammer, bspw. eine Wand der Kammer, durch den Wannenboden gebildet. Die Kammer ist daher im Wesentlichen ein geschlossener oder teilweise geschlossener Behälter, dessen Innenraum abschnittsweise durch den Wannenboden begrenzt ist. Der mit dem Wannenboden zusammenwirkende Sensor kann in der Kammer oder im Hohlraum eines an die Kammer angeschlossenen Körpers, bspw. im Hohlraum eines mit der Kammer verbundenen und mit dem Innenraum der Kammer zusammenwirkenden Schlauchs, aufgenommen sein. Ein solcher an die Kammer angeschlossener Körper kann insbesondere als Teil der Kammer verstanden werden.

Der Sensor ist eingerichtet, eine Volumenänderung der Kammer zu detektieren und ein Sensorsignal bereitzustellen, aus dem ein Vorzeichen der Volumenänderung ermittelbar ist. Der Sensor ist somit insbesondere zumindest für die Detektion ausgebildet, ob sich das Volumen der Kammer vergrößert oder verkleinert, und ausgebildet, abhängig hiervon ein Sensorsignal mit zumindest zwei unterschiedlichen Signalwerten oder Signalformen auszugeben, ein Signalwert/Signalform im Falle einer Vergrößerung des Volumens der Kammer und ein anderer Signalwert/Signalform im Falle einer Verkleinerung des Volumens der Kammer. Den unterschiedlichen Signalwerten/Signalformen kann dann ein positives und ein negatives Vorzeichen der Volumenänderung der Kammer zugeordnet sein. Dabei sind die Volumenänderungen von der Position bzw. von der Auslenkung des Wannenbodens abhängig. Der Sensor kann auch für die Detektion eines gleichbleibenden Volumens der Kammer ausgebildet sein, um in diesem Fall ein Sensorsignal mit einem dritten Signalwert oder einer dritten Signalform auszugeben. Das Vorzeichen der Volumenänderung muss nicht aus einem einzelnen Signalwert des Sensorsignals ermittelbar sein. Beispielsweise kann das Sensorsignal eine Ermittlung des Vorzeichens der Volumenänderung auch anhand von zumindest zwei, zu verschiedenen Zeitpunkten erfassten Signalwerten des Sensorsignals ermöglichen.

Das oben genannte Sensorsignal kann grundsätzlich auch von einem Sensor bereitgestellt werden, der das absolute Volumen der Kammer ermitteln kann. D.h. solche Sensoren sind gegenständlich mit umfasst. Einerseits kann aus dem Absolutwert des Volumens durch wiederholte Messung eine Volumenänderung ermittelt und ein entsprechendes Sensorsignal bereitgestellt werden (selbst wenn die Ermittlung nicht tatsächlich durchgeführt wird, wäre die Volumenänderung doch ermittelbar); andererseits kann auch ein einzelner Absolutwert beispielsweise mit einem vordefinierten Referenzwert oder mit einem Schwellwert verglichen werden, um ein Signal bereitzustellen, aus dem eine Volumenänderung oder zumindest deren Vorzeichen ermittelbar ist (z.B. Wechsel über/unter Referenzwert oder über/unter Schwellwert).

Die Erfindung ist nicht auf Sensorsignale beschränkt, aus denen ausschließlich das Vorzeichen einer Volumenänderung ermittelbar ist. Ebenso ist die Erfindung nicht auf Sensorsignale beschränkt, die das Vorzeichen einer Volumenänderung umfassen. Vielmehr sind beispielsweise auch Sensorsignale umfasst, die auch (d.h. zusätzlich zum Vorzeichen) oder sogar ausschließlich einen Absolutwert einer Volumenänderung angeben oder umfassen, weil regelmäßig bereits aus dem Absolutwert ein korrespondierendes Vorzeichen ermittelbar ist. So kann etwa bei einer Änderungsrate oberhalb eines vordefinierten Schwellwerts davon ausgegangen werden, dass es sich um eine Verkleinerung des Volumens nach dem Ablösen der zuletzt hergestellten Schicht des Körpers vom Wannenboden handelt. Der vordefinierte Schwellwert kann dabei aus der Bewegungsgeschwindigkeit der Bauplattform und der Fläche der zuletzt hergestellten Schicht zumindest näherungsweise bestimmt werden, weil diese Parameter den Absolutwert der erwarteten maximalen Vergrößerungsrate des Volumens (d.h. der maximalen positiven Volumenänderung) festlegen.

Darüber hinaus ist die Erfindung nicht auf einen einzigen Sensor beschränkt. Es können beispielsweise mehrere gleichartige oder verschiedenartige Sensoren vorgesehen sein, die eingerichtet sind, eine Volumenänderung der Kammer zu detektieren und ein Sensorsignal bereitzustellen, aus dem ein Vorzeichen der Volumenänderung ermittelbar ist. Dabei ist es nicht notwendig, dass die Volumenänderung oder deren Vorzeichen auf Basis des Sensorsignals jedes einzelnen Sensors unabhängig von den anderen Sensoren und deren Sensorsignalen ermittelt wird. Es reicht vielmehr aus, wenn die Sensorsignale der einzelnen Sensoren bei der Ermittlung der Volumenänderung oder deren Vorzeichens neben anderen Parametern und Sensorsignalen berücksichtigt werden; d.h. eine Ermittelbarkeit im Sinne der vorliegenden Offenbarung liegt für die einzelnen Sensorsignale bereits dann vor, wenn die Volumenänderung oder auch nur deren Vorzeichen letztendlich aus mehreren Sensorsignalen ermittelt wird.

Indem der Sensor zur Erfassung einer Volumenänderung der Kammer und somit zur Erfassung der prozessbedingten Positionsänderung des Wannenbodens vorgesehen ist, kann mit der Vorrichtung eine Vielzahl von Prozessparametern, die mit der Positionsänderung des Wannenbodens verbunden sind, erfasst werden. Insbesondere können auch nur teilweise, d.h. lokale Positionsänderungen des Wannenbodens mit dem Sensor erfasst werden. Wenn demnach im Folgenden auf eine Position des Wannenbodens Bezug genommen wird, so ist hierunter nicht notwendigerweise eine gleichmäßige oder ebene Anordnung des Wannenbodens zu verstehen. Vielmehr ist die Position, die Lage oder die Auslenkung des Wannenbodens auch für einen gewölbten oder über seine Flächenerstreckung unterschiedlich ausgelenkten Wannenboden definiert.

Wenn in der Beschreibung auf die Begriffe Höhe, horizontal, vertikal, oben, unten, oberhalb oder unterhalb Bezug genommen wird, sind diese Begriffe oder sonstige Orts- bzw. Richtungsangaben in der Verwendungsstellung der Vorrichtung zu verstehen.

Gemäß einer bevorzugten Ausführungsform der Vorrichtung ist der Sensor eingerichtet, eine zum Volumen der Kammer oder zur Volumenänderung direkt oder indirekt proportionale Messgröße quantitativ zu erfassen und als Sensorsignal bereitzustellen. Somit wird das Volumen oder die Volumenänderung der Kammer durch Detektion der damit direkt oder indirekt proportionalen Messgröße erfasst. Der Sensor ist zur Erfassung dieser Messgröße und zur Ausgabe eines den Wert der Messgröße repräsentierenden Sensorsignals ausgebildet.

Besonders günstig ist es, wenn der Sensor ein zur Erfassung eines Drucks und/oder einer mit der Volumenänderung korrespondierenden Druckänderung eines in der Kammer aufgenommenen komprimierbaren Mediums eingerichteter Drucksensor und/oder ein zur Erfassung einer mit der Volumenänderung korrespondierenden Stoffmengenänderung der in der Kammer eingeschlossenen Stoffmenge eines in der Kammer aufgenommenen Fluids (d.h. eines Gases oder einer Flüssigkeit) eingerichteter und angeordneter Durchflusssensor ist, wobei der Sensor eingerichtet ist, einen erfassten Druck und/oder eine erfasste Druckänderung und/oder eine erfasste Stoffmengenänderung als Messgröße und Sensorsignal bereitzustellen. Der Druck, die Druckänderung und die Stoffmengenänderung in der Kammer sind zum Volumen der Kammer oder zur Volumenänderung direkt oder indirekt proportionale Messgrößen. Wenn der Sensor ein Drucksensor ist, kann damit ein Druck und/oder eine Druckänderung in der Kammer, insbesondere eines in der Kammer aufgenommenen komprimierbaren Mediums, erfasst werden. Als Drucksensor erfasst der Sensor somit eine Volumenänderung der Kammer über den Druck bzw. eine Druckänderung in der Kammer. Dabei sind der Druck, die Druckänderungen, das Volumen und die Volumenänderungen von der Position bzw. von der Auslenkung des Wannenbodens abhängig. Um eine zuverlässige Druckerfassung durch den Sensor zu gewährleisten, ist die Kammer in diesem Fall zumindest während der Auslenkung des Wannenbodens aus einer Ruhelage und Messung des Drucks oder der Druckänderung geschlossen und für das komprimierbare Medium im Wesentlichen dicht ausgebildet. Die geschlossene Kammer muss nicht vollständig dicht ausgebildet sein, d.h. sie kann geringfügige Undichtigkeiten aufweisen, solange die Funktion der Vorrichtung, insbesondere eine für den Herstellungsvorgang wenigstens eines zu produzierenden Körpers weitgehend korrekte Druckerfassung, gewahrt ist. D.h. die Druckkammer kann so ausgeführt sein, dass ein langsamer/träger Druckausgleich mit der Umgebung stattfinden kann, wenn prozessbedingte Druckgradienten dennoch detektiert werden können. Der Sensor kann auch ein Durchflusssensor sein, der eingerichtet und angeordnet ist, eine mit der Volumenänderung korrespondierende Stoffmengenänderung der in der Kammer eingeschlossenen Stoffmenge eines in der Kammer aufgenommenen Fluids zu erfassen. In diesem Fall erfasst der als Durchflusssensor ausgebildete Sensor eine Volumenänderung der Kammer über die Stoffmengenänderung des Fluids in der Kammer. Dabei sind die Stoffmengenänderung, das Volumen und die Volumenänderungen von der Position bzw. von der Auslenkung des Wannenbodens abhängig. Hierfür weist die Kammer zumindest eine als Einlass und/oder Auslass für das Fluid wirkende Öffnung auf, d.h. es kann ein Fluidaustausch zwischen dem Innenraum der Kammer und der Außenumgebung der Kammer oder einem dafür vorgesehenen Fluidreservoir stattfinden. Der Durchflusssensor ist in oder zumindest nahe der Öffnung angeordnet, um den Fluidstrom durch die Öffnung hindurch, in die Kammer oder aus der Kammer heraus, erfassen zu können. Bei mehreren Öffnungen können mehrere Durchflusssensoren vorgesehen sein, die jeweils einer Öffnung zugeordnet sind, sodass vorzugsweise jeder Öffnung ein Durchflusssensor zugeordnet ist. Eine Volumenänderung kann dann aus einer Bilanz aller ermittelten Stoffmengenänderungen ermittelt werden. An die Erfassung des Fluidstroms sind nicht notwendigerweise hohe Genauigkeitsanforderungen gestellt. Es kann ausreichend sein, die momentane Richtung des Fluidstroms zu erfassen, d.h. ob dieser im Falle einer Vergrößerung des Volumens in die Kammer oder im Falle einer Verkleinerung des Volumens aus der Kammer heraus gerichtet ist. Der Durchflusssensor kann jedoch auch für eine Ausgabe des erfassten Fluidstroms mit höherer Genauigkeit ausgebildet sein. Eine Erfassung von Volumenänderungen über Stoffmengenänderung des in der Kammer eingeschlossenen Fluids hat gegenüber einer Druckerfassung den Vorteil, dass wegen der Öffnung in der Kammer selbsttätig ein Druckausgleich zwischen dem Inneren und dem Äußeren der Kammer stattfinden kann und eine Deformation des Wannenbodens durch Änderung des äußeren Luftdrucks (Wetter, Aufstellort des Geräts) vermieden werden kann. Zudem sind die Anforderungen an die Dichtigkeit der Kammer geringer und damit die Fehleranfälligkeit der Wanne reduziert. Der Drucksensor ist eingerichtet, den erfassten Druck oder die erfasste Druckänderung oder zumindest das erfasste Vorzeichen der Druckänderung als Sensorsignal bzw. Ausgabesignal bereitzustellen. Dementsprechend ist der Durchflusssensor eingerichtet, die erfasste Stoffmengenänderung oder zumindest das erfasst Vorzeichen der Stoffmengenänderung als Sensorsignal bzw. Ausgabesignal bereitzustellen. Es können im Rahmen der vorliegenden Offenbarung auch mehrere unterschiedliche Sensoren parallel verwendet werden, um die Vorteile der verschiedenen Messmethoden zu kombinieren und eine höhere Flexibilität hinsichtlich der Verwendung der Kammer zu erzielen. Beispielsweise kann ein Drucksensor zusammen mit mehreren Durchflusssensoren verwendet werden.

Gemäß einer bevorzugten Ausführungsform der Vorrichtung kann der Sensor mit einer Verarbeitungseinheit verbunden sein, welche eingerichtet ist, das vom Sensor bereitgestellte Sensorsignal zu verarbeiten. Die Verarbeitungseinheit kann hierfür einen Mikroprozessor oder einen Mikrocontroller aufweisen. Zudem kann die Verarbeitungseinheit mit einem Datenspeicher verbunden sein, welcher Daten und/oder Programmbefehle für die Verarbeitung einer mit dem Sensor erfassten Volumenänderung oder einer hierzu proportionalen Messgröße enthält. Für die Bedienung der Verarbeitungseinheit durch eine Bedienperson, kann die Verarbeitungseinheit mit einer Ein-/Ausgabevorrichtung, beispielsweise einem Touchscreen, verbunden sein. Durch das Vorsehen der Verarbeitungseinheit können für die Herstellung des 3D-Körpers erforderliche Handlungen automatisch ausgeführt werden. Demgegenüber wären diese Handlungen ohne die Verarbeitungseinheit durch eine Bedienperson manuell vorzunehmen, wofür der Sensor zumindest mit einer Anzeigeeinheit zur Anzeige der erfassten Volumenänderung oder einer hierzu proportionalen Messgröße oder eines aus einer oder mehrere Messgrößen ermittelten Vorzeichens der Volumenänderung verbunden wäre.

Um die Vorrichtung zweckmäßig steuern zu können, ist es vorteilhaft, wenn der Sensor über die Verarbeitungseinheit mit einer Antriebseinheit für die höhenverstellbare Bauplattform und/oder mit einer Steuereinheit für eine Strahlungsquelle, welche für die Bestrahlung der durch Strahlung härtbaren Substanz vorgesehen ist, verbunden ist, und die Verarbeitungseinheit eingerichtet ist, die Antriebseinheit für die höhenverstellbare Bauplattform und/oder die Steuereinheit für die Strahlungsquelle in Abhängigkeit von dem vom Sensor bereitgestellten Sensorsignal zu steuern. Somit können vom Sensor erfasste Werte des Drucks, der Druckänderung oder der Stoffmengenänderung und/oder ein ermitteltes Vorzeichen einer Volumenänderung vom Sensor, vorzugsweise in Echtzeit, an die Verarbeitungseinheit übermittelt und in dieser verarbeitet werden. Wenn die Verarbeitungseinheit mit der Antriebseinheit für die höhenverstellbare Bauplattform verbunden und zur Steuerung der Antriebseinheit ausgebildet ist, kann die Höhenverstellung der Bauplattform durch die Verarbeitungseinheit abhängig vom erfassten Druck, der Druckänderung oder der Stoffmengenänderung oder einem ermittelten Vorzeichen einer Volumenänderung in der Kammer erfolgen. Die Antriebseinheit ermöglicht, die Bauplattform und somit den herzustellenden Körper zumindest zum Wannenboden und davon weg zu bewegen. Bevorzugt ist die Antriebseinheit ausgebildet, die Bauplattform oder die unterste, d.h. zuletzt hergestellte Schicht des Körpers bis an den Wannenboden heranzuführen. Die Antriebseinheit kann einen Elektromotor, beispielsweise einen Schrittmotor aufweisen, welcher mit der Bauplattform verbunden ist. Insbesondere kann der Elektromotor mit einer höhenverstellbaren Stange in Eingriff stehen wobei die Stange mit der Bauplattform verbunden ist. Wenn die Verarbeitungseinheit mit der Steuereinheit für eine Strahlungsquelle verbunden und zur Steuerung der Steuereinheit ausgebildet ist, kann die Bestrahlung der durch Strahlung härtbaren Substanz durch die Verarbeitungseinheit abhängig vom erfassten Druck, der Druckänderung oder der Stoffmengenänderung oder einem ermittelten Vorzeichen einer Volumenänderung in der Kammer erfolgen. Vorzugsweise ist die Steuereinheit für die Strahlungsquelle und somit auch die Verarbeitungseinheit zur Steuerung der Strahlungsintensität und/oder der Bestrahlungsdauer ausgebildet. Die Strahlungsquelle kann eine Lichtquelle, insbesondere eine Quelle für sichtbares Licht oder UV-Licht, sein. Die Strahlungsintensität und/oder die Bestrahlungsdauer haben im allgemeinen Einfluss auf die Haftkraft der mit dieser Strahlungsintensität und/oder Bestrahlungsdauer hergestellten ausgehärteten Schicht an der zuvor ausgehärteten Schicht bzw. an der Bauplattform.

Weiters ist es günstig, wenn die Kammer mit zumindest einer einstellbaren Druckquelle zur Einstellung eines Ruhedrucks in der Kammer und/oder einer einstellbaren Heizvorrichtung zur Einstellung einer Temperatur in der Kammer und/oder einer einstellbaren Prozessstoffquelle zur einstellbaren Zufuhr eines Prozessmediums zur mindestens lokalen Manipulation des Verfestigungsvorgangs der durch Strahlung härtbaren Substanz in die Kammer und/oder einer Luftstromquelle zur Erzeugung eines Luftstroms in der Kammer verbunden ist. Durch die Einstellung des Ruhedrucks in der Kammer kann die Ruhelage des Wannenbodens eingestellt werden. Der Ruhedruck kann jedoch auch während des Herstellungsvorgangs des Körpers geändert werden, beispielsweise um ein Ablösen der zuletzt hergestellten Schicht des Körpers vom Wannenboden durch Aufbringen eines Unterdrucks oder Überdrucks in der Kammer zu begünstigen. Ein Überdruck in der Kammer würde beispielsweise das Ablösen begünstigen, wenn der Überdruck stoßweise mit oder ohne Kombination mit einer Z-Bewegung (d.h. Anheben oder Absenken des Trägers) erfolgt. Auch würde ein Überdruck bei einer freitragenden, gespannten Folie die Spannung der Folie erhöhen und somit den durch die Folie gebildeten Wannenboden zusätzlich spannen und somit versteifen. Beim Einsatz einer semipermeablen Folie kann der Überdruck besonders vorteilhaft genutzt werden, da er bei Einsatz eines Inhibitors wie zum Beispiel Sauerstoff ein Anhaften verhindert bzw. die Ausbildung einer inerten Zwischenschicht für den nächsten Schicht-Zyklus ermöglicht oder zumindest beeinflusst. Der Überdruck begünstigt dabei die Diffusion des Inhibitors durch die semipermeable Folie. Eine Einstellung der Temperatur in der Kammer kann die Viskosität oder andere prozessrelevante Eigenschaften der in der Wanne aufgenommenen härtbaren Substanz verändern. Eine einstellbare Zufuhr eines Prozessmediums in die Kammer kann den Verfestigungsvorgang der durch Strahlung härtbaren Substanz zumindest lokal beeinflussen. Das Prozessmedium kann ein Inhibitormedium sein, um damit den Verfestigungsvorgang der durch Strahlung härtbaren Substanz insbesondere am Wannenboden zu beeinflussen, insbesondere zu verlangsamen, und die Haftkraft der zuletzt ausgehärteten Schicht am Wannenboden zu verändern. Unter einem Inhibitormedium wird ein Fluid, d.h. ein Gas oder eine Flüssigkeit, bspw. Sauerstoff, verstanden, welches die Aushärtung der härtbaren Substanz in einer Grenzschicht (z.B. 10-100 pm) oberhalb des Wannenbodens reduziert oder verhindert. Somit reduziert (im Idealfall verhindert) das Inhibitormedium ein Anhaften der zuletzt ausgehärteten Schicht am Wannenboden. Durch eine Erzeugung eines Luftstroms in der Kammer können die Eigenschaften des in der Kammer aufgenommenen Mediums, wie z.B. des Inhibitormediums, oder Gemisches von Medien in der Kammer homogenisiert werden. Insbesondere können die Temperatur des Mediums in der Kammer und die Konzentration des Inhibitormediums in der Kammer homogenisiert werden. Des Weiteren kann die Diffusionsgeschwindigkeit des Inhibitormediums, sowie die Temperatur beeinflusst werden. Die Luftstromquelle kann ein Ventilator oder ein Verdichter zur Einstellung eines Volumenstroms sein. Der Volumenstrom kann in der Kammer in einem geschlossenen Kreislauf oder im Austausch mit Umgebungsluft erzeugt werden.

Um die Vorrichtung zweckmäßig steuern zu können, ist es weiters vorteilhaft, wenn der Sensor über die Verarbeitungseinheit mit der einstellbaren Druckquelle und/oder der einstellbaren Heizvorrichtung und/oder der einstellbaren Prozessstoffquelle und/oder der Luftstromquelle verbunden ist, und die Verarbeitungseinheit eingerichtet ist, die Druckquelle und/oder die Heizvorrichtung und/oder die Prozessstoffquelle und/oder die Luftstromquelle in Abhängigkeit von dem vom Sensor bereitgestellten Sensorsignal zu steuern. Dabei erfasst der Sensor die aktuelle Position oder Bewegung des Wannenbodens, zumindest in Form einer aktuellen Bewegungsrichtung des Wannenbodens (entsprechend dem Vorzeichen einer Volumenänderung). Wenn der Sensor über die Verarbeitungseinheit mit der einstellbaren Druckquelle verbunden ist, kann die Druckquelle von der Verarbeitungseinheit angesteuert werden, abhängig von der aktuellen Position oder Bewegung des Wannenbodens die Position des Wannenbodens durch Druckerhöhung oder Druckverminderung zu ändern. Wenn der Sensor über die Verarbeitungseinheit mit der einstellbaren Heizvorrichtung verbunden ist, kann die Heizvorrichtung von der Verarbeitungseinheit angesteuert werden, abhängig von der aktuellen Position oder Bewegung des Wannenbodens die Temperatur des Mediums in der Kammer zu verändern. Wenn der Sensor über die Verarbeitungseinheit mit der einstellbaren Prozessstoffquelle verbunden ist, kann die Prozessstoffquelle von der Verarbeitungseinheit angesteuert werden, abhängig von der aktuellen Position oder Bewegung des Wannenbodens die in die Kammer einzubringende Menge des Prozessmediums zu verändern, bspw. auch kein Prozessmedium in die Kammer einzuleiten. Wenn der Sensor über die Verarbeitungseinheit mit der Luftstromquelle verbunden ist, kann die Luftstromquelle von der Verarbeitungseinheit angesteuert werden, abhängig von der aktuellen Position oder Bewegung des Wannenbodens das Medium in der Kammer mittels eines durch die Luftstromquelle erzeugten Luftstroms zu durchmischen.

Für eine kostengünstige Herstellung des Wannenbodens und um Auslenkungen des Wannenbodens zuverlässig und möglichst präzise mit dem Sensor erfassen zu können, ist es günstig, wenn der Wannenboden zumindest teilweise strahlungsdurchlässig ist und vorzugsweise eine flexible, gespannte Folie aufweist. Dadurch kann die Strahlung für die Aushärtung der in der Wanne aufgenommenen härtbaren Substanz durch den zumindest teilweise strahlungsdurchlässigen Wannenboden zur härtbaren Substanz durchdringen. Wenn die Strahlungsquelle unterhalb der Kammer angeordnet ist, ist zweckmäßiger Weise auch die Kammer, insbesondere der Kammerboden, zumindest teilweise strahlungsdurchlässig ausgebildet. Wenn der Wannenboden eine flexible, gespannte Folie aufweist, ist die Folie hinreichend dicht ausgebildet, um ein unerwünschtes Durchdringen der härtbaren Substanz durch den Wannenboden zu verhindern. Die Folie ist vorzugsweise ausgebildet, um hinreichend stark gespannt zu werden, um ein nennenswertes Durchhängen der Folie, welche durch die härtbare Substanz belastet ist, zu vermeiden, d.h., um im Wesentlichen ebene Schichten des Körpers ausbilden zu können. Die Folie ist zudem vorzugsweise ausgebildet, um im gespannten Zustand hinreichend elastisch zu sein, um Auslenkungen in Richtung zum Kammerboden oder weg vom Kammerboden, d.h. nach unten oder nach oben, zuzulassen. Der Wannenboden kann beispielsweise Silikon-Schichten, PTFE- oder Teflon-Folien sowie Kombinationen aufweisen. Das elastische Verhalten des Wannenbodens dient zur Minimierung der beim Trennvorgang der zuletzt hergestellten Schicht vom Wannenboden entstehenden Abzugskräfte, welche andernfalls zur Beschädigung des zu generierenden Körpers führen können, oder diesen von der Bauplattform trennen können.

Wenn der Wannenboden semipermeabel, für ein Prozessmedium durchlässig, ausgebildet ist, kann ein in der Kammer aufgenommenes Prozessmedium durch den Wannenboden hindurch dringen und bspw. als Inhibitormedium ein Anhaften der zuletzt hergestellten, d.h. ausgehärteten Schicht am Wannenboden reduzieren oder im Idealfall verhindern. Auf diese Weise kann der Ablösevorgang der zuletzt hergestellten Schicht vom Wannenboden beschleunigt werden oder zur Gänze entfallen. Beispielsweise kann der Wannenboden für Sauerstoff als Inhibitormedium durchlässig sein. Dabei ist der Wannenboden für die durch Strahlung härtbare Substanz undurchlässig. Als weiteres Prozessmedium kann beispielsweise destilliertes Wasser eingesetzt werden. Dabei kann das Wasser auf eine bestimmte Temperatur gebracht werden zum Beispiel 5°C. Dabei wird die auszuhärtende Substanz an der Grenzfläche zum Wannenboden durch das Wasser gekühlt und somit die Reaktivität in einem gewissen Bereich verringert. Dies kann zu der Ausbildung einer ebenfalls unreaktiven Grenzschicht und damit zur Verringerung der Anhaftung führen. Durch Einsatz eines hoch viskosen Fluids als Prozessmedium, wie beispielsweise Silikonöl oder speziellen Fluor-Ölen, kann die Folie durch das Fluid im Belichtungsbereich unterstützt werden und gleichzeitig der Druckunterschied durch das Fluid z.B. an einen Drucksensor weitergegeben werden.

Um den Wannenboden zu entlasten, kann vorgesehen sein, dass zumindest ein Teil des Wannenbodens auf einer zumindest teilweise strahlungsdurchlässigen, insbesondere transparenten Trägerplatte aufliegt. Durch die zumindest teilweise Auflage des Wannenbodens auf der Trägerplatte kann ein insbesondere alterungsbedingt zunehmendes Durchhängen des durch die härtbare Substanz belasteten Wannenbodens verhindert werden. Die Trägerplatte dient somit als Stütze für den Wannenboden. Um die härtbare Substanz durch eine unterhalb der Trägerplatte angeordnete Strahlungsquelle aushärten zu können, ist zweckmäßiger Weise die Trägerplatte zumindest teilweise strahlungsdurchlässig, insbesondere transparent ausgebildet. Beispielsweise kann die Trägerplatte zumindest teilweise aus Glas gebildet sein.

Um bei vorhandener Trägerplatte die Reaktivität der härtbaren Substanz senken oder in sonstiger Weise verändern zu können, kann weiters vorgesehen sein, dass die Trägerplatte für ein Prozessmedium durchlässig ausgebildet ist oder am Wannenboden anliegende Erhöhungen für den Durchtritt eines Prozessmediums zwischen den Erhöhungen aufweist. Das Prozessmedium kann insbesondere ein Inhibitormedium sein, um ein Anhaften der zuletzt hergestellten, d.h. ausgehärteten Schicht am Wannenboden zu reduzieren oder zu verhindern. Somit kann, wenn die Trägerplatte für das Prozessmedium / Inhibitormedium durchlässig ist, das Prozessmedium / Inhibitormedium aus der Kammer durch die Trägerplatte hindurch und zweckmäßiger Weise durch den Wannenboden hindurch zur härtbaren Substanz dringen. Beispielsweise kann die Trägerplatte nanoporöses Glas oder Aerogel aufweisen. Allgemein kann die Trägerplatte an der dem Wannenboden zugewandten Seite zusätzlich oder anstelle der Erhöhungen Strukturierungen aufweisen, welche somit im Verwendungszustand der Vorrichtung am Wannenboden anliegen und welche beispielsweise auch durch eine hinreichend raue oder wellige Oberfläche der Trägerplatte realisiert sein können. Die Erhöhungen und/oder Strukturierungen sind dazu vorgesehen, dass zwischen der Trägerplatte und dem Wannenboden das Prozessmedium / Inhibitormedium strömen kann.

Wenn eine in der Wanne am Wannenboden bewegbare Rakel vorgesehen ist, kann die Rakel in der härtbaren Substanz über den Wannenboden geführt werden. Dabei kann die Rakel teilausgehärtete Partikel der härtbaren Substanz entfernen und für eine Durchmengung der härtbaren Substanz sorgen. Im Fall von härtbaren Substanzen, welche auf Grund darin enthaltener Partikel eine hohe Viskosität aufweisen, kann die Rakel zum Glattstreichen der auszuhärtenden Schicht dienen.

Weiters ist es günstig, wenn der Sensor über die Verarbeitungseinheit mit einer Antriebseinheit der Rakel verbunden ist, und die Verarbeitungseinheit eingerichtet ist, abhängig von dem vom Sensor bereitgestellten Sensorsignal die Antriebseinheit der Rakel zu steuern. Optional kann der für die Funktion der Rakel wesentliche Anpressdruck der Rakel auf den Wannenboden über die Volumenänderung in der Kammer mit dem Sensor erfasst werden. Bei zu hohem oder zu geringem Anpressdruck der Rakel auf den Wannenboden kann der Anpressdruck durch die Verarbeitungseinheit gesteuert, über die Antriebseinheit der Rakel geändert werden.

Gemäß einer weiteren Ausführungsform der Vorrichtung kann vorgesehen sein, dass der Wannenboden ein öffenbarer, insbesondere abnehmbarer Deckel eines Kammergehäuses der Kammer ist. Durch die Ausbildung des Wannenbodens als Deckel kann ein öffenbarer Zugang in die Kammer geschaffen werden. Wenn der Wannenboden als Deckel des Kammergehäuses abnehmbar ausgebildet ist, kann die Kammer durch Aufsetzen der Wanne auf den Rest des Kammergehäuses geschlossen werden. Dabei kann der Wannenboden als Deckel des Kammergehäuses auch zumindest einen Teil der Seitenwände des Kammergehäuses aufweisen. Alternativ können der Wannenboden und die Kammer einstückig ausgebildet sein.

Hinsichtlich des Verfahrens ist gemäß der Erfindung zudem vorgesehen, dass der Sensor eine Volumenänderung einer Kammer detektiert und ein Sensorsignal bereitstellt, aus dem ein Vorzeichen der Volumenänderung ermittelbar ist, wobei die Kammer von einer Unterseite des Wannenbodens begrenzt ist, wobei das Volumen der Kammer durch verfahrensbedingte Auslenkungen des Wannenbodens aus der Ruhelage veränderbar ist. Die Kammer kann zumindest teilweise geschlossen sein. Bei einigen Ausführungsbeispielen ist die Kammer im Wesentlichen dicht geschlossen.

Um Wiederholungen aus dem Beschreibungsteil betreffend die Vorrichtung zu vermeiden, wird hinsichtlich der Beschreibung des Verfahrens auch auf die vorangegangene Beschreibung der Vorrichtung, soweit diese auf das Verfahren anwendbar ist, verwiesen.

Das Verfahren dient einem schichtweisen Aufbau eines Körpers aus einer durch Strahlung härtbaren Substanz, beispielsweise aus durch Licht aushärtendem Harz, die in einer Wanne aufgenommen wird. Die Wanne ist für die härtbare Substanz undurchlässig und weist einen Wannenboden auf. Für jede zu bildende, d.h. auszuhärtende Schicht des Körpers wird eine höhenverstellbare Bauplattform in Bezug auf den Wannenboden in eine Höhe über dem Wannenboden verfahren, welche Höhe einen Abstand zwischen der Bauplattform oder der zuletzt gebildeten Schicht des Körpers zum Wannenboden im Ausmaß mindestens der Dicke der zu bildenden Schicht des Körpers definiert. Die zuletzt gebildete Schicht des Körpers, sofern eine solche bereits gebildet wurde, haftet dabei mit den zuvor gebildeten Schichten des Körpers an der Bauplattform an. Die durch Strahlung härtbare Substanz zwischen der Bauplattform oder der zuletzt gebildeten Schicht des Körpers und dem Wannenboden wird zur Bildung der nächsten Schicht des Körpers selektiv mittels einer Strahlungsquelle durch Bestrahlung ausgehärtet. Die Strahlungsquelle kann eine Lichtquelle sein. Daraufhin wird die höhenverstellbare Bauplattform mit der daran anhaftenden, zuletzt gebildeten bzw. ausgehärteten Schicht des Körpers von einer Ruhelage des Wannenbodens weg bewegt, um Raum für die Ausbildung einer nächsten Schicht zwischen der zuletzt ausgehärteten Schicht des Körpers und dem Wannenboden zu schaffen. Als Wannenboden wird ein zumindest teilweise flexibler Wannenboden vorgesehen und zumindest ein Verfahrensparameter wird von einem mit dem Wannenboden zusammenwirkenden Sensor erfasst. Der Sensor detektiert eine Volumenänderung einer zumindest teilweise geschlossenen Kammer und stellt ein Sensorsignal bereit, aus dem ein Vorzeichen der Volumenänderung ermittelbar ist bzw. ermittelt wird. Auf diese Weise kann festgestellt werden, ob und wann sich das Volumen der Kammer während des Herstellungsvorgangs des aufzubauenden Körpers vergrößert oder verkleinert. Hierfür ist die Kammer von einer Unterseite des Wannenbodens begrenzt. Durch verfahrensbedingte Auslenkungen des Wannenbodens aus der Ruhelage ist/wird das Volumen der Kammer veränderbar/verändert. Das Volumen der Kammer ändert sich somit, wenn der flexible Wannenboden im Zuge des Verfahrens aus seiner Ruhelage ausgelenkt wird. Die Definition der Ruhelage hängt von der Implementierung des Verfahrens ab. Die Ruhelage kann als jene Position des Wannenbodens definiert sein, in welcher die härtbare Substanz in der Wanne aufgenommen ist und den Wannenboden belastet. Die Ruhelage kann aber auch als jene Position des Wannenbodens definiert sein, in welcher keine härtbare Substanz in der Wanne aufgenommen ist.

Gemäß einer bevorzugten Ausführungsform des Verfahrens kann vorgesehen sein, dass der Sensor eine zum Volumen der Kammer oder zur Volumenänderung direkt oder indirekt proportionale Messgröße quantitativ erfasst und als Sensorsignal bereitstellt. Somit wird das Volumen oder die Volumenänderung der Kammer durch Detektion der damit direkt oder indirekt proportionalen Messgröße erfasst. Der Sensor ist zur Erfassung dieser Messgröße und zur Ausgabe eines den Wert der Messgröße repräsentierenden Sensorsignals ausgebildet.

Besonders günstig ist es, wenn der Sensor ein Drucksensor oder Durchflusssensor ist, wobei mit dem Drucksensor eine mit der Volumenänderung korrespondierende Änderung des Druckes eines komprimierbaren Mediums in der Kammer als Messgröße erfasst wird oder mit dem Durchflusssensor eine mit der Volumenänderung korrespondierende Stoffmengenänderung der in der Kammer eingeschlossenen Stoffmenge eines Fluids als Messgröße erfasst wird. Damit können der Druck, die Druckänderung oder die Stoffmengenänderung in der Kammer als eine zum Volumen der Kammer oder zur Volumenänderung der Kammer direkt oder indirekt proportionale Messgröße verstanden werden. Insbesondere sind das Volumen und die Volumenänderungen der Kammer sowie im Fall des Drucksensors der Druck und die Druckänderungen in der Kammer und im Fall des Durchflusssensors die Stoffmengenänderungen in der Kammer, von der Position bzw. von der Auslenkung des Wannenbodens abhängig. Wenn der Sensor ein Drucksensor ist, kann damit ein Druck oder eine Druckänderung in der Kammer, insbesondere eines in der Kammer aufgenommenen komprimierbaren Mediums, erfasst werden, um das Volumen bzw. eine Volumenänderung der Kammer zu bestimmen. Hierfür ist die Kammer geschlossen und für das komprimierbare Medium im Wesentlichen dicht ausgebildet. Hinsichtlich der Dichtheit der Kammer wird auf die vorangegangene Beschreibung der Vorrichtung verwiesen. Der Drucksensor stellt den erfassten Druck oder die erfasste Druckänderung als Sensorsignal bzw. Ausgabesignal bereit. Der Drucksensor kann vorzugsweise einen Referenzwert für den Druck in der Kammer erfassen, welcher Referenzwert einer Ruhelage des Wannenbodens zugeordnet wird. Der Referenzwert liegt z.B. vor, solange der Ablösevorgang einer ausgehärteten Schicht vom Wannenboden noch nicht begonnen wurde. Der Drucksensor kann vorzugsweise Abweichungen vom Referenzwert erfassen, welche Abweichungen den Auslenkungen aus der Ruhelage des Wannenbodens zugeordnet werden. Wenn der Sensor ein Durchflusssensor ist, kann damit eine Stoffmengenänderung in der Kammer, insbesondere einer in der Kammer eingeschlossenen Stoffmenge eines in der Kammer aufgenommenen Fluids erfasst werden, um das eine Volumenänderung der Kammer zu bestimmen. Hinsichtlich der Ausbildung der Kammer mit zumindest einer als Einlass und/oder Auslass für das Fluid wirkenden Öffnung und der Anordnung des Durchflusssensors in/an der Kammer wird ebenfalls auf die vorangegangene Beschreibung der Vorrichtung verwiesen. Mit dem Durchflusssensor kann die Richtung des Fluidstroms und/oder können Messwerte des Fluidstroms erfasst und als Sensorsignal bzw. Ausgabesignal bereitgestellt werden.

Um die für die Herstellung des 3D-Körpers erforderlichen Handlungen für eine Bedienperson vereinfachen zu können, kann vorgesehen sein, dass das vom Sensor bereitgestellte Sensorsignal in einer mit dem Sensor verbundenen Verarbeitungseinheit verarbeitet und zumindest ein Verfahrensparameter abhängig von dem vom Sensor bereitgestellten Sensorsignal eingestellt wird. Dabei kann in der Verarbeitungseinheit aus dem vom Sensor bereitgestellten Sensorsignal der zumindest eine einzustellende Verfahrensparameter ermittelt werden, bspw. durch einen Vergleich mit vordefinierten Werten oder durch Berechnung. Die Verarbeitungseinheit kann hierfür einen Mikroprozessor oder einen Mikrocontroller aufweisen und mit einem Datenspeicher verbunden sein. Der Datenspeicher kann Daten und/oder Programmbefehle für die Verarbeitung des vom Sensor bereitgestellten Sensorsignals enthalten.

Besonders zweckmäßig kann vorgesehen sein, dass die Verarbeitungseinheit die erfasste und als Sensorsignal bereitgestellte Messgröße mit einem Erwartungswert vergleicht und/oder einen Verlauf erfasster Messgrößen (oder allgemein mehrere zu mehreren Zeitpunkten erfasste Messgrößen) mit einem Verlauf von Erwartungswerten (oder allgemein mehreren Erwartungswerten) vergleicht und den zumindest einen Verfahrensparameter abhängig von der Differenz zwischen der Messgröße und dem Erwartungswert und/oder zwischen dem Verlauf der Messgrößen (den mehreren Messgrößen) und dem Verlauf der Erwartungswerte (den mehreren Erwartungswerten) einstellt. Weiters kann vorgesehen sein, dass die Verarbeitungseinheit eine Änderung zwischen mehreren zu verschiedenen Zeitpunkten erfassten Messgrößen mit einem Erwartungswert der Änderung vergleicht und den zumindest einen Verfahrensparameter abhängig von der Differenz zwischen der Änderung und dem Erwartungswert der Änderung einstellt. Ebenso kann die Messgröße auch einer Änderungsrate (d.h. Änderung pro Zeiteinheit) entsprechen und mit einem Erwartungswert für die Änderungsrate verglichen werden. Der Erwartungswert bzw. die Erwartungswerte ist/sind in der Verarbeitungseinheit abgelegt. Insbesondere kann die Verarbeitungseinheit einen Verlauf mehrerer zu mehreren Zeitpunkten erfasster und als Sensorsignal bereitgestellter Messgrößen bzw. Messwerte mit einem Verlauf von Erwartungswerten vergleichen und den zumindest einen Verfahrensparameter abhängig von der Differenz zwischen dem Verlauf der Messgrößen bzw. Messwerte und dem Verlauf an Erwartungswerten einstellen. Wenn eine Messgröße bzw. Messwert mit einem Erwartungswert verglichen wird, kann die Einstellung des zumindest einen Verfahrensparameters abhängig davon erfolgen, ob die Messgröße den Erwartungswert überschreitet oder unterschreitet. Die Einstellung des zumindest einen Verfahrensparameters kann auch abhängig vom Maß der Überschreitung oder Unterschreitung des Erwartungswerts erfolgen. Wenn mehrere Messgrößen mit mehreren Erwartungswerten verglichen werden, kann die Einstellung des zumindest einen Verfahrensparameters abhängig von einer relativen Änderung der Messgrößen im Vergleich zur relativen Änderung der Erwartungswerte, d.h. unabhängig von absoluten Messwerten erfolgen.

Es kann auch vorgesehen sein, dass Änderungen der mit dem Sensor erfassten und als Sensorsignal bereitgestellten Messgröße in einer mit dem Sensor verbundenen Verarbeitungseinheit in einem Simulationsmodell der Erwartungswerte des Aufbauvorgangs verarbeitet werden und zumindest ein Verfahrensparameter abhängig von mindestens einem erfassten Messwert der Messgröße und/oder der Änderung von erfassten Messwerten nach Vorgabe des Simulationsmodells eingestellt wird. In diesem Fall weist die Verarbeitungseinheit ein Simulationsmodell der Erwartungswerte des Aufbauvorgangs auf. Das Simulationsmodell berechnet zumindest einen Wert zumindest eines Verfahrensparameters abhängig vom aktuellen Zustand in der Simulation und abhängig von Eingangsparametern, wie zumindest einem Wert der mit dem Sensor erfassten und als Sensorsignal bereitgestellten Messgröße. Abhängig vom Simulationsergebnis kann auf den Aufbauvorgang durch Einstellung zumindest eines Verfahrensparameters Einfluss genommen werden.

Um den Aufbauvorgang noch weiter verbessern zu können, ist es günstig, wenn der Erwartungswert und/oder die mehreren Erwartungswerte abhängig von zumindest einem Verfahrensparameter von der Verarbeitungseinheit berechnet wird bzw. werden. Auf diese Weise werden die Erwartungswerte an die aktuelle Situation des Aufbauvorgangs angepasst und die Steuerung des Verfahrens kann besonders präzise ausgeführt werden. Der zumindest eine Verfahrensparameter ist günstiger Weise die mit dem Sensor erfasste und als Sensorsignal bereitgestellte Messgröße.

Wenn die Verarbeitungseinheit ein Simulationsmodell aufweist ist es günstig, wenn das Simulationsmodell zumindest einen eingestellten Verfahrensparameter als Eingangswert berücksichtigt. Auf diese Weise liefert das Simulationsmodell besonders präzise Ergebnisse, da zuvor eingestellte Verfahrensparameter bzw. deren Werte als Eingangswert in der Simulation mitberücksichtigt werden.

Der Eingangswert kann vom Benutzer angegeben werden; so kann dies beispielsweise die Schichtdicke, die Druckgeschwindigkeit, das eingesetzte Material (mechanische Eigenschaften) usw. sein sowie Kombinationen von Eingangswerten sein. Die betreffenden Werte kann der Benutzer beispielsweise mithilfe einer CAM-Software (Computer-Aided Manufacturing, dt. rechnerunterstützte Fertigung) ermitteln, welche Sollgrößen für die Verfahrensparameter vorgibt (Ablaufsteuerung). Das Simulationsmodell kann die Eingangswerte anpassen, sofern das Signal vom Sensor dies injiziert.

Weiters kann vorgesehen sein, dass auf Basis des vom Sensor bereitgestellten Sensorsignals die Höhe der Bauplattform und/oder der zuletzt ausgehärteten Schicht des Körpers in Bezug auf die Ruhelage des Wannenbodens und/oder eine Bewegungsgeschwindigkeit der Bauplattform und/oder die Größe einer Fläche der zuletzt ausgehärteten Schicht des Körpers als Verfahrensparameter in der Verarbeitungseinheit bestimmt wird, wenn der Wannenboden durch Bewegungen der Bauplattform aus der Ruhelage ausgelenkt wird. Das Simulationsmodell kann den Flächeninhalt der zuletzt ausgehärteten Schicht aus den den Körper definierenden Modelldaten und dem Fortschritt des Aufbauvorgangs als Verfahrensparameter ermitteln. Somit kann durch einen Vergleich des Erwartungswerts oder des Simulationsergebnisses mit der durch den Sensor erfassten Messgröße auf die genannte Höhe der Bauplattform oder der zuletzt ausgehärteten Schicht des Körpers, die Bewegungsgeschwindigkeit der Bauplattform und/oder die Größe einer Fläche der zuletzt ausgehärteten Schicht des Körpers geschlossen werden. Beispielsweise nimmt mit zunehmender Höhe der Bauplattform das Volumen der Kammer zu, wenn die bisher gebildeten Schichten des Körpers an der Bauplattform und am Wannenboden anhaften. Zudem ändert sich in diesem Fall das Volumen der Kammer mit zunehmender Geschwindigkeit der Bauplattform rascher. Eine größere am Wannenboden anhaftende Fläche der zuletzt ausgehärteten Schicht des Körpers wird beim Heben der Bauplattform das Volumen der Kammer rascher ändern als eine kleinere am Wannenboden anhaftende Fläche der zuletzt ausgehärteten Schicht des Körpers.

Weiters kann vorgesehen sein, dass in Abhängigkeit von dem vom Sensor bereitgestellten Sensorsignal eine Höhenverstellung der Bauplattform mittels einer damit und mit der Verarbeitungseinheit verbundenen Antriebseinheit für die Bauplattform und/oder eine Bestrahlung der durch Strahlung härtbaren Substanz mittels einer mit der Verarbeitungseinheit und der Strahlungsquelle verbundenen Steuereinheit für die Strahlungsquelle als Verfahrensparameter durch die Verarbeitungseinheit gesteuert wird. Somit kann durch einen Vergleich zumindest eines Erwartungswerts oder simulierten Werts der Messgröße mit zumindest einem durch den Sensor erfassten Wert der Messgröße die Höhenverstellung der Bauplattform und/oder die Bestrahlung der durch Strahlung härtbaren Substanz als Verfahrensparameter gesteuert werden. Alternativ zu bestimmten erfassten Werten der Messgröße kann auch eine relative oder absolute Änderung der Messgröße im Laufe zumindest eines Teilabschnitts des Aufbauprozesses von der Verarbeitungseinheit zur Steuerung der zuvor genannten Verfahrensparameter herangezogen werden.

Gemäß einer weiteren Ausführungsform des Verfahrens kann vorgesehen sein, dass in Abhängigkeit von dem vom Sensor bereitgestellten Sensorsignal ein Ruhedruck in der Kammer mittels mindestens einer mit der Kammer und der Verarbeitungseinheit verbundenen einstellbaren Druckquelle und/oder eine Temperatur in der Kammer mittels mindestens einer mit der Kammer und der Verarbeitungseinheit verbundenen einstellbaren Heizvorrichtung und/oder eine Zufuhr eines Prozessmediums in die Kammer mittels mindestens einer mit der Kammer und der Verarbeitungseinheit verbundenen einstellbaren Prozessstoffquelle und/oder ein Luftstrom in der Kammer mittels mindestens einer mit der Kammer und der Verarbeitungseinheit verbundenen Luftstromquelle als Verfahrensparameter durch die Verarbeitungseinheit eingestellt wird. Somit kann durch einen Vergleich zumindest eines Erwartungswerts oder simulierten Werts der Messgröße mit zumindest einem durch den Sensor erfassten Wert der Messgröße der Ruhedruck in der Kammer, eine Temperatur in der Kammer, eine Zufuhr eines Prozessmediums, bspw. Inhibitormediums, in die Kammer und/oder ein Luftstrom in der Kammer als Verfahrensparameter eingestellt oder gesteuert werden.

Bevorzugt kann vorgesehen sein, dass aus dem vom Sensor bereitgestellten Sensorsignal ein Ablösen einer zuletzt ausgehärteten und am Wannenboden anhaftenden Schicht des Körpers vom Wannenboden und/oder eine Ablösehöhe und/oder eine Ablösegeschwindigkeit einer zuletzt ausgehärteten und am Wannenboden anhaftenden Schicht des Körpers vom Wannenboden und/oder ein Antasten des Wannenbodens und/oder ein Anpressdruck einer in der Wanne beweglichen Rakel auf den Wannenboden und/oder ein fehlerhaft von der Bauplattform abgelöster Körper und/oder eine Wannenalterung und/oder ein unerwartetes Anhaften des Körpers am Wannenboden bei Zufuhr eines Inhibitormediums in die Kammer und an die durch Strahlung härtbare Substanz und/oder ein Füllstand der durch Strahlung härtbaren Substanz in der Wanne und/oder eine Bereitstellung der Wanne und/oder ein Riss oder Loch im Wannenboden oder in der Kammer, als Verfahrensparameter in der Verarbeitungseinheit ermittelt wird. Beim Ablösen einer zuletzt ausgehärteten und am Wannenboden anhaftenden Schicht des Körpers vom Wannenboden kann die rasche Volumenreduktion der Kammer infolge der eigenständigen Rückkehr des flexiblen Wannenbodens in die Ruhelage erfasst werden. Zudem kann die gemessene Volumenänderung in der Kammer ein Maß für die Ablösehöhe oder die Ablösegeschwindigkeit einer zuletzt ausgehärteten und am Wannenboden anhaftenden Schicht des Körpers vom Wannenboden sein, wenn die Bauplattform gehoben wird. Beim Antasten des Wannenbodens, d.h. wenn die Bauplattform gegen den Wannenboden nach unten gesenkt wird und mit diesem in Kontakt gerät, verringert sich das Volumen der Kammer, sobald die Bauplattform den Wannenboden im Vergleich zur Ruhelage nach unten bewegt. Weiters nimmt mit zunehmendem Anpressdruck einer in der Wanne beweglichen Rakel auf den Wannenboden das Volumen der Kammer ab. Ein fehlerhaft von der Bauplattform abgelöster Körper, welcher beispielsweise nur mehr an einer Körperkante mit der Bauplattform verbunden, d.h. verkippt und herabhängend ist, wird bei Annäherung der Bauplattform an den Wannenboden bereits in größerer Höhe als der erwarteten Höhe der Bauplattform über dem Wannenboden den Wannenboden berühren und das Volumen der Kammer reduzieren. Zudem kann sich mit zunehmendem Alter der Wanne die Elastizität des Wannenbodens ändern, was Einfluss auf das Volumen der Kammer hat. Ein unerwartetes Anhaften des Körpers am Wannenboden bei Zufuhr eines Inhibitormediums in die Kammer und weiter an die durch Strahlung härtbare Substanz heran, führt beim Heben der Bauplattform ebenfalls zu Volumenwerten der Kammer, die von erwarteten Volumenwerten abweichen. Mit dem Wert des Volumens der Kammer kann auch auf den Füllstand der durch Strahlung härtbaren Substanz in der Wanne geschlossen werden, da die härtbare Substanz auf den Wannenboden drückt. Aus dem Wert des Volumens der Kammer kann auch ermittelt werden, ob eine Wanne in der Vorrichtung bereitgestellt wurde (oder aber die "Kammer" gegenüber der Umgebung geöffnet ist). Zudem kann aus einer unerwarteten Volumenänderung der Kammer (insbesondere einer unerwarteten Druckänderung im Falle eines Drucksensors und einer an sich geschlossenen Kammer) auf einen Riss oder ein Loch im Wannenboden oder in der Kammer geschlossen werden. Somit können aus einer Messung einer Volumenänderung der Kammer, insbesondere der Absolut- oder Relativwerte des Drucks oder der Stoffmengenänderung oder der Geschwindigkeit der Druckänderung oder Stoffmengenänderung, mittels der Verarbeitungseinheit die genannten Verfahrensparameter ermittelt werden.

Wenn in Abhängigkeit von dem vom Sensor bereitgestellten Sensorsignal, zum Ablösen einer zuletzt ausgehärteten und am Wannenboden anhaftenden Schicht des Körpers vom Wannenboden, insbesondere während eines Wegbewegens der höhenverstellbaren Bauplattform von der Ruhelage des Wannenbodens, ein den Wannenboden von der Bauplattform weg auslenkender Unterdruck in der Kammer durch die Verarbeitungseinheit eingestellt wird, kann sich die zuletzt ausgehärtete und am Wannenboden anhaftende Schicht des Körpers bereits in geringere Höhe der Bauplattform oder ohne Anheben der Bauplattform vom Wannenboden ablösen. Der Unterdruck, welcher bei einer Verkleinerung des Kammervolumens entsteht und daher zusätzlich zu einer etwaigen Rückstellkraft des Wannenbodens den Wannenboden von der Bauplattform wegzieht, unterstützt somit das Ablösen der am Wannenboden anhaftenden Schicht des Körpers. Der Wert des Unterdrucks wird bevorzugt mit dem Sensor (insbesondere Drucksensor) erfasst und kann nötigenfalls limitiert werden, um Schäden am herzustellenden Körper oder am Wannenboden durch zu großen Unterdruck oder eine zu rasche Änderung des Drucks in der Kammer zu vermeiden.

Wenn in Abhängigkeit von dem vom Sensor bereitgestellten Sensorsignal in der Kammer ein Überdruck des Inhibitormediums durch die Verarbeitungseinheit eingestellt wird, kann die Diffusion durch die semipermeable Folie erhöht werden. Die dadurch beinflussbare Dicke der inhibierten Substanzschicht ist ein wichtiger Verfahrensparameter und wirkt sich bspw. auf die Druckgeschwindigkeit aus.

Wenn, bevorzugt in Abhängigkeit von dem vom Sensor bereitgestellten Sensorsignal, vor einem Antasten der Bauplattform oder der zuletzt ausgehärteten Schicht des Körpers am Wannenboden, ein den Wannenboden zur Bauplattform auslenkender Überdruck in der Kammer durch die Verarbeitungseinheit eingestellt wird, kann eine Druckänderung in der Kammer bereits vor Erreichen der Ruhelage des Wannenbodens erfasst und die Ruhelage des Wannenbodens durch Absenken der Bauplattform besonders präzise erreicht werden. Der Wert des Überdrucks wird bevorzugt mit dem Sensor (insbesondere Drucksensor) erfasst, und darauf basierend durch die Steuereinheit geregelt, um Schäden am Wannenboden durch zu großen Überdruck in der Kammer zu vermeiden.

Für die Herstellung einer Schicht des zu bildenden Körpers kann vorgesehen sein, dass die höhenverstellbare Bauplattform mit einer daran und am Wannenboden anhaftenden, zuletzt ausgehärteten Schicht des Körpers von einer Ruhelage des Wannenbodens weg bewegt wird, ein Ablösen der zuletzt ausgehärteten und am Wannenboden anhaftenden Schicht des Körpers vom Wannenboden in der Verarbeitungseinheit über den Sensor ermittelt wird, die höhenverstellbare Bauplattform in eine Höhe über der Ruhelage des Wannenbodens verfahren wird, welche einen Abstand zwischen der zuletzt ausgehärteten Schicht des Körpers zur Ruhelage des Wannenbodens im Ausmaß mindestens der Dicke der neu zu bildenden Schicht des Körpers definiert, und danach die durch Strahlung härtbare Substanz zur Bildung der neuen Schicht des Körpers selektiv mittels der Strahlungsquelle durch Bestrahlung ausgehärtet wird. Somit wird für diesen Fall die am Wannenboden anhaftende, zuletzt ausgehärtete Schicht des Körpers beispielsweise durch Anheben der Bauplattform vom Wannenboden getrennt. Die Volumenänderung der Kammer während des Anhebens der Bauplattform und beim Trennen der zuletzt ausgehärteten Schicht des Körpers vom Wannenboden wird günstiger Weise mit dem Sensor erfasst. Sobald die Trennung erfasst wurde, kann die Bauplattform in die gewünschte Höhe über dem Wannenboden nach unten verfahren werden, wofür die Bauplattform beispielsweise über einen Schrittmotor angetrieben wird. Danach wird die härtbare Substanz im Raum zwischen der zuletzt ausgehärteten Schicht des Körpers und dem Wannenboden durch Bestrahlung ausgehärtet, um eine neue Schicht des Körpers zu bilden. Hierbei erfolgt die Belichtung der härtbaren Substanz getrennt von der Bewegung der Bauplattform (asynchroner Modus ohne Inhibierungsschicht).

Für die Herstellung einer Schicht des zu bildenden Körpers kann auch vorgesehen sein, dass ein Inhibitormedium über die Kammer der durch Strahlung härtbaren Substanz zugeführt wird und die höhenverstellbare Bauplattform mit einer daran anhaftenden, zuletzt ausgehärteten Schicht des Körpers in eine Höhe über der Ruhelage des Wannenbodens verfahren wird, welche einen Abstand zwischen der zuletzt ausgehärteten Schicht des Körpers zur Ruhelage des Wannenbodens mindestens im Ausmaß der Dicke der neu zu bildenden Schicht des Körpers definiert, während gleichzeitig zum Verfahren der höhenverstellbaren Bauplattform die durch Strahlung härtbare Substanz zur Bildung der neuen Schicht des Körpers selektiv mittels der Strahlungsquelle durch Bestrahlung ausgehärtet wird. In diesem Fall verhindert das Inhibitormedium ein Anhaften der zuletzt ausgehärteten Schicht des Körpers am Wannenboden, wodurch kein Trennvorgang dieser Schicht vom Wannenboden erforderlich ist. Der Platzbedarf für das Inhibitormedium wird bei der Festlegung der Höhe, in welche die Bauplattform über den Wannenboden verfahren wird, berücksichtigt. Somit kann bereits während des Verfahrens der Bauplattform in die gewünschte Höhe über dem Wannenboden die härtbare Substanz bestrahlt werden. Auf diese Weise wird das Verfahren zur Herstellung des Körpers wesentlich beschleunigt. Somit erfolgen die Belichtung der härtbaren Substanz und die Bewegung der Bauplattform gleichzeitig (synchroner Modus).

Für die Herstellung einer Schicht des zu bildenden Körpers kann auch vorgesehen sein, dass ein Inhibitormedium über die Kammer der durch Strahlung härtbaren Substanz zugeführt wird und die höhenverstellbare Bauplattform mit einer daran anhaftenden, zuletzt ausgehärteten Schicht des Körpers in eine Höhe über der Ruhelage des Wannenbodens verfahren wird, welche einen Abstand zwischen der zuletzt ausgehärteten Schicht des Körpers zur Ruhelage des Wannenbodens mindestens im Ausmaß der Dicke der neu zu bildenden Schicht des Körpers definiert, und danach die durch Strahlung härtbare Substanz zur Bildung der neuen Schicht des Körpers selektiv mittels der Strahlungsquelle durch Bestrahlung ausgehärtet wird. In diesem Fall verhindert das Inhibitormedium ein Anhaften der zuletzt ausgehärteten Schicht des Körpers am Wannenboden, wodurch kein Trennvorgang dieser Schicht vom Wannenboden erforderlich ist. Der Platzbedarf für das Inhibitormedium wird bei der Festlegung der Höhe, in welche die Bauplattform über den Wannenboden verfahren wird, berücksichtigt. Die Bauplattform kann in die gewünschte Höhe über dem Wannenboden verfahren werden und danach die härtbare Substanz zwischen der zuletzt ausgehärteten Schicht des Körpers und dem Wannenboden bestrahlt werden. Wegen des Wegfalls des Trennvorgangs wird das Verfahren zur Herstellung des Körpers wesentlich beschleunigt. Somit erfolgt die Belichtung der härtbaren Substanz getrennt von der Bewegung der Bauplattform (asynchroner Modus mit Inhibierungsschicht).

Die Erfindung wird im Folgenden anhand von bevorzugten, nicht einschränkenden Ausführungsbeispielen unter Bezugnahme auf die Zeichnungen noch weiter erläutert. Es zeigen:

Fig. 1 eine Vorrichtung gemäß der Erfindung mit einem Drucksensor und einem Wannenboden ohne Trägerplatte;

Fig. 2 eine Vorrichtung gemäß der Erfindung mit einem Drucksensor und einem Wannenboden mit Trägerplatte;

Fig. 3 eine Trägerplatte mit am Wannenboden anliegenden Erhöhungen;

Fig. 4 die Vorrichtung aus Fig. 1 mit einem am Wannenboden anhaftenden, zumindest teilweise ausgebildeten Körper;

Fig. 5 die Vorrichtung aus Fig. 2 mit einem am Wannenboden anhaftenden zumindest teilweise ausgebildeten Körper;

Fig. 6a bis 6d die Vorrichtung aus Fig. 2 jeweils mit einer einstellbaren Druckquelle, einer einstellbaren Heizvorrichtung, einer einstellbaren Prozessstoffquelle (Inhibitorquelle) und einer Luftstromquelle;

Fig. 7 die Vorrichtung aus Fig. 1 mit einer Inhibierungsschicht;

Fig. 8 die Vorrichtung aus Fig. 2 mit einer Inhibierungsschicht;

Fig. 9 die Vorrichtung aus Fig. 7 mit einer zum Teil aufgebrauchten Inhibierungsschicht;

Fig. 10 die Vorrichtung aus Fig. 9 mit einer noch stärker aufgebrauchten Inhibierungsschicht;

Fig. 11 die Vorrichtung aus Fig. 8 mit einer zum Teil aufgebrauchten Inhibierungsschicht;

Fig. 12 eine Vorrichtung gemäß der Erfindung bei welcher der Wannenboden ein öffenbarer, insbesondere abnehmbarer Deckel eines Kammergehäuses der Kammer ist;

Fig. 13 die Vorrichtung aus Fig. 1 mit einer Rakel am Wannenboden;

Fig. 14 die Vorrichtung aus Fig. 1 mit einer am Wannenboden angetasteten Bauplattform;

Fig. 15 die Vorrichtung aus Fig. 1 mit einem den Wannenboden von der Bauplattform weg auslenkenden Unterdruck in der Kammer;

Fig. 16 die Vorrichtung aus Fig. 2 mit einem den Wannenboden zur Bauplattform auslenkenden Überdruck in der Kammer;

Fig. 17 die Vorrichtung aus Fig. 1 mit einem fehlerhafter Weise teilweise von der Bauplattform abgelösten Körper;

Fig. 18a bis 18c einen Ablösevorgang der zuletzt ausgehärteten Schicht des Körpers vom Wannenboden in drei beispielhaften Zuständen;

Fig. 19 Diagramme mit beispielhaften Verläufen des Volumens der Kammer, des Drucks in der Kammer und der Höhe der Bauplattform über dem Wannenboden für den in den Fig. 18a bis 18c dargestellten Ablösevorgang, im Fall einer im Wesentlichen geschlossenen Kammer;

Fig. 20a und 20b einen Ablösevorgang der zuletzt ausgehärteten Schicht eines von drei Körpern vom Wannenboden in zwei beispielhaften Zuständen;

Fig. 21 Diagramme mit beispielhaften Verläufen des Drucks in einer im Wesentlichen geschlossenen Kammer und der Höhe der Bauplattform über dem Wannenboden für den in den Fig. 20a und 20b dargestellten Ablösevorgang;

Fig. 22 einen am Wannenboden anhaftenden Körper;

Fig. 23a bis 23c Diagramme mit beispielhaften Verläufen der Höhe der Bauplattform über dem Wannenboden und mit der Belichtungszeit; und

Fig. 24 eine Vorrichtung gemäß der Erfindung mit einem Durchflusssensor an Stelle eines Drucksensors.

In den dargestellten Figuren sind der Übersichtlichkeit wegen Teile der Vorrichtung, die der Beschreibung der jeweiligen Figur nicht dienen, weggelassen.

Jene Teile der Beschreibung die sich auf eine Druckmessung bzw. Erfassung des Drucks in der Kammer beziehen, sind unter der Voraussetzung zu verstehen, dass der Sensor ein Drucksensor ist und die Kammer im Wesentlichen geschlossen ist. Für Erläuterungen zur Dichtheit der im Wesentlichen geschlossenen Kammer wird auf die vorangegangene Beschreibung verweisen.

Der Übersichtlichkeit wegen sind die meisten Ausführungsbeispiele im Zusammenhang mit einer im Wesentlichen geschlossenen Kammer und einem Drucksensor gezeigt und beschrieben. Wenn an Stelle einer Druckmessung eine Messung des Durchflusses einer Stoffmenge beabsichtigt und möglich ist, kann selbstverständlich an Stelle des Drucksensors ein Durchflusssensor verwendet werden, der in einem Einlass/Auslass der Kammer für ein Fluid angeordnet ist. Demnach gelten jene Ausführungsbeispiele, die zwar im Zusammenhang mit einem Drucksensor gezeigt und beschrieben sind, aber auch in Zusammenhang mit einem Durchflusssensor realisierbar sind, auch für Ausführungen mit einem Durchflusssensor.

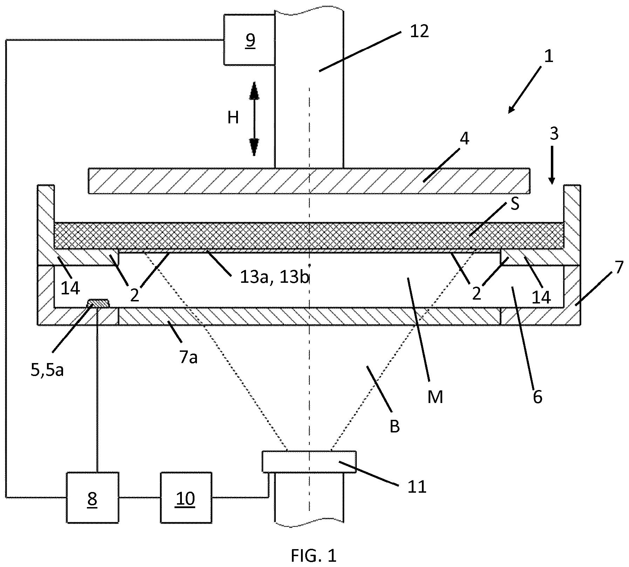

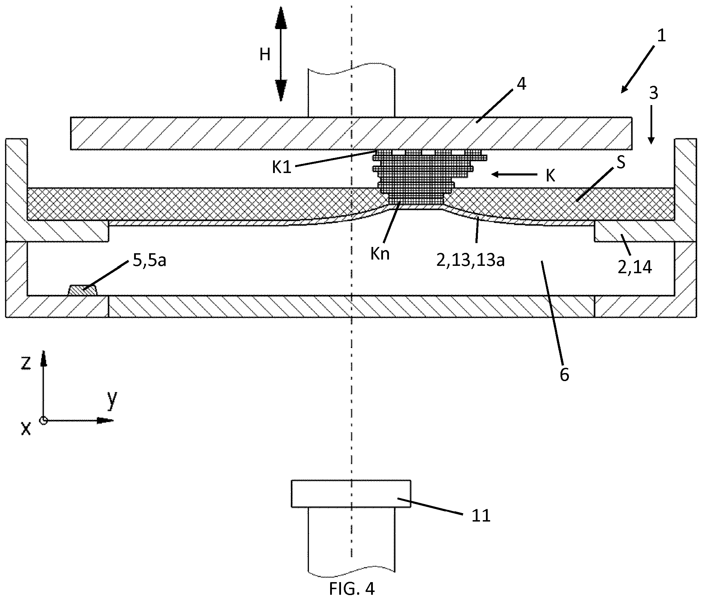

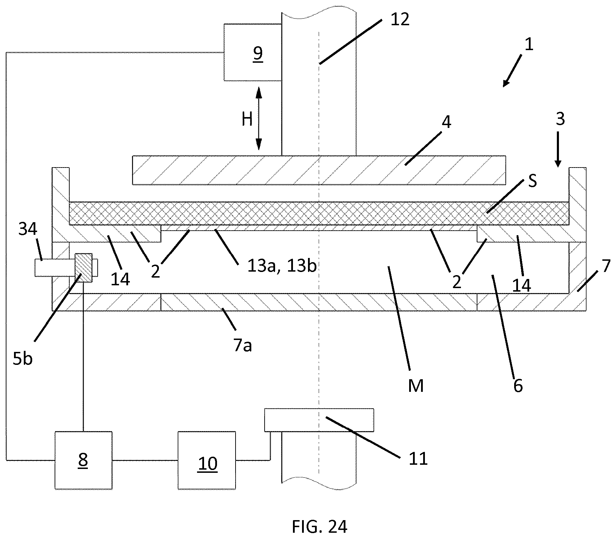

Fig. 1 zeigt eine Vorrichtung 1 für eine Anlage zum schichtweisen Aufbau eines Körpers K, welcher bspw. in Fig. 4 dargestellt ist, aus einer durch Strahlung härtbaren Substanz S, mit einer einen Wannenboden 2 aufweisenden Wanne 3 zur Aufnahme der durch Strahlung härtbaren Substanz S. Der Wannenboden 2 ist in seiner Ruhelage, im Wesentlichen eben dargestellt. Die Vorrichtung 1 weist auch eine über dem Wannenboden 2 angeordnete und in Bezug auf den Wannenboden 2 höhenverstellbare Bauplattform 4, und einen mit dem Wannenboden 2 zusammenwirkenden Sensor 5 auf. Die höhenverstellbare Bauplattform 4 ist in der durch den Doppelpfeil H angedeuteten Richtung, d.h. in der Höhe, in Bezug auf den Wannenboden 2 oder allgemein in Bezug auf die Wanne 3 nach oben und nach unten, verstellbar. Der Wannenboden 2 ist zumindest teilweise, in einem Teilbereich 13, flexibel ausgebildet. Unterhalb der Wanne 3 ist eine Kammer 6 vorgesehen, die in Fig. 1 geschlossen ist, um mit einem als Drucksensor 5a ausgebildeten Sensor 5 zusammenzuwirken. In einer anderen, in Fig. 24 dargestellten Ausführungsform kann die Kammer 6 eine Öffnung 34 zum Einlass oder Auslass eines in der Kammer 6 aufgenommenen Fluids aufweisen, wobei dann der Sensor 5 ein Durchflusssensor 5b ist. Die Kammer 6 ist von einer Unterseite des Wannenbodens 2 begrenzt. Somit ist der Wannenboden 2 ein Teil eines Kammergehäuses 7 der Kammer 6. Der Sensor 5 kann eine Volumenänderung der Kammer 6 detektieren und ein Sensorsignal bereitstellen, aus dem ein Vorzeichen der Volumenänderung ermittelbar ist. Der Sensor 5 kann insbesondere eine zum Volumen der Kammer oder zur Volumenänderung der Kammer direkt oder indirekt proportionale Messgröße quantitativ erfassen und als Sensorsignal bereitstellen. Im in Fig. 1 gezeigten Beispiel ist der Sensor 5 ein Drucksensor 5a zur Erfassung eines Drucks oder einer mit der Volumenänderung korrespondierenden Druckänderung eines in der Kammer 6 aufgenommenen komprimierbaren Mediums M. Die Kammer 6 ist hierbei geschlossen ausgebildet. In einer anderen Ausführungsform (Fig. 24) kann der Sensor 5 ein Durchflusssensor 5b sein, der zur Erfassung einer mit der Volumenänderung korrespondierenden Stoffmengenänderung der in der Kammer 6 enthaltenen Stoffmenge eines in der Kammer 6 aufgenommenen Fluids vorgesehen ist. Das Fluid kann eine Flüssigkeit oder ein Gas und demnach komprimierbar oder unkomprimierbar sein. Beispielsweise ist der Sensor 5 eingerichtet, einen erfassten Druck, eine erfasste Druckänderung oder eine erfasste Stoffmengenänderung als Messgröße und Sensorsignal bereitzustellen.

Im in Fig. 1 gezeigten Beispiel ist in der Kammer 6 ein komprimierbares Medium M, bspw. Luft aufgenommen, wobei der Sensor 5 ein Drucksensor 5a ist, der zur Erfassung des Drucks des in der Kammer 6 aufgenommenen komprimierbaren Mediums M eingerichtet ist. Bevorzugt ist der Drucksensor 5a in der Kammer 6 aufgenommen. In einer speziellen Ausführungsform kann der Drucksensor 5a auch als Schallwandler ausgebildet sein. Der Sensor 5 kann mit einer Verarbeitungseinheit 8 verbunden sein, welche eingerichtet ist, das vom Sensor 5 bereitgestellte Sensorsignal, insb. den vom Drucksensor 5a erfassten Druck oder die vom Durchflusssensor 5b erfasste Stoffmengenänderung, zu verarbeiten. Der Sensor 5 kann über die Verarbeitungseinheit 8 mit einer Antriebseinheit 9 für die höhenverstellbare Bauplattform 4 und/oder mit einer Steuereinheit 10 für eine Strahlungsquelle 11, welche für die Bestrahlung der durch Strahlung härtbaren Substanz S vorgesehen ist, verbunden sein. Die Verarbeitungseinheit 8 ist eingerichtet, die Antriebseinheit 9 für die höhenverstellbare Bauplattform 4 und/oder die Steuereinheit 10 für die Strahlungsquelle 11 in Abhängigkeit von dem vom Sensor 5 bereitgestellten Sensorsignal zu steuern. In anderen, nicht dargestellten Ausführungsbeispielen kann die Verarbeitungseinheit 8 auch nur mit der Antriebseinheit 9 für die höhenverstellbare Bauplattform 4 oder nur mit der Steuereinheit 10 für die Strahlungsquelle 11 verbunden und zur Steuerung davon ausgebildet sein.

Die für die Trennung des Körpers K vom Wannenboden 2 notwendige Separationskraft, welche durch die höhenverstellbare Bauplattform 4 eingebracht wird, lenkt den Wannenboden 2 aus und erzeugt dadurch eine Volumenänderung in der Kammer 6. Wenn die Kammer 6 zur Verwendung mit einem Drucksensor 5a geschlossen ist, bewirkt die Volumenänderung eine Druckänderung in der Kammer 6. Wenn hingegen die Kammer 6 zur Verwendung mit einem Durchflusssensor 5b teilweise offen ist, bewirkt die Volumenänderung einen Durchfluss (ein Einströmen oder Ausströmen) des in der Kammer 6 aufgenommenen Fluids zum Druckausgleich mit der Umgebung oder mit einer anderen Kammer. Mit steigender Strahlungsenergie (Produkt aus Belichtungszeit und Belichtungsintensität), die von der Strahlungsquelle 11 eingebracht wird, haftet die generierte Schicht des Körpers K am Wannenboden 2 stärker an. Durch einen Vergleich des zu erwarteten minimalen Drucks (=Separationsdruck) oder Durchflusses mit dem tatsächlichen Separationsdruck oder Durchfluss, kann auf eine zu hohe Belichtungsenergie geschlossen werden. Die Antriebseinheit 9 kann beispielsweise einen steuerbaren Elektromotor, insbesondere einen Schrittmotor aufweisen, welcher mit einer höhenverstellbaren Stange 12 in Eingriff steht und über die Stange 12 mit der Bauplattform 4 verbunden ist. Der Wannenboden 2 ist zumindest teilweise strahlungsdurchlässig, d.h. zumindest teilweise durchlässig für die von der Strahlungsquelle 11 auf den Wannenboden 2 abgestrahlte Strahlung, bspw. Licht. Vorzugsweise weist der Wannenboden 2 eine flexible, gespannte Folie 13a auf. Die Folie 13a ist im flexiblen Teilbereich 13 vorgesehen. Günstiger Weise ist die Folie 13a zumindest teilweise strahlungsdurchlässig, insbesondere lichtdurchlässig, ausgebildet. Im in Fig. 1 dargestellten Beispiel ist die Folie 13a zwischen festen Randteilen 14 des Wannenbodens 2 gespannt. Wenn wie im in Fig. 1 dargestellten Beispiel die Strahlungsquelle 11 außerhalb, insbesondere unterhalb der Kammer 6 angeordnet ist, ist zweckmäßiger Weise der Kammerboden 7a des Kammergehäuses 7 zumindest teilweise strahlungsdurchlässig, insbesondere lichtdurchlässig, ausgebildet. In Fig. 1 ist ein beispielhafter Strahlungskegel B erkennbar.

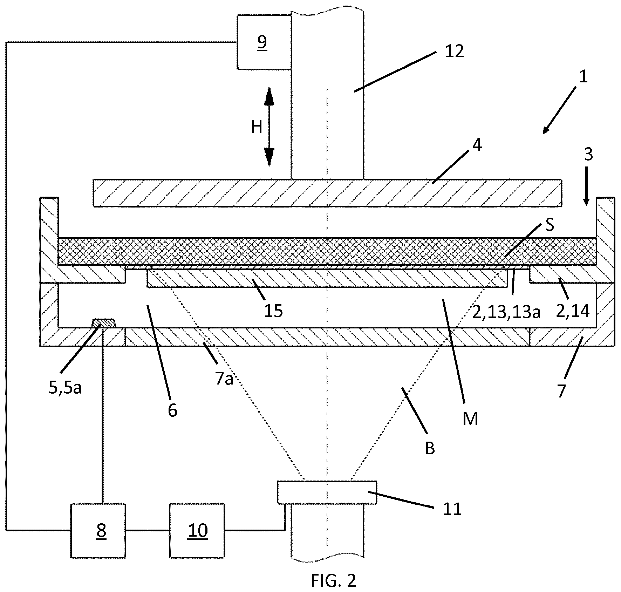

Fig. 2 zeigt die Vorrichtung 1, wobei zumindest ein Teil des Wannenbodens 2, insbesondere der flexible Teilbereich 13, besonders bevorzugt die Folie 13a, auf einer zumindest teilweise strahlungsdurchlässigen, insbesondere transparenten Trägerplatte 15 aufliegt. Die Trägerplatte 15 stützt somit in der dargestellten Ruhelage eine Unterseite der Folie 13a. Die Folie 13a bzw. der Wannenboden 2 ist in dieser Ruhelage im Wesentlichen eben dargestellt. Die Trägerplatte 15 kann für ein Prozessmedium Mp, insbesondere ein Inhibitormedium Mi durchlässig ausgebildet sein und/oder am Wannenboden 2 anliegende Erhöhungen 16 für den Durchtritt eines Prozessmediums Mp, insbesondere Inhibitormediums Mi, zwischen den Erhöhungen 16 aufweisen. Die am Wannenboden 2 anliegenden Erhöhungen 16 können insbesondere am flexiblen Teilbereich 13 des Wannenbodens 2, bevorzugt an der Folie 13a anliegen. Das Prozessmedium Mp bzw. Inhibitormedium Mi, bspw. Sauerstoff, ist in der Kammer 6 aufgenommen.

Ermöglicht eine geschlossene Wannenkonstruktion eine negative Volumenänderung der Kammer 6, z.B. bedingt durch einen leichten Durchhang der Wanne 3, genauer des Wannenbodens 2, kann ein Anstieg des Druckes detektiert werden. Dadurch kann z.B. auf den Füllstand der härtbaren, z.B. fotosensitiven Substanz S in der Wanne 3 geschlossen werden. Ferner kann die Nullposition des Wannenbodens 2 relativ zur Trägerplatte 15 gemessen werden, indem eine gezielte Kollision der Trägerplatte 15 mit dem flexiblen Wannenboden 2 nach dessen Trennung von einem Körper K zu einem messbaren Druckgradienten führt.

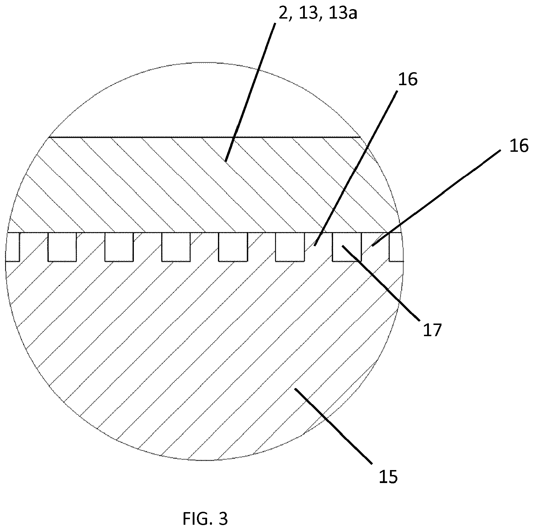

Fig. 3 zeigt einen Abschnitt einer Trägerplatte 15 mit Erhöhungen 16, welche am Wannenboden 2 anliegen. Zwischen den Erhöhungen 16 erstrecken sich Ausnehmungen 17 in welchen das Prozessmedium Mp, bspw. das Inhibitormedium Mi, strömen kann. Die Ausnehmungen 17 können beispielsweise als rillenförmige Vertiefungen zwischen leistenförmigen Erhöhungen 16 ausgebildet sein. Wenn die Trägerplatte 15 zudem für das Prozessmedium Mp, insb. Inhibitormedium Mi, durchlässig ausgebildet ist, können in der Trägerplatte 15 nicht dargestellte Kanäle zum Leiten des Prozessmediums Mp, insb. Inhibitormediums Mi, vorgesehen sein. Die Trägerplatte 15 kann auch porös ausgebildet sein.

In Fig. 4 ist die Vorrichtung 1 mit einem zumindest teilweise gebildeten Körper K dargestellt. Der Körper K weist mehrere Schichten K1 bis Kn auf, die durch lokales Aushärten der härtbaren Substanz S mit Strahlung gebildet wurden. Der Körper K haftet mit der als erstes ausgebildeten Schicht K1 an der Bauplattform 4 und - in der dargestellten Situation vor dem Ablösen - mit der zuletzt ausgebildeten Schicht Kn am Wannenboden 2, insbesondere an der Folie 13a. Im dargestellten Zustand wurde die Bauplattform 4 bereits ein Stück weit nach oben, d.h. in positive Z-Richtung und weg von der Wanne 3, verfahren, wodurch die Folie 13a zumindest in einem Teilbereich aus ihrer Ruhelage ausgelenkt ist. Durch die Auslenkung wird das Volumen der Kammer 6 vergrößert. Das entspricht einem positiven Vorzeichen ("+") der Volumenänderung. Folglich sinkt (bei konstanter Temperatur und konstanter Stoffmenge, d.h. geschlossener Kammer) der Druck in der Kammer 6. Der Drucksensor 5a ist eingerichtet, diese Druckänderung zu detektieren und ein entsprechendes Signal an die Verarbeitungseinheit 8 zu übertragen. Ebenso kann ein mit einer teilweise offenen Kammer 6 zusammenwirkender Durchflusssensor 5b (in Fig. 4 nicht dargestellt) eine Änderung der Stoffmenge in der Kammer 6 detektieren, welche Änderung der Stoffmenge mit der Vergrößerung des Volumens der Kammer 6 korrespondiert. Insbesondere wird im Falle der offenen Kammer 6 durch die Auslenkung der Folie 13a Fluid in die Kammer 6 gesogen. Auch der Durchflusssensor 5b kann ein entsprechendes Signal an die Verarbeitungseinheit 8 übertragen. Der Übersichtlichkeit wegen sind in Fig. 4 sowie in weiteren Figuren die Verarbeitungseinheit 8, die Antriebseinheit 9 und die Steuereinheit 10 nicht dargestellt.

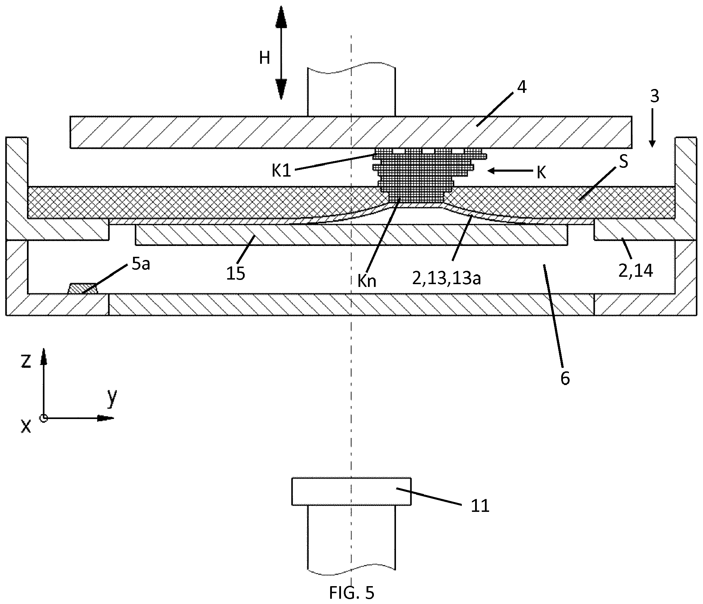

Im Unterschied zu Fig. 4 ist in Fig. 5 eine Trägerplatte 15 vorgesehen, an welcher der Wannenboden 2, insbesondere die Folie 13a aufliegen kann. Wie in der dargestellten Situation mit ausgelenktem Wannenboden 2 ersichtlich ist, liegt der Wannenboden 2, genauer die Folie 13a, nur lose auf der Trägerplatte 15 auf und kann unter der Wirkung eines anhaftenden Körpers K davon abgehoben werden. Durch die Vertiefungen 17 in der Trägerplatte 15 wird ein Druckausgleich innerhalb der Kammer 6, d.h. zwischen dem Raum zwischen Trägerplatte 15 und Folie 13a einerseits und der Kammer 6 unterhalb der Trägerplatte 15 andererseits, ermöglicht. Die Auslenkung des Wannenbodens 2 führt somit zu einer vom Drucksensor 5a detektierbaren Druckänderung oder einer vom Durchflusssensor 5b detektierbaren Stoffmengenänderung. Auch in Fig. 5 kann an Stelle des Drucksensors 5a in der geschlossenen Kammer 6 ein Durchflusssensor 5b in einer teilweise offenen Kammer 6 (in Fig. 5 nicht dargestellt) vorgesehen sein.

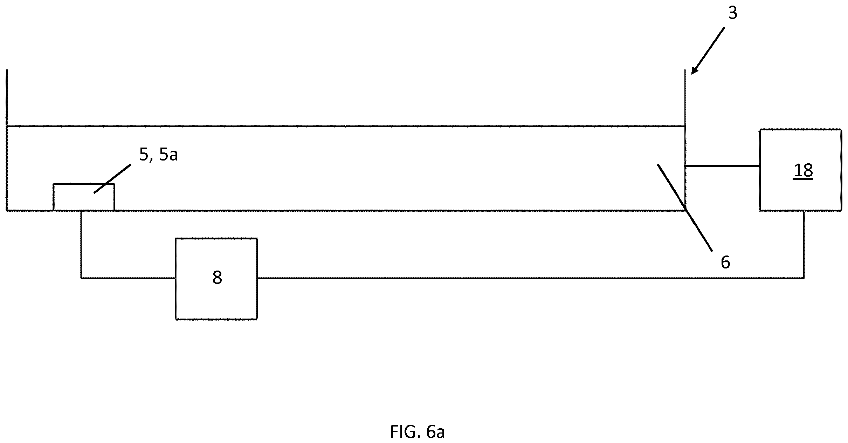

Fig. 6a zeigt vereinfacht die Vorrichtung 1, bei welcher die Kammer 6, als geschlossene Kammer 6, bspw. mit zumindest einer einstellbaren Druckquelle 18 zur Einstellung eines Ruhedrucks in der Kammer 6 verbunden ist und der Drucksensor 5a über die Verarbeitungseinheit 8 mit der einstellbaren Druckquelle 18 verbunden ist.

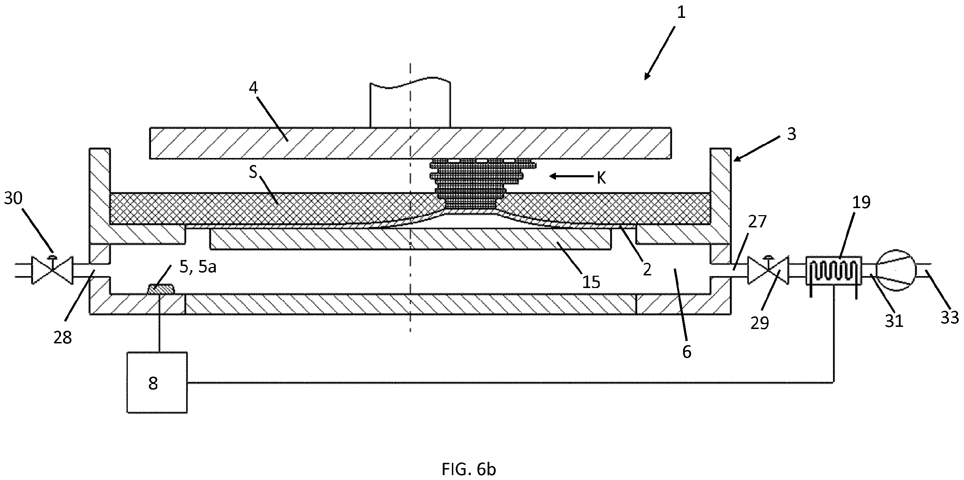

Fig. 6b zeigt die Vorrichtung 1, bei welcher die Kammer 6 bspw. mit einer einstellbaren Heizvorrichtung 19 (oder allgemein einem Wärmetauscher) zur Einstellung einer Temperatur in der Kammer 6 verbunden ist und der Drucksensor 5a über die Verarbeitungseinheit 8 mit der einstellbaren Heizvorrichtung 19 verbunden ist. Die Kammer 6 weist in diesem Beispiel einen Einlass 27 und einen Auslass 28 auf. Der Einlass 27 und der Auslass 28 sind jeweils durch ein Ventil 29, 30, insbesondere jeweils ein Magnetventil, verschließbar. Die Heizvorrichtung 19 ist in einer Zuleitung 31 zwischen einem Verdichter 32 und dem Ventil 29 vor dem Einlass 27 angeordnet. Zum Ändern der Temperatur in der Kammer 6 kann der Verdichter 32 zumindest vorübergehend aktiviert werden, um z.B. Umgebungsluft durch die Mündung 33 anzusaugen. Gleichzeitig werden die Ventile 29, 30 in ungefähr gleichem Ausmaß geöffnet, sodass durch den Auslass 28 komprimierbares Medium aus der Kammer 6 austreten kann und durch das durch den Einlass 27 nachströmende komprimierbare Medium ersetzt wird, wobei das nachströmende Medium unmittelbar zuvor in der Heizvorrichtung 19 erhitzt wurde. Durch die Vermischung des komprimierbaren Mediums in der Kammer 6 aufgrund der Strömung stellt sich rasch eine gleichmäßige Temperatur ein. Dabei kann es günstig sein, wenn eine Einrichtung zur Messung der Temperatur in der Kammer 6 vorgesehen und gegebenenfalls mit der Verarbeitungseinheit 8 verbunden ist. Die Heizvorrichtung 19 dient somit bspw. der indirekten Erwärmung der härtbaren Substanz S. Sobald eine gewünschte Temperatur erreicht ist, werden die Ventile 29, 30 wieder geschlossen. Bei der Auswertung der vom Drucksensor 5a detektierten Druckänderungen wird der Zustand der Ventile 29, 30 (d.h. geschlossen oder offen oder teilweise geöffnet) berücksichtigt, um die Ursache für Druckänderungen richtig zuordnen zu können.

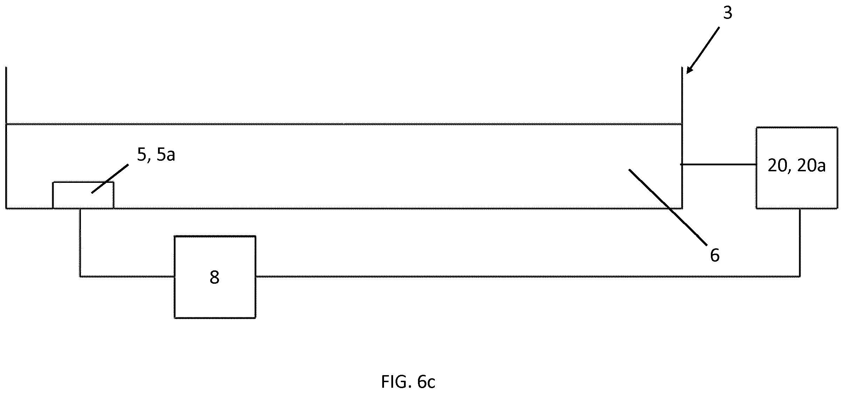

Fig. 6c zeigt vereinfacht die Vorrichtung 1, bei welcher die Kammer 6 bspw. mit einer einstellbaren Prozessstoffquelle 20, insb. Inhibitorquelle 20a, zur einstellbaren Zufuhr eines Prozessmediums Mp, insb. Inhibitormediums Mi, in die Kammer 6 verbunden ist und der Drucksensor 5a über die Verarbeitungseinheit 8 mit der einstellbaren Prozessstoffquelle 20, insb. Inhibitorquelle 20a, verbunden ist. Die Prozessstoffquelle 20 dient der zumindest lokalen Manipulation des Verfestigungsvorgangs der durch Strahlung härtbaren Substanz S in der Wanne 3. Da in diesem Fall der Wannenboden 2 zumindest geringfügig durchlässig für das Prozessmedium Mp sein kann, kann diese Variante nur mit einem Einlass und ohne einen Auslass auskommen. Ist Sensor 5 als Durchflusssensor 5b ausgeführt, kann er in einer Verbindungsleitung zwischen der Prozessstoffquelle 20 und der Kammer 6 angeordnet sein. In diesem Fall wird mittels Massenbilanz auf die Volumenänderung geschlossen; diese ist proportional zur Differenz zwischen einströmendem und ausströmendem Medium.

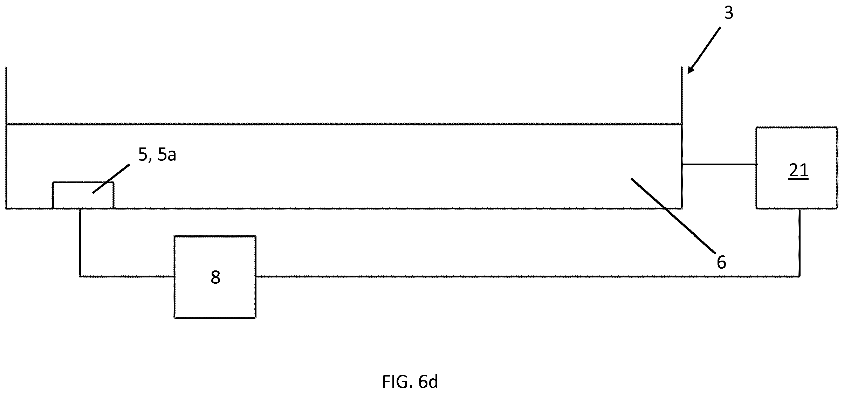

Fig. 6d zeigt vereinfacht die Vorrichtung 1, bei welcher die Kammer 6 bspw. mit einer Luftstromquelle 21 zur Erzeugung eines Luftstroms in der Kammer 6 verbunden ist und der Drucksensor 5a über die Verarbeitungseinheit 8 mit der Luftstromquelle 21 verbunden ist. Die Luftstromquelle 21 dient bspw. der Durchmischung des in der Kammer 6 aufgenommenen komprimierbaren Mediums M. Wie bei Fig. 6c kann als Sensor 5 auch ein in einer Verbindungsleitung zwischen der Luftstromquelle 21 und der Kammer 6 angeordneter Durchflusssensor 5b verwendet werden.

Selbstverständlich kann die Kammer 6 der Vorrichtung 1 mit mehreren von der einstellbaren Druckquelle 18, der einstellbaren Heizvorrichtung 19, der einstellbaren Prozessstoffquelle 20 und der Luftstromquelle 21 verbunden sein. Die Verarbeitungseinheit 8 ist bevorzugt eingerichtet, die Druckquelle 18 und/oder die Heizvorrichtung 19 und/oder die Prozessstoffquelle 20 und/oder die Luftstromquelle 21 in Abhängigkeit von dem vom Sensor 5 bereitgestellten Sensorsignal zu steuern. Weiters kann die Verarbeitungseinheit 8 vorzugsweise zur Steuerung eines oder mehrerer Mitglieder der Gruppe bestehend aus Einlass-Ventil 29, Auslass-Ventil 30 und Verdichter 32 eingerichtet sein.

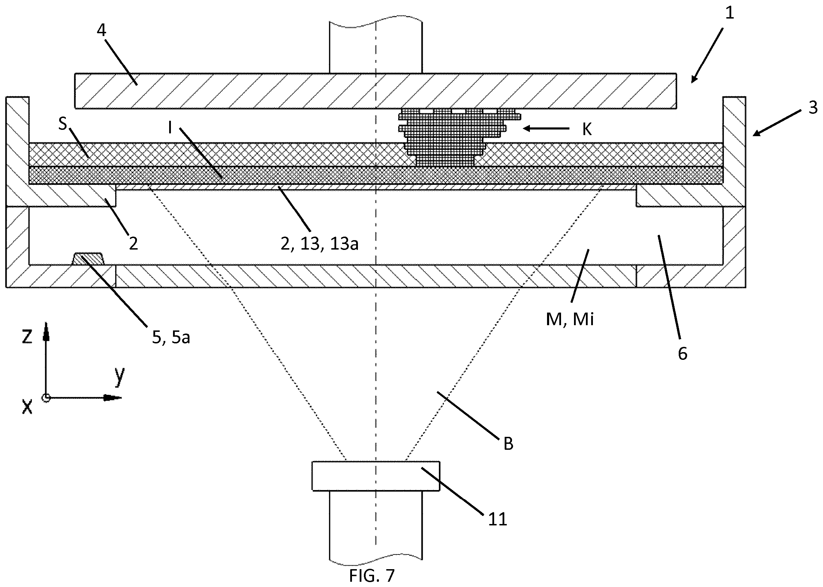

Fig. 7 zeigt die Vorrichtung 1 mit einer durch ein Inhibitormedium Mi gebildeten Inhibierungsschicht I. Die Inhibierungsschicht I ist im dargestellten Beispiel zwischen dem Wannenboden 2 und der härtbaren Substanz S ausgebildet. Das Inhibitormedium Mi wird hierfür durch einen in Fig. 7 nicht dargestellten Zugang in die Kammer 6 eingebracht. Um das Inhibitormedium Mi der härtbaren Substanz S zuführen zu können, ist bevorzugt der Wannenboden 2, insbesondere die Folie 13a semipermeabel, für das Inhibitormedium Mi, oder allgemein ein Prozessmedium Mp, durchlässig, ausgebildet. Das Inhibitormedium Mi bzw. die dadurch gebildete Inhibierungsschicht I reduziert die Haftkraft, mit welcher die zuletzt gebildete Schicht Kn der Körpers K am Wannenboden 2, insbesondere an der Folie 13a anhaftet. Bevorzugt verhindert das Inhibitormedium Mi bzw. die Inhibierungsschicht I ein solches Anhaften. Auch das in Fig. 7 dargestellte Beispiel kann mit einem Durchflusssensor 5b in einer teilweise offenen Kammer 6 an Stelle des Drucksensors 5a in der geschlossen Kammer 6 ausgeführt sein. Dabei entspricht das Delta des einströmenden und ausströmenden Mediums der Volumenänderung.

Eine Temperierung der Kammer 6 dient bspw. der Beschleunigung des Diffusionsprozesses des Inhibitormediums Mi durch die semipermeable Schicht (Folie 13a) aber auch der Heizung der härtbaren Substanz S in der Wanne 3. Die Temperatur in der Kammer 6 hat Einfluss auf die Temperatur der Substanz S und somit auf die Viskosität und die Reaktivität der härtbaren Substanz S auf Strahlung.

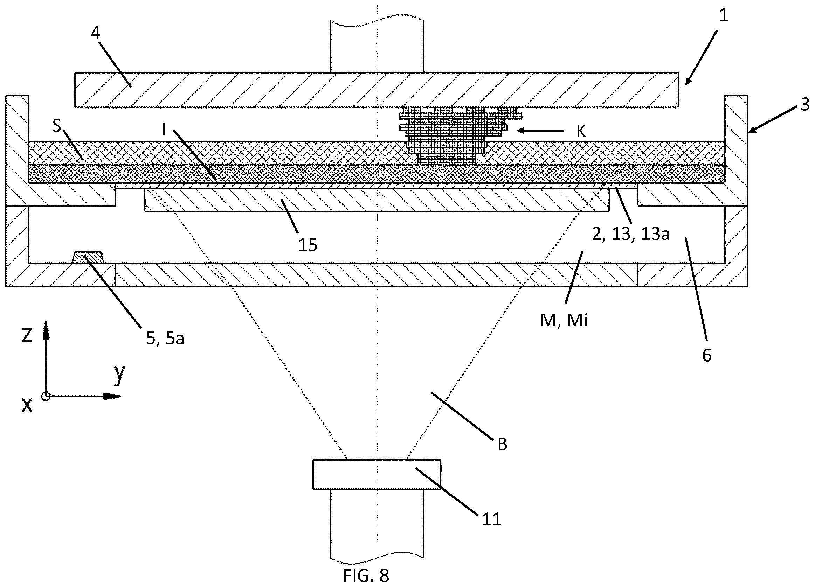

Im Unterschied zu Fig. 7 ist in Fig. 8 eine Trägerplatte 15 vorgesehen, auf welcher der Wannenboden 2, insbesondere die Folie 13a, aufliegen kann. Dabei ist es zweckmäßig, wenn die Trägerplatte 15 für das Inhibitormedium Mi, oder allgemein ein Prozessmedium Mp, durchlässig ausgebildet ist und/oder am Wannenboden 2 anliegende Erhöhungen 16 für den Durchtritt des Inhibitormediums Mi bzw. Prozessmediums Mp zwischen den Erhöhungen 16 aufweist.

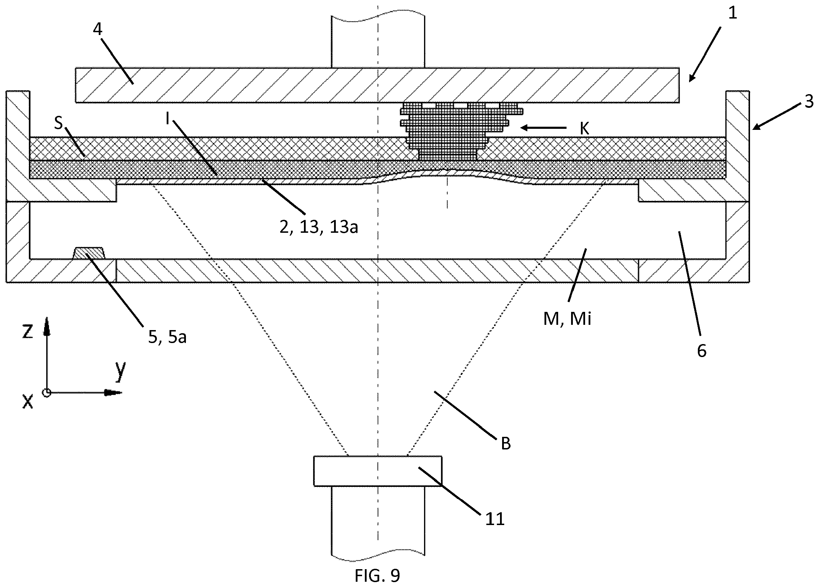

Fig. 9 zeigt die Vorrichtung 1 bei welcher die Inhibierungsschicht I unterhalb des Körpers K zum Teil aufgebraucht ist. Dies ist durch die Aufwärtswölbung der Folie 13a und damit durch die dünnere Ausbildung der Inhibierungsschicht I unterhalb des Körpers K angedeutet.

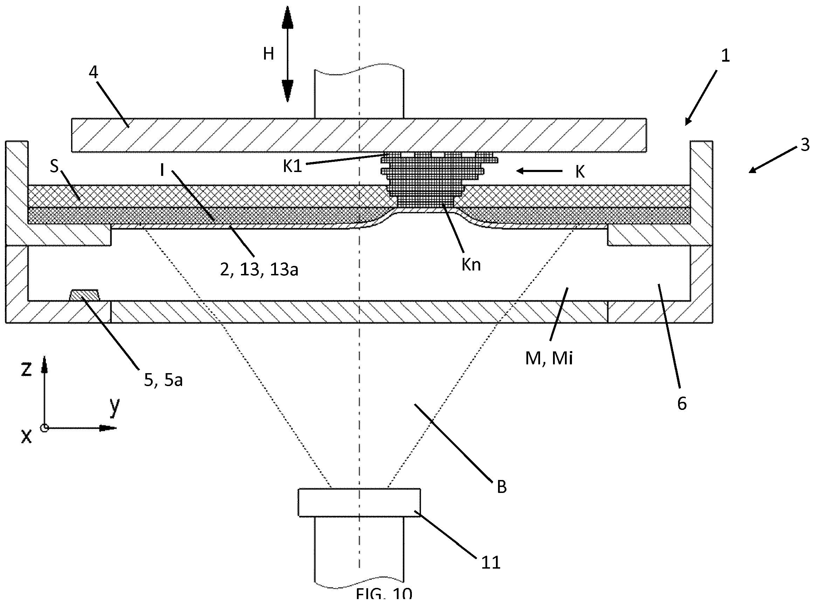

Im in Fig. 10 dargestellten Beispiel ist die Inhibierungsschicht I unterhalb des Körpers K vollständig aufgebraucht, weshalb die zuletzt gebildete Schicht Kn der Körpers K am Wannenboden 2, insbesondere an der Folie 13a, unerwünschter Weise anhaftet.

Die Situationen gemäß Fig. 9 und Fig. 10 können durch die unterschiedlichen Auslenkungen der Folie 13a und die daraus resultierenden unterschiedlichen Änderungen des Volumens anhand der vom Sensor 5 detektierten Volumenänderung unterschieden werden. Wenn der Sensor 5 ein mit einer geschlossenen Kammer 6 zusammenwirkender Drucksensor 5a ist, können die unterschiedlichen Änderungen des Drucks in der Kammer 6 anhand der vom Drucksensor 5a detektierten Druckänderung unterschieden werden. Die Verarbeitungseinheit 8 kann daher beispielsweise einen Mangel an Inhibitormedium Mi signalisieren oder - bevorzugt - selbstständig für eine rechtzeitige Nachförderung oder Verteilung des Inhibitormediums Mi in die/der Kammer 6 sorgen, z.B. durch Steuerung einer entsprechenden Inhibitorquelle 20.

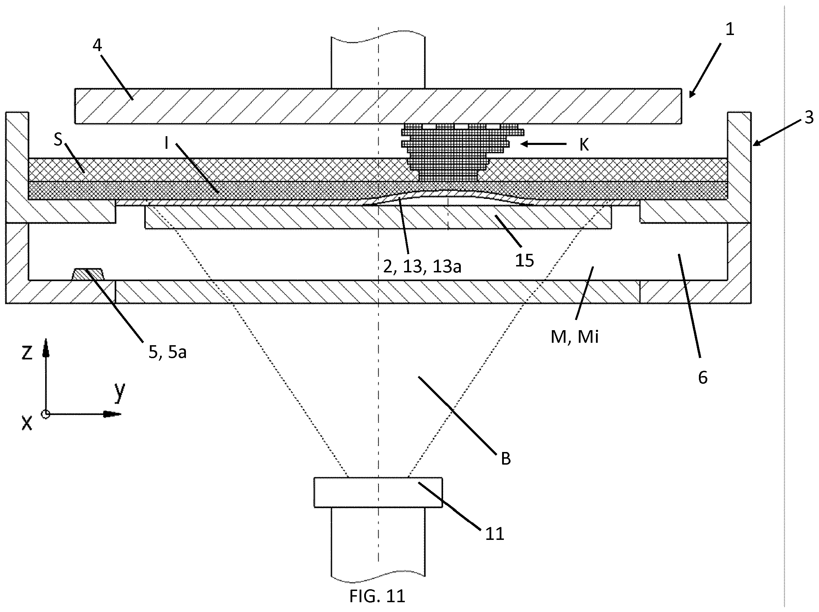

Im Unterschied zu Fig. 9 ist in Fig. 11 eine Trägerplatte 15 vorgesehen, an welcher der Wannenboden 2, insbesondere die Folie 13a aufliegen kann. Aufgrund der Erhöhungen 16 und Vertiefungen 17 ändert die Trägerplatte 15 hinsichtlich der Verteilung des Inhibitormediums Mi nichts an der grundsätzlichen Funktionsweise wie oben beschrieben.

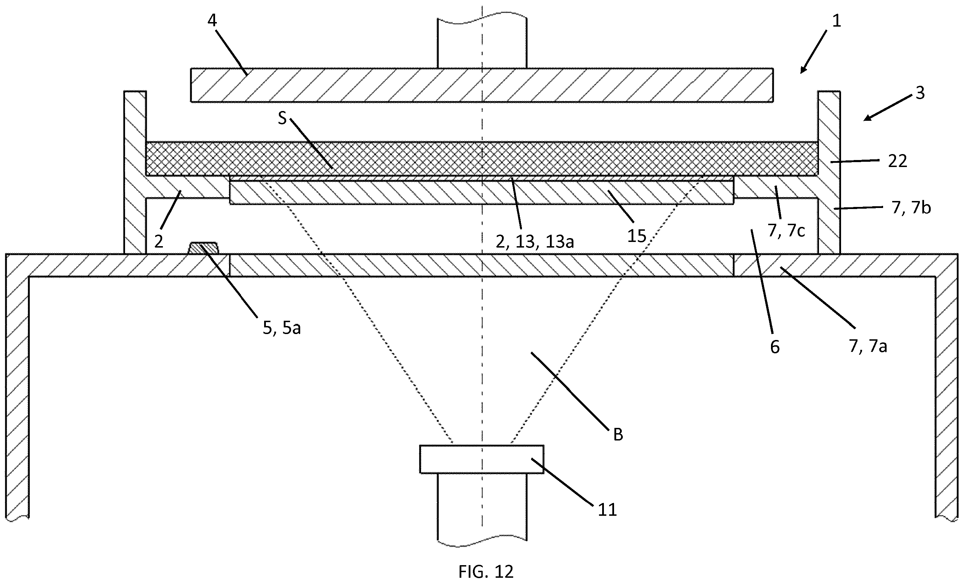

Fig. 12 zeigt die Vorrichtung 1 in einer Ausführungsform, bei welcher der Wannenboden 2 ein öffenbarer, insbesondere abnehmbarer Deckel 22 des Kammergehäuses 7 der Kammer 6 ist. Die Kammer 6 wird bei dieser Variante erst durch den Einbau der Wanne 3 in die Anlage geschlossen. Dabei besteht das Kammergehäuse 7 aus einem Kammerboden 7a, aus Seitenteilen 7b und aus einem Kammeroberteil 7c. Der Wannenboden 2 als Deckel 22 des Kammergehäuses 7 kann wie im in Fig. 12 dargestellten Beispiel den Kammeroberteil 7c und die Seitenteile 7b bilden. Somit wird der Deckel 22 auf den Kammerboden 7a, welcher durch eine Auflagefläche der Anlage gebildet ist, aufgesetzt. Die Auflagefläche, welche den Kammerboden 7a bildet, ist hier gleichzeitig Teil des Maschinengehäuses einer Fertigungsmaschine. In einer anderen Ausführungsform kann der Deckel 22 nur den Kammeroberteil 7c bilden und wird auf die Seitenteile 7b und auf den Kammerboden 7a aufgesetzt. Alternativ zur in Fig. 12 beispielhaft dargestellten geschlossenen Kammer 6, kann die Kammer 6 teilweise offen ausgebildet sein, um mit einem Durchflusssensor 5b zusammenwirken.

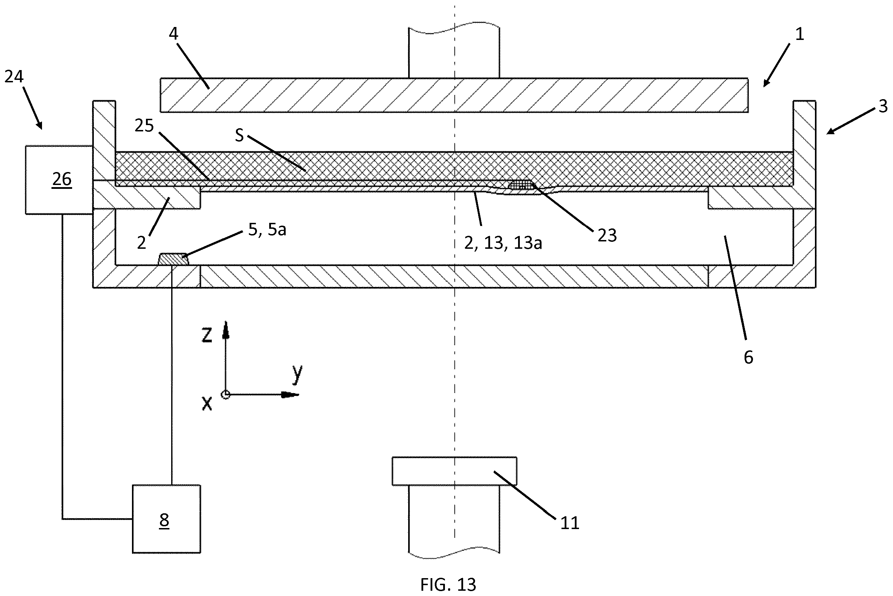

Fig. 13 zeigt die Vorrichtung 1 mit einer in der Wanne 3 am Wannenboden 2, insbesondere auf der Folie 13a, bewegbaren Rakel 23. Bevorzugt ist der Sensor 5, d.h. der Drucksensor 5a oder der Durchflusssensor 5b, über die Verarbeitungseinheit 8 mit einer Antriebseinheit 24 der Rakel 23 verbunden. Im in Fig. 13 dargestellten Beispiel ist die Antriebseinheit 24 der Rakel 23 eine verschiebbar in der Wanne 3 aufgenommene Stange 25, welche durch einen durch die Verarbeitungseinheit 8 angesteuerten Motor 26 bewegt wird. Die Verarbeitungseinheit 8 ist bspw. eingerichtet, abhängig vom mit dem Sensor 5 erfassten Sensorsignal, d.h. dem mit dem Drucksensor 5a erfassten Druck in der Kammer 6 oder der mit dem Durchflusssensor 5b erfassten Stoffmengenänderung in der Kammer 6, die Antriebseinheit 24 (Motor 26) der Rakel 23 zu steuern.

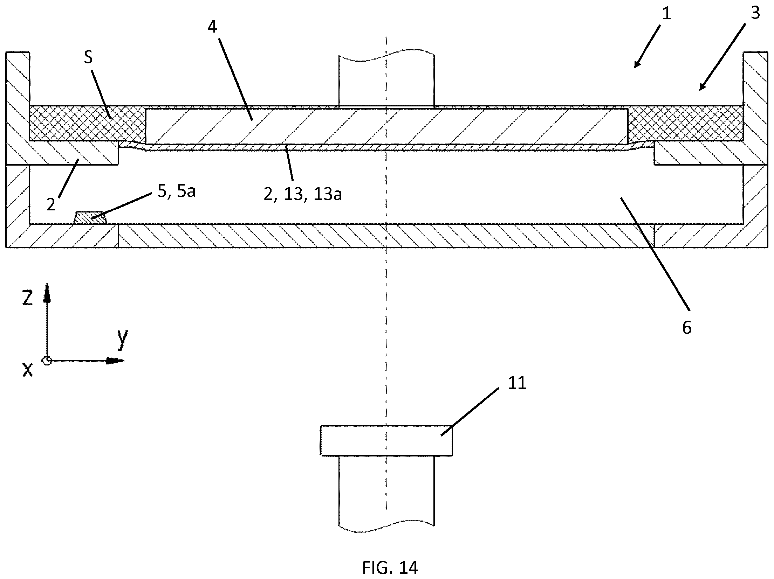

Fig. 14 zeigt die Vorrichtung 1 in einem Zustand, in welchem die in negative Z-Richtung abgesenkte Bauplattform 4 am Wannenboden 2, insbesondere an der Folie 13a antastet. Unter Antasten wird eine Berührung des Wannenbodens 2 bzw. der Folie 13a durch die Bauplattform 4 oder durch die zuletzt ausgehärtete Schicht Kn des Körpers K ohne nennenswerte bzw. mit minimaler Auslenkung des Wannenbodens 2 bzw. der Folie 13a verstanden. Jede weitere Absenkung der Bauplattform 4 würde zu einer durch den Sensor 5 (Drucksensor 5a oder Durchflusssensor 5b) messbaren Volumenänderung in der Kammer 6 (d.h. einer Verringerung des Volumens und einer resultierenden Erhöhung des Drucks bei geschlossener Kammer 6 oder einer resultierenden Verringerung der Menge des Fluids in der teilweise offenen Kammer 6) führen.

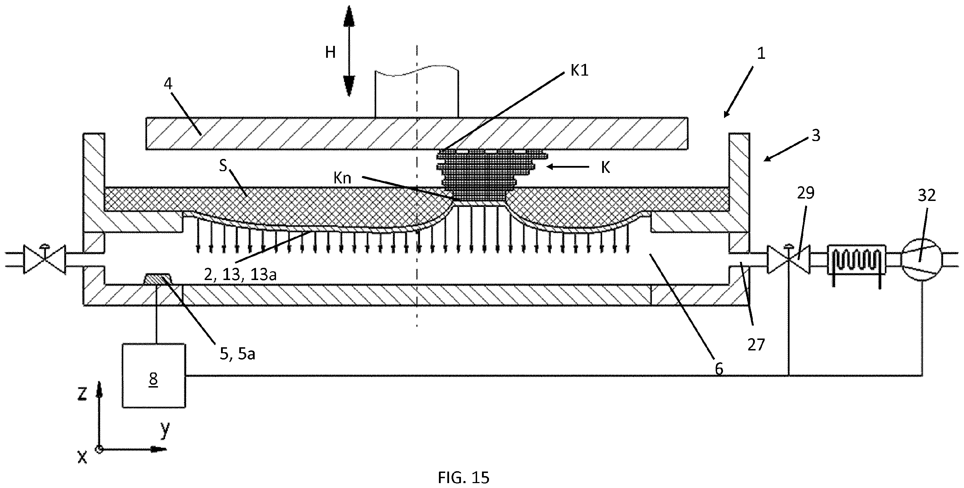

Fig. 15 zeigt die Vorrichtung 1 in einem Zustand, in welchem zum Ablösen einer zuletzt ausgehärteten und am Wannenboden 2 anhaftenden Schicht Kn des Körpers K vom Wannenboden 2, insbesondere während eines Wegbewegens der höhenverstellbaren Bauplattform 4 von der Ruhelage des Wannenbodens 2, ein den Wannenboden 2 von der Bauplattform 4 weg auslenkender Unterdruck in der Kammer 6 durch die Verarbeitungseinheit 8 eingestellt wurde. Im in Fig. 15 dargestellten Beispiel wurde die Bauplattform 4 bereits ein Stück weit nach oben, in positive Z-Richtung verfahren. Die Einstellung des Unterdrucks in der Kammer 6 erfolgt in Abhängigkeit vom mit dem Sensor 5 insb. Drucksensor 5a erfassten Druck in der Kammer 6. Hierfür ist der Drucksensor 5a über die Verarbeitungseinheit 8 mit einem mit der Kammer 6 verbundenen Verdichter 32 verbunden. Der Verdichter 32 kann vorzugsweise in beide Richtungen betrieben werden, d.h. zur Erzeugung eines Überdrucks oder eines Unterdrucks in der Kammer 6, sobald das Ventil 29 vor dem Einlass 27 geöffnet ist. Der Unterdruck ist in Fig. 15 durch vertikal nach unten gerichtete Pfeile angedeutet. Zur Erzeugung des Unterdrucks in der Kammer 6 ist diese geschlossen oder zumindest verschließbar ausgebildet.

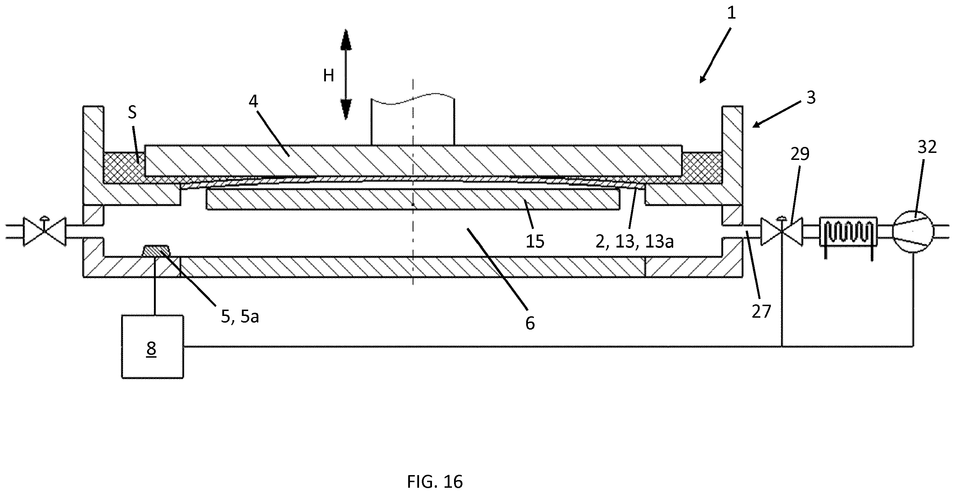

Fig. 16 zeigt die Vorrichtung 1 in einem Zustand, in welchem vor einem Antasten der Bauplattform 4 oder der zuletzt ausgehärteten Schicht Kn des Körpers K am Wannenboden 2, ein den Wannenboden 2 zur Bauplattform 4 auslenkender Überdruck in der Kammer 6 durch die Verarbeitungseinheit 8 eingestellt wurde. Im in Fig. 16 dargestellten Beispiel wurde die Bauplattform 4 bereits ein Stück weit nach unten, in negative Z-Richtung verfahren, um am Wannenboden 2 anzutasten. Die Einstellung des Überdrucks in der Kammer 6 erfolgt in Abhängigkeit vom mit dem Sensor 5 insb. Drucksensor 5a erfassten Druck in der Kammer 6. Hierfür ist der Drucksensor 5a über die Verarbeitungseinheit 8 mit einem mit der Kammer 6 verbundenen Verdichter 32 verbunden. Der Überdruck bewirkt ein nach oben Wölben der Folie 13a. Dadurch kann ein Antasten auch bei Verwendung einer Trägerplatte 15 verwendet werden, um mittels des Drucksensors 5a einen Antast-Zeitpunkt anhand eines plötzlichen Druckanstiegs zu detektieren. Zur Erzeugung des Überdrucks in der Kammer 6 ist diese geschlossen oder zumindest verschließbar ausgebildet.

Zu Beginn der Fertigung eines Körpers K wird die Bauplattform 4 so weit abgesenkt, dass sie sich im Bereich einer Schichtdicke (vorzugsweise 10pm - 300pm) über dem Wannenboden 2 befindet. Die anschließende Belichtung der ersten herzustellenden Schicht K1 der Körpers K wird meist mit erhöhtem Energieeintrag durchgeführt, um ein sicheres Anhaften der Schicht K1 an der Bauplattform 4 zu gewährleisten. Bedingt durch bspw. die Genauigkeit der Höhenpositionierung der Bauplattform 4, der Wannenalterung und durch Unterschiede in der Wannenproduktion kann der Abstand zwischen der Bauplattform 4 und dem Wannenboden 2 variieren, sodass das Anhaften der ersten Schicht K1 nicht immer garantiert werden kann. Ein in Fig. 16 dargestelltes aktives Antasten des Wannenbodens 2 durch die Bauplattform 4 ist deshalb sinnvoll und verhindert die oben aufgeführten Probleme. Dazu wird der Druck in der Kammer 6 über den Verdichter 32 oder eine Druckquelle 18 (siehe Fig. 6a) erhöht, sodass eine leichte, konvexe Wölbung des Wannenbodens 2, wie in Fig. 16, entsteht. Anschließend verfährt die Bauplattform 4 in Richtung des Wannenbodens 2, d.h. nach unten. Sobald die Bauplattform 4 den gewölbten Wannenboden 2 berührt, steigt der Druck in der Kammer 6 weiter an. Die Bauplattform 4 kann weiter in Richtung des Wannenbodens 2 bewegt werden, bis sich der Druck nicht mehr ändert, dann liegt der Wannenboden 2 an der Trägerplatte 15 an und ist flach gedrückt. Ein weiteres Verfahren in die negative Z-Richtung führt bspw. zu einem Schrittverlust im Schrittmotor bzw. zur Beschädigung der Wanne 3.

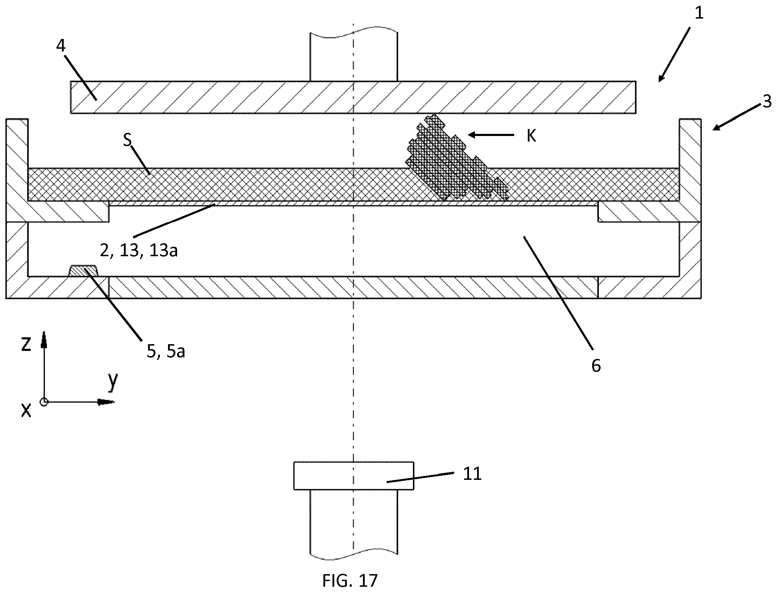

In Fig. 17 ist ein Fehlerfall dargestellt, in welchem sich ein Körper K unerwünschter Weise zum Teil von der Bauplattform 4 abgelöst hat. Ein solcher Fehlerfall kann mit dem Sensor 5 (Drucksensor 5a oder Durchflusssensor 5b) erfasst werden, da ein weiteres Verfahren der Bauplattform 4 nach unten, in negative Z-Richtung, zu einer vorzeitigen Volumenreduktion (Druckerhöhung oder Stoffmengenreduktion) in der Kammer 6 führt. Die Vorzeitigkeit der Volumenreduktion kann aus der erwarteten Höhe des Körpers K auf Basis der bereits erzeugten Schichten K1-Kn und dem vom Schrittmotor gemeldeten Weg der Bauplattform 4 im Vergleich zum Zeitpunkt der vom Sensor 5 detektierten Volumenreduktion ermittelt und erkannt werden.

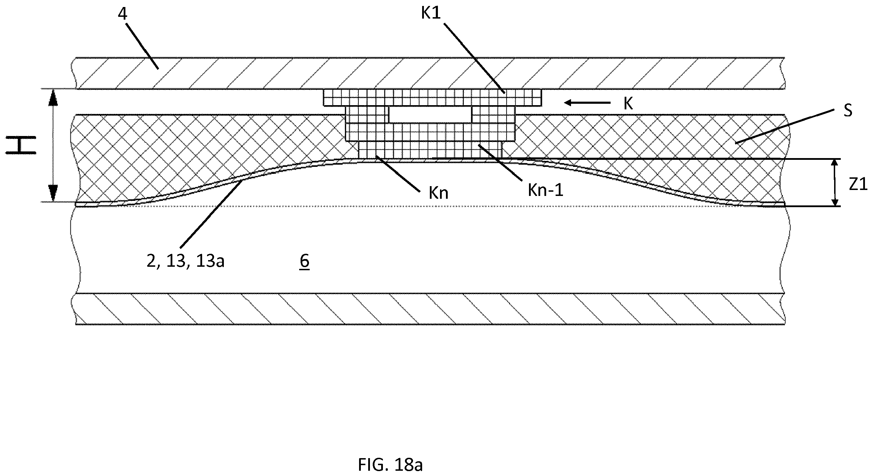

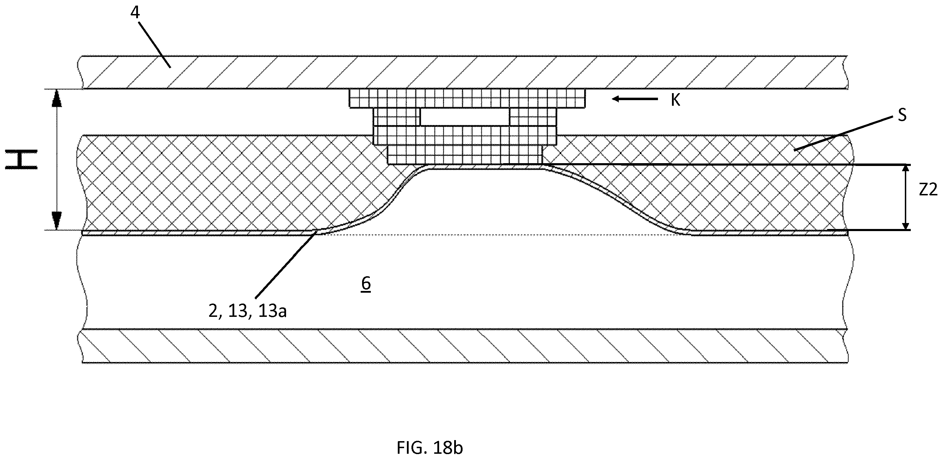

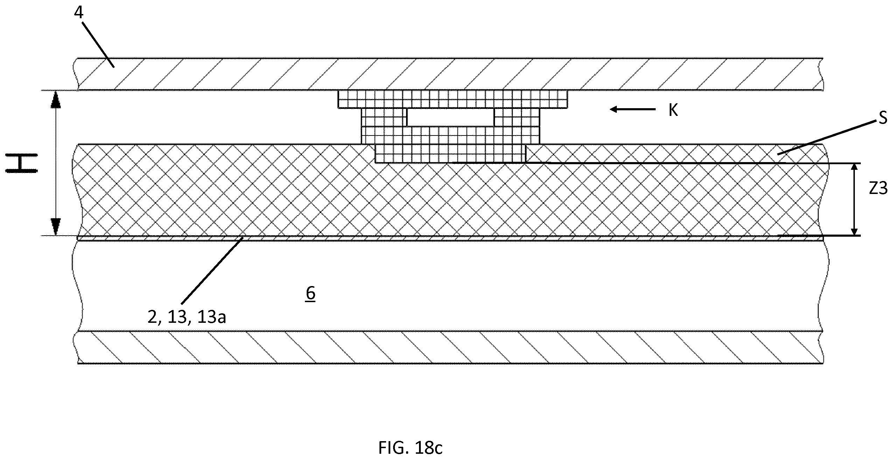

Die Fig. 18a bis 18c zeigen, wie sich der gewölbte Wannenboden 2 von der zuletzt ausgehärteten Schicht Kn der Körpers K löst, wobei die Höhe der Bauplattform 4 verändert wird (Z1<Z2<Z3). In Fig. 18a wurde die Bauplattform 4 bereits ein Stück in positive z-Richtung verfahren. In Fig. 18b wurde die Bauplattform 4 noch weiter in positive z-Richtung verfahren und es hat bereits eine teilweise Separation stattgefunden. In Fig. 18c wurde die Bauplattform 4 noch ein wenig weiter in positive z-Richtung verfahren und der Wannenboden 2 hat sich in diesem Zeitpunkt vollständig vom Körper K gelöst und ist in seine Ruhelage zurückgekehrt. Dadurch hat sich das Volumen der Kammer 6 verkleinert, was einem negativen Vorzeichen ("-") der Volumenänderung entspricht.

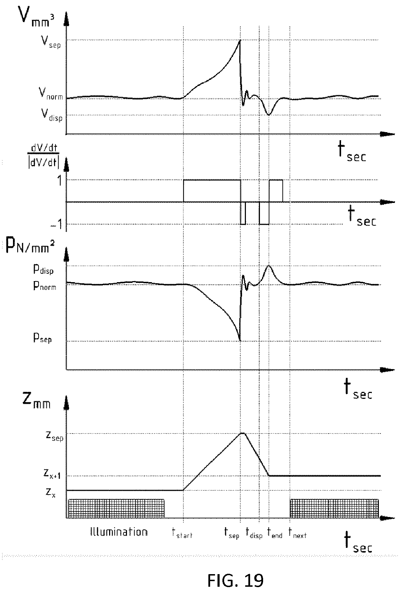

Fig. 19 zeigt Zeitverläufe des Volumens der Kammer 6, des Vorzeichens der Volumenänderung des Volumens, der aus der Volumenänderung resultierenden Druckänderung in der Kammer 6, wenn diese geschlossen ist, und der Z-Position bzw. Höhe der Bauplattform 4 in Bezug auf die Ruhelage des Wannenbodens 2, während einer durch den Sensor 5, insb. Drucksensor 5a, überwachten Schichtgenerierung. Zu Beginn wird die härtbare, bspw. lichtaushärtende Substanz S mit einer gewünschten Querschnittsform ausgehärtet, um eine Schicht Kn zu bilden. Anschließend muss die ausgehärtete Schicht Kn, welche zwischen dem Wannenboden 2 und zuvor generierten Schicht Kn-1 entstanden ist, vom Wannenboden 2 separiert werden. Ab $t_{start}$ wird die Bauplattform 4 von $z_x$ in positive Z-Richtung verfahren. Durch die flexible Ausführung des Wannenbodens 2 wird dieser konkav in Z-Richtung verformt und das Volumen in der Kammer 6 steigt vom Normalvolumen $V_{norm}$ an (vgl. Fig. 18a kurz danach). Die positive Volumenänderung (Vorzeichen "+" oder "1") hat eine proportionale Druckverminderung von $p_{norm}$ aus zur Folge, diese wird von dem Drucksensor 5a erfasst. Abhängig von Querschnittsform, Schichtdicke, Material und vielen weiteren Faktoren löst sich die generierte Schicht Kn vom Wannenboden 2, sobald die Höhe $z_{sep}$ (zum Zeitpunkt $t_{sep}$) erreicht worden ist (vgl. Fig. 18c). Der gewölbte Wannenboden 2 bewegt sich schlagartig in seine plane Ursprungsform (Ruhelage) zurück. Abhängig von Bauform und Material des Wannenbodens 2 kann es zu einer gedämpften Schwingung kommen. Der Übergang des Wannenbodens 2 in die Ruhelage führt zu einer schnellen negativen Volumenänderung (Vorzeichen "-" oder "-1") welche in $V_{norm}$ resultiert und damit zu einer messbaren Druckänderung von $p_{sep}$ zu $p_{norm}$. Der Ablösezeitpunkt oder Separationszeitpunkt $t_{sep}$ kann somit beispielsweise anhand des Vorzeichenwechsels der Volumenänderung von "1" auf "-1" während des Separationsvorgangs erkannt werden (das Vorzeichen der Volumenänderung kann optional als das umgekehrte Vorzeichen der Druckänderung ermittelt werden). Dadurch kann der Separationsvorgang, d.h. die Anhebung der Bauplattform 4, beendet werden und die Bauplattform von $z_{sep}$ zu $z_{x+1}$ bewegt (abgesenkt) werden. Bei $t_{disp}$ kommt es zur Materialverdrängung, welche den Wannenboden 2 konkav wölbt und das Volumen der Kammer 6 verkleinert sodass der gemessene Druck ansteigt. Zum Zeitpunkt $t_{end}$ ist die Z-Position $z_{x+1}$, an welcher die neue Schicht generiert werden soll, erreicht. Der Druck in der Kammer $p_{disp}$ ist größer als $p_{norm}$. Daher wird die Bestrahlung, bspw. Belichtung, erst zum Zeitpunkt $t_{next}$ eingeleitet. Dieser gewährleistet, dass die Materialverdrängung, welche durch einen planen Wannenboden 2 und einem daraus resultierenden Kammerdruck $p_{norm}$ gekennzeichnet ist, abgeschlossen ist. Der Belichtungszeitraum ist im Diagramm der Z-Position durch karierte Rechtecke dargestellt. Die Kenntnis des Separationszeitpunkts $t_{sep}$ ist prozesstechnisch sehr wertvoll, da ohne diesen eine voraussichtliche Separationshöhe $z_{sep}$ angenommen werden muss und diese mit ausreichender Sicherheit beaufschlagt werden muss, um auf jeden Fall eine Separation zu erreichen. Dies führt dazu, dass die Bauplattform 4 (ohne Kenntnis des Separationszeitpunkts $t_{sep}$) häufig weiter in positive Z-Richtung verfahren wird, obwohl sich die Schicht Kn vom Wannenboden 2 bereits gelöst hat. Dabei werden etliche Sekunden pro Schicht umsonst verfahren. Übliche zu generierende Körper bestehen aus über 1000 Schichten, somit verlängert sich der Druckjob ohne Kenntnis des Separationszeitpunkts $t_{sep}$ erheblich.

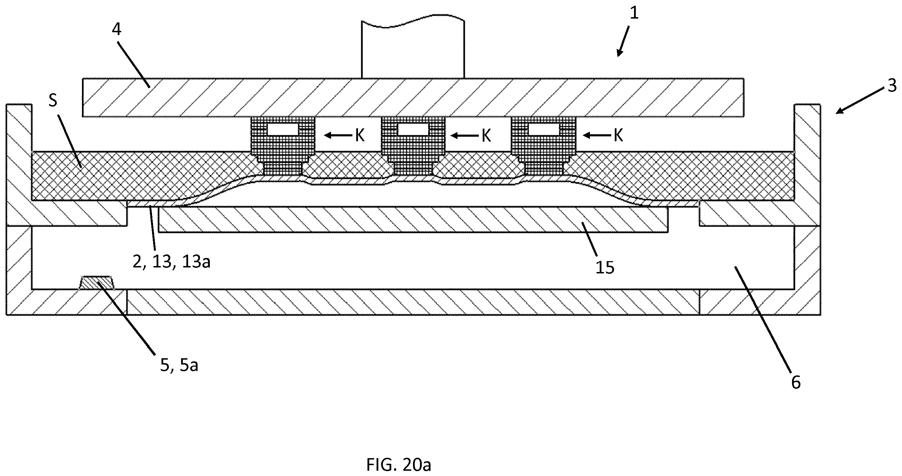

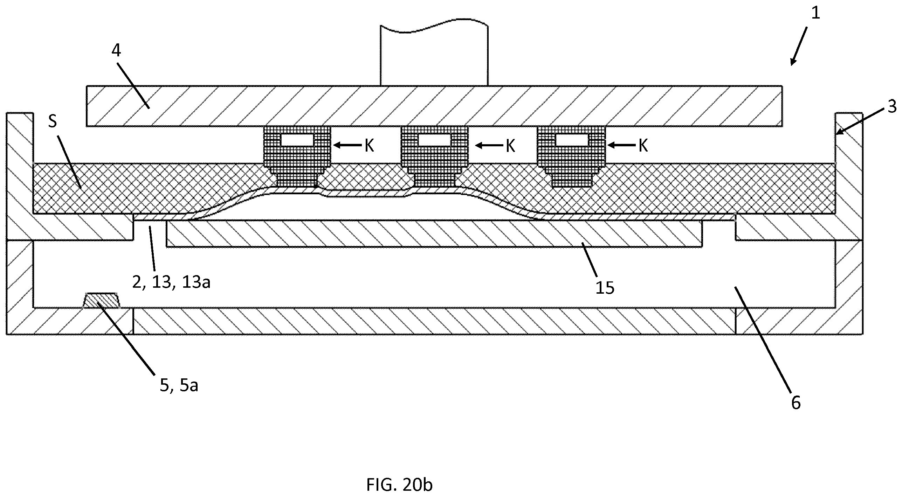

Die Fig. 20a und 20b zeigen einen Trennvorgang von drei Körpern K vom Wannenboden 2, wobei sich in Fig. 20b der am weitesten rechts dargestellte Körper K bereits vom Wannenboden 2 abgelöst hat und der Wannenboden 2 im Bereich unter dem am weitesten rechts dargestellte Körper K in seine Ruhelage zurückgekehrt ist. Anhand der vom Sensor 5 (Drucksensor 5a oder Durchflusssensor 5b) detektierten Volumenänderung (Druckänderung oder Stoffmengenänderung) in der Kammer 6 lässt sich feststellen, ob einzelne Körper K noch nicht abgelöst sind.

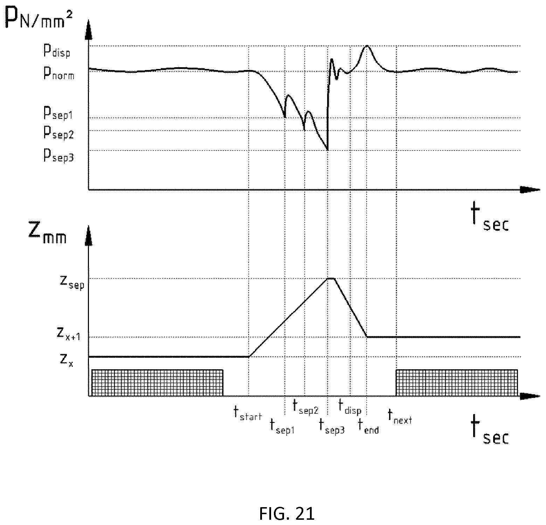

Fig. 21 zeigt Zeitverläufe der Druckänderung und der Z-Position, bzw. Höhe der Bauplattform 4 in Bezug auf die Ruhelage des Wannenbodens 2, während einer durch den Sensor 5, insb. Drucksensor 5a, überwachten Schichtgenerierung. Dabei löst sich zum Zeitpunkt $t_{sep1}$ der am weitesten rechts dargestellte Körper K vom Wannenboden 2, zum Zeitpunkt $t_{sep2}$ der in der Mitte dargestellte Körper K vom Wannenboden 2 und zum Zeitpunkt $t_{sep3}$ der am weitesten links dargestellte Körper K vom Wannenboden 2. Die drei lokalen Minima im Zeitverlauf der Druckänderung sind die Ablösedrücke $p_{sep1}$, $p_{sep2}$, $p_{sep3}$ der drei generierten Körper K. Der Belichtungszeitraum ist im Diagramm der Z-Position durch karierte Rechtecke dargestellt.

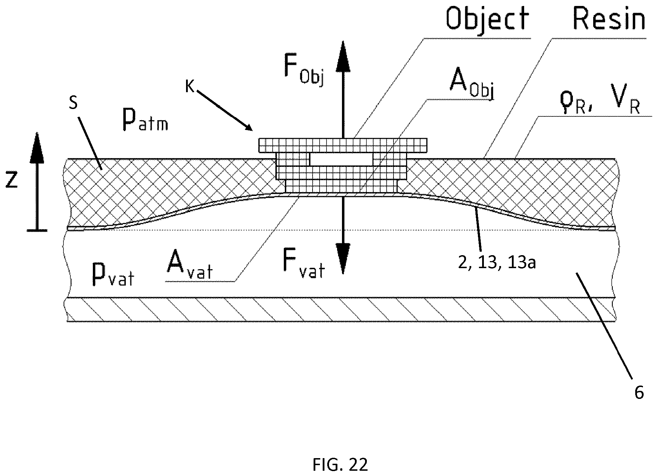

Fig. 22 ist ein statisches Kraftmodell des Separationsprozesses (Trennvorgangs) für eine mögliche Berechnung der Soll-Volumenänderung, mit welcher die Ist-Volumenänderungen verglichen werden kann. Dadurch lassen sich den einzelnen Separationszeitpunkten auch die generierten Körper K zuordnen.

Berücksichtigt wird die Abzugskraft $F_{Obj}$, die Rückstellkraft des ausgelenkten Wannenbodens 2 $F_{vat}$, die Gewichtskraft des eingefüllten Harzes als härtbare Substanz S $\rho_R V_R g$, sowie die durch den Druckunterschied entstehenden Kräfte im Maschinenraum $(A_{vat}-A_{Obj})p_{atm}$ und in der Wannenkammer 6 $A_{vat}p_{vat}$.

Es gilt:

$$\sum_i F_{z,i} = 0 = F_{Obj} - F_{vat} - \rho_R V_R g - \left(A_{vat} - A_{Obj}\right)p_{atm} + A_{vat}p_{vat}$$

$$F_{Obj} - F_{vat} = \rho_R V_R g + \left(A_{vat} - A_{Obj}\right)p_{atm} - A_{vat}p_{vat}$$

Die bekannten Kräfte sind durch Kenntnis der Materialeigenschaften und des Füllstandes sowie durch Messung des Druckes auf der rechten Seite der obigen Gleichung. Als Maschinenraum kann ein allgemeiner Raum in der Maschine verstanden werden, dieser kann auch der Bauraum sein.

Da die Form und Position von $A_{Obj}$ bekannt ist, lässt sich mit Hilfe der Z-Höhe und den Materialeigenschaften der Folie 13a, $F_{vat}$ näherungsweise berechnen/vorhersagen. Dadurch kann auf die Abzugskraft $F_{Obj}$ geschlossen werden. Diese beeinflusst die Objektqualität und kann zum ungewollten Ablösen von der Bauplattform 4 führen. Sie kann auch in einem Regelkreis als Führungsgröße, mit der Abzugsgeschwindigkeit als Stellgröße, dienen.

Des Weiteren kann durch die bekannten Parameter die Folienwölbung bedingt durch die Auslenkung berechnet werden. Die daraus resultierende Soll-Volumenänderung kann durch die Sensordaten mit einer Ist-Volumenänderung, welche sich wie folgend ergibt, verglichen werden.

Die Zustandsänderung der Kammer ergibt sich aus:

$$\frac{p_1 * V_1}{T_1} = \frac{p_2 * V_2}{T_2}$$

Wobei für das Volumen $V_2 = V_1 + \Delta V_{ist}$ gilt, dadurch kann die Ist-Volumenänderung berechnet werden.

$$\Delta V_{ist} = V_1 * \left(\frac{p_1}{p_2} * \frac{T_2}{T_1} - 1\right)$$

Eine zu große Abweichung zwischen Soll- und Ist-Volumen ($\Delta V_{ist} < \Delta V_{soll}$)deutet auf eine Abnahme der Wannensteifigkeit hin, wodurch die Wannenalterung bzw. die Qualität der Wanne 3 beurteilt werden kann.

Die Vorrichtung und das Verfahren ermöglichen somit, mit Hilfe der bekannten Position der Bauplattform 4, und den bekannten Aushärtepositionen, z.B. in Form einer Belichtungsmatrix, die Soll-Verformung des flexiblen Wannenbodens 2 zu modellieren und die daraus resultierende Solldruckänderung (Soll-Volumenänderung) mit der tatsächlichen Druckänderung (Volumenänderung) zu vergleichen. Abweichungen deuten unter anderem auf eine Änderung der Wannensteifheit hin, wodurch die Wannenalterung bzw. die Qualität der Wanne 3 beurteilt werden kann.

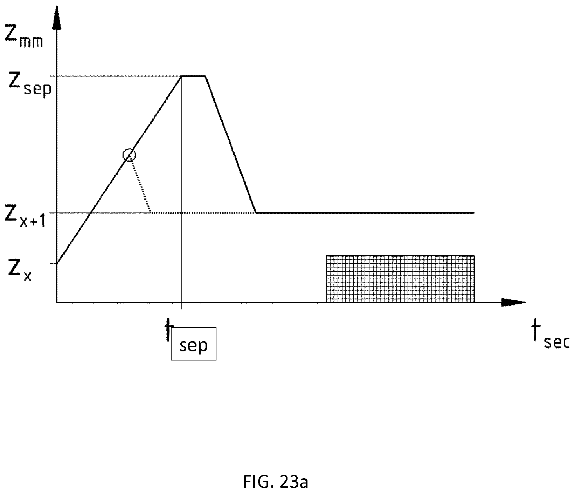

Die Fig. 23a bis 23c zeigen Zusammenhänge der Höhenverstellung der Bauplattform 4 mit der Belichtungszeit der härtbaren Substanz S für drei Verfahrensabläufe. Der Belichtungszeitraum ist in den Diagrammen durch karierte Rechtecke dargestellt.

Fig. 23a zeigt insbesondere ein Verfahren, bei welchem die Belichtung der härtbaren Substanz S, ohne Verwendung einer Inhibierungsschicht I, getrennt von der Bewegung der Bauplattform 4 erfolgt (asynchroner Modus ohne Inhibierungsschicht I). Dabei verfährt die Bauplattform 4 in positive Z-Richtung nach oben, um die generierte Schicht vom Wannenboden 2 zu trennen. Aufgrund der Messwerte des Sensors 5 (Drucksensors 5a oder Durchflusssensors 5b) wird die Trennung der generierten Schicht vom Wannenboden 2 erkannt und die Anhebung der Bauplattform 4 beendet. Die Bauplattform 4 wird wieder abgesenkt und nach einer Verdrängungswartezeit wird die nächste Schicht belichtet. Die Messwerte des Sensors 5 (Drucksensors 5a oder Durchflusssensors 5b) werden beim asynchronen Prozess mit Wanne 3 ohne Inhibierungsschicht I zum Erkennen des Ablösezeitpunktes und zur Einstellung der Abzugsgeschwindigkeit durch maximal zulässige Volumenänderung per Zeiteinheit verwendet.

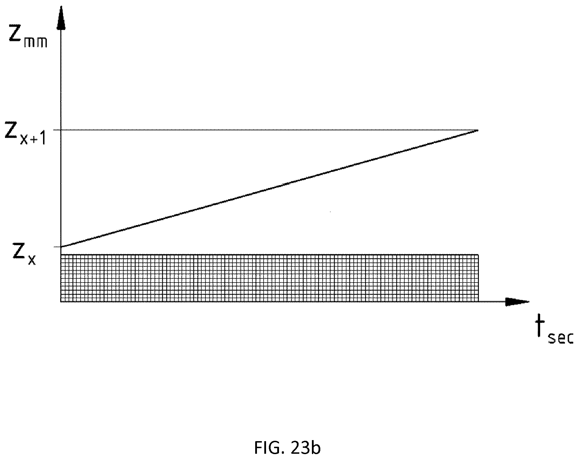

Fig. 23b zeigt insbesondere ein Verfahren, bei welchem die Belichtung der härtbaren Substanz S und die Bewegung der Bauplattform 4 um die Höhe eine Schichtdicke nach oben gleichzeitig erfolgt (synchroner Modus, mit Inhibierungsschicht I). Der Drucksensor 5a sowie der Durchflusssensor 5b können dabei verwendet werden, um den Füllstand der Wanne 2 und/oder den Verbrauch der Inhibierungsschicht zu überwachen und somit eine geeignete Steuerung des Drucks in der Kammer 6, einer Zufuhr von Inhibierungsmedium in die Kammer 6 und eine Anpassung der Temperatur in der Kammer 6 zu ermöglichen.

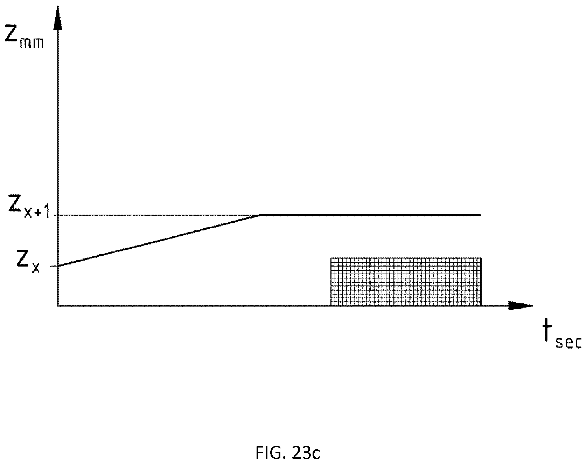

Fig. 23c zeigt insbesondere ein Verfahren, bei welchem die Belichtung der härtbaren Substanz S nach der Bewegung der Bauplattform 4 um die Höhe eine Schichtdicke nach oben erfolgt, unter Verwendung einer Inhibierungsschicht I (asynchroner Modus mit Inhibierungsschicht I).

Fig. 24 zeigt eine Vorrichtung 1 gemäß der Erfindung ähnlich der Vorrichtung 1 aus Fig. 1, wobei im Unterschied zur Vorrichtung 1 aus Fig. 1 an Stelle des Drucksensors 5a, welcher mit einer geschlossenen Kammer 6 zusammenwirkt, ein Durchflusssensor 5b vorgesehen ist, welcher mit einer teilweise offenen Kammer 6 zusammenwirkt. Die teilweise offenen Kammer 6 weist eine als Einlass und Auslass für Fluid dienende Öffnung 34 auf. Somit kann im Falle einer Volumenänderung der Kammer 6 das in der Kammer 6 eingeschlossene bzw. enthaltene Fluid durch die Öffnung 34 ein- bzw. ausströmen. Diese Fluidströmung durch die Öffnung 34 wird vom Durchflusssensor 5b detektiert. Der Fachmann wird verstehen, dass in einigen der in den Figuren dargestellten Ausführungsbeispielen, insbesondere abhängig von den mit der Vorrichtung 1 durchgeführten Verfahrensschritten, die geschlossene Kammer 6 mit dem Drucksensor 5a durch eine teilweise offene Kammer 6 mit dem Durchflusssensor 5b ersetzt werden kann.

**Patentansprüche**

1. Vorrichtung (1), für eine Anlage zum schichtweisen Aufbau eines Körpers (K) aus einer durch Strahlung härtbaren Substanz (S), mit einer einen Wannenboden (2) aufweisenden Wanne (3) zur Aufnahme der durch Strahlung härtbaren Substanz (S), mit einer über dem Wannenboden (2) angeordneten und in Bezug auf den Wannenboden (2) höhenverstellbaren Bauplattform (4), und mit einem mit dem Wannenboden (2) zusammenwirkenden Sensor (5), wobei der Wannenboden (2) zumindest teilweise flexibel ausgebildet ist, wobei eine Kammer (6) vorgesehen ist, wobei die Kammer (6) von einer Unterseite des Wannenbodens (2) begrenzt ist, wobei der Sensor (5) eingerichtet ist, eine Volumenänderung der Kammer (6) zu detektieren und ein Sensorsignal bereitzustellen, aus dem ein Vorzeichen der Volumenänderung ermittelbar ist, wobei der Sensor (5) eingerichtet ist, eine zum Volumen der Kammer oder zur Volumenänderung direkt oder indirekt proportionale Messgröße quantitativ zu erfassen und als Sensorsignal bereitzustellen, d**adurch gekennzeichnet, dass** der Sensor (5) ein zur Erfassung eines Drucks und/oder einer mit der Volumenänderung korrespondierenden Druckänderung eines in der Kammer (6) aufgenommenen komprimierbaren Mediums (M) eingerichteter Drucksensor (5a) und/oder ein zur Erfassung einer mit der Volumenänderung korrespondierenden Stoffmengenänderung der in der Kammer (6) eingeschlossenen Stoffmenge eines in der Kammer aufgenommenen Fluids eingerichteter und angeordneter Durchflusssensor ist, wobei der Sensor (5) eingerichtet ist, einen erfassten Druck und/oder eine erfasste Druckänderung und/oder eine erfasste Stoffmengenänderung als Messgröße und Sensorsignal bereitzustellen.

2. Vorrichtung (1) nach Anspruch 2, **dadurch gekennzeichnet, dass** der Sensor (5) mit einer Verarbeitungseinheit (8) verbunden ist, welche eingerichtet ist, das vom Sensor (5) bereitgestellte Sensorsignal zu verarbeiten.

3. Vorrichtung (1) nach Anspruch 2, **dadurch gekennzeichnet, dass** der Sensor (5) über die Verarbeitungseinheit (8) mit einer Antriebseinheit (9) für die höhenverstellbare Bauplattform (4) und/oder mit einer Steuereinheit (10) für eine Strahlungsquelle (11), welche für die Bestrahlung der durch Strahlung härtbaren Substanz (S) vorgesehen ist, verbunden ist, und die Verarbeitungseinheit (8) eingerichtet ist, die Antriebseinheit (9) für die höhenverstellbare Bauplattform (4) und/oder die Steuereinheit (10) für die Strahlungsquelle (11) in Abhängigkeit von dem vom Sensor (5) bereitgestellten Sensorsignal zu steuern.

4. Vorrichtung (1) nach einem der Ansprüche 1 bis 3, **dadurch gekennzeichnet, dass** die Kammer (6) mit zumindest einer einstellbaren Druckquelle (18) zur Einstellung eines Ruhedrucks in der Kammer (6) und/oder einer einstellbaren Heizvorrichtung (19) zur Einstellung einer Temperatur in der Kammer (6) und/oder einer einstellbaren Prozessstoffquelle (20) zur einstellbaren Zufuhr eines Prozessmediums (Mi) zur mindestens lokalen Manipulation des Verfestigungsvorgangs der durch Strahlung härtbaren Substanz (S) in die Kammer (6) und/oder einer Luftstromquelle (21) zur Erzeugung eines Luftstroms in der Kammer (6) verbunden ist.

5. Vorrichtung (1) nach Anspruch 4 und Anspruch 4, **dadurch gekennzeichnet, dass** der Sensor (5) über die Verarbeitungseinheit (8) mit der einstellbaren Druckquelle (18) und/oder der einstellbaren Heizvorrichtung (19) und/oder der einstellbaren Prozessstoffquelle (20) und/oder der Luftstromquelle (21) verbunden ist, und die Verarbeitungseinheit (8) eingerichtet ist, die Druckquelle (18) und/oder die Heizvorrichtung (19) und/oder die Prozessstoffquelle (20) und/oder die Luftstromquelle (21) in Abhängigkeit von dem vom Sensor (5) bereitgestellten Sensorsignal zu steuern.

6. Vorrichtung (1) nach einem der Ansprüche 1 bis 5, **dadurch gekennzeichnet, dass** der Wannenboden (2) zumindest teilweise strahlungsdurchlässig ist und vorzugsweise eine flexible, gespannte Folie (13a) aufweist.

7. Vorrichtung (1) nach einem der Ansprüche 1 bis 6, **dadurch gekennzeichnet, dass** der Wannenboden (2) semipermeabel, für ein Prozessmedium (Mi) durchlässig, ausgebildet ist.

8. Vorrichtung (1) nach einem der Ansprüche 1 bis 7, **dadurch gekennzeichnet, dass** zumindest ein Teil des Wannenbodens (2) auf einer zumindest teilweise strahlungsdurchlässigen, insbesondere transparenten Trägerplatte (15) aufliegt.

9. Vorrichtung (1) nach Anspruch 8, **dadurch gekennzeichnet, dass** die Trägerplatte (15) für ein Prozessmedium (Mp) durchlässig ausgebildet ist oder am Wannenboden (2) anliegende Erhöhungen (16) für den Durchtritt eines Prozessmediums (Mp) zwischen den Erhöhungen (16) aufweist.

10. Vorrichtung (1) nach einem der Ansprüche 1 bis 9, **dadurch gekennzeichnet, dass** eine in der Wanne (3) am Wannenboden (2) bewegbare Rakel (23) vorgesehen ist.

11. Vorrichtung (1) nach Anspruch 10, **dadurch gekennzeichnet, dass** der Sensor (5) über die Verarbeitungseinheit (8) mit einer Antriebseinheit (24) der Rakel (23) verbunden ist, und die Verarbeitungseinheit (8) eingerichtet ist, abhängig von dem vom Sensor (5) bereitgestellten Sensorsignal die Antriebseinheit (24) der Rakel (23) zu steuern.

12. Vorrichtung (1) nach einem der Ansprüche 1 bis 11, **dadurch gekennzeichnet, dass** der Wannenboden (2) ein öffenbarer, insbesondere abnehmbarer Deckel (22) eines Kammergehäuses (7) der Kammer (6) ist.

13. Verfahren zum schichtweisen Aufbau eines Körpers (K) aus einer durch Strahlung härtbaren Substanz (S), die in einer Wanne (3) aufgenommen wird, welche einen Wannenboden (2) aufweist, bei dem für jede zu bildende Schicht (K1, ... Kn) des Körpers (K) eine in Bezug auf den Wannenboden (2) höhenverstellbare Bauplattform (4) in eine Höhe über dem Wannenboden (2) verfahren wird, welche einen Abstand zwischen der Bauplattform (4) oder der zuletzt gebildeten Schicht (Kn) des Körpers (K) zum Wannenboden (2) im Ausmaß mindestens der Dicke der zu bildenden Schicht (Kn+1) des Körpers (K) definiert, die durch Strahlung härtbare Substanz (S) zur Bildung der Schicht (Kn+1) des Körpers (K) selektiv mittels einer Strahlungsquelle (11) durch Bestrahlung ausgehärtet wird, und die höhenverstellbare Bauplattform (4) mit der daran anhaftenden, ausgehärteten Schicht (Kn+1) des Körpers (K) von einer Ruhelage des Wannenbodens (2) weg bewegt wird, um Raum für die Ausbildung einer nächsten Schicht (Kn+2) zwischen der ausgehärteten Schicht (Kn+1) des Körpers (K) und dem Wannenboden (2) zu schaffen, wobei der Wannenboden (2) zumindest teilweise flexibel ausgebildet ist und zumindest ein Verfahrensparameter von einem mit dem Wannenboden (2) zusammenwirkenden Sensor (5) erfasst wird, wobei der Sensor (5) eine Volumenänderung einer Kammer (6) detektiert und ein Sensorsignal bereitstellt, aus dem ein Vorzeichen der Volumenänderung ermittelbar ist, wobei die Kammer (6) von einer Unterseite des Wannenbodens (2) begrenzt ist, wobei das Volumen der Kammer (6) durch verfahrensbedingte Auslenkungen des Wannenbodens (2) aus der Ruhelage veränderbar ist, wobei der Sensor (5) eine zum Volumen der Kammer (6) oder zur Volumenänderung direkt oder indirekt proportionale Messgröße quantitativ erfasst und als Sensorsignal bereitstellt, **dadurch gekennzeichnet, dass** der Sensor (5) ein Drucksensor (5a) oder Durchflusssensor (5b) ist, wobei mit dem Drucksensor (5a) eine mit der Volumenänderung korrespondierende Änderung des Druckes eines komprimierbaren Mediums (M) in der Kammer (6) als Messgröße erfasst wird oder mit dem Durchflusssensor eine mit der Volumenänderung korrespondierende Stoffmengenänderung der in der Kammer (6) eingeschlossenen Stoffmenge eines Fluids als Messgröße erfasst wird.

14. Verfahren nach Anspruch 13, **dadurch gekennzeichnet, dass** das vom Sensor (5) bereitgestellte Sensorsignal in einer mit dem Sensor (5) verbundenen Verarbeitungseinheit (8) verarbeitet und zumindest ein Verfahrensparameter abhängig von dem vom Sensor (5) bereitgestellten Sensorsignal eingestellt wird.

15. Verfahren nach Anspruch 14, **dadurch gekennzeichnet, dass** die Verarbeitungseinheit (8) die erfasste und als Sensorsignal bereitgestellte Messgröße mit einem Erwartungswert vergleicht und/oder einen Verlauf erfasster Messgrößen mit einem Verlauf von Erwartungswerten vergleicht und den zumindest einen Verfahrensparameter abhängig von der Differenz zwischen der Messgröße und dem Erwartungswert und/oder zwischen dem Verlauf der Messgrößen und dem Verlauf der Erwartungswerte einstellt.

16. Verfahren nach Anspruch 14, **dadurch gekennzeichnet, dass** Änderungen der mit dem Sensor (5) erfassten und als Sensorsignal bereitgestellten Messgröße in einer mit dem Sensor (5) verbundenen Verarbeitungseinheit (8) in einem Simulationsmodell der Erwartungswerte des Aufbauvorgangs verarbeitet werden und zumindest ein Verfahrensparameter abhängig von mindestens einem erfassten Messwert der Messgröße und/oder der Änderung von erfassten Messwerten nach Vorgabe des Simulationsmodells eingestellt wird.

17. Verfahren nach Anspruch 15, **dadurch gekennzeichnet, dass** der Erwartungswert und/oder die mehreren Erwartungswerte abhängig von zumindest einem Verfahrensparameter von der Verarbeitungseinheit (8) berechnet wird bzw. werden.

18. Verfahren nach Anspruch 16, **dadurch gekennzeichnet, dass** das Simulationsmodell zumindest einen eingestellten Verfahrensparameter als Eingangswert berücksichtigt.

19. Verfahren nach einem der Ansprüche 14 bis 18, **dadurch gekennzeichnet, dass** auf Basis des vom Sensor (5) bereitgestellten Sensorsignals die Höhe der Bauplattform (4) und/oder der zuletzt ausgehärteten Schicht (Kn) des Körpers (K) in Bezug auf die Ruhelage des Wannenbodens (2) und/oder eine Bewegungsgeschwindigkeit der Bauplattform (4) und/oder die Größe einer Fläche der zuletzt ausgehärteten Schicht (Kn) des Körpers (K) als Verfahrensparameter in der Verarbeitungseinheit (8) bestimmt wird, wenn der Wannenboden (2) durch Bewegungen der Bauplattform (4) aus der Ruhelage ausgelenkt wird.

20. Verfahren nach einem der Ansprüche 14 bis 19, **dadurch gekennzeichnet, dass** in Abhängigkeit von dem vom Sensor (5) bereitgestellten Sensorsignal eine Höhenverstellung der Bauplattform (4) mittels einer damit und mit der Verarbeitungseinheit (8) verbundenen Antriebseinheit (9) für die Bauplattform (4) und/oder eine Bestrahlung der durch Strahlung härtbaren Substanz (S) mittels einer mit der Verarbeitungseinheit (8) und der Strahlungsquelle (11) verbundenen Steuereinheit (10) für die Strahlungsquelle (11) als Verfahrensparameter durch die Verarbeitungseinheit (8) gesteuert wird.

21. Verfahren nach einem der Ansprüche 14 bis 20, **dadurch gekennzeichnet, dass** in Abhängigkeit von dem vom Sensor (5) bereitgestellten Sensorsignal ein Ruhedruck in der Kammer (6) mittels mindestens einer mit der Kammer (6) und der Verarbeitungseinheit (8) verbundenen einstellbaren Druckquelle (18) und/oder eine Temperatur in der Kammer (6) mittels mindestens einer mit der Kammer (6) und der Verarbeitungseinheit (8) verbundenen einstellbaren Heizvorrichtung (19) und/oder eine Zufuhr eines Prozessmediums (Mp) in die Kammer (6) mittels mindestens einer mit der Kammer (6) und der Verarbeitungseinheit (8) verbundenen einstellbaren Prozessstoffquelle (20) und/oder ein Luftstrom in der Kammer (6) mittels mindestens einer mit der Kammer (6) und der Verarbeitungseinheit (8) verbundenen Luftstromquelle (21) als Verfahrensparameter durch die Verarbeitungseinheit (8) eingestellt wird.

22. Verfahren nach einem der Ansprüche 14 bis 21, **dadurch gekennzeichnet, dass** aus dem vom Sensor (5) bereitgestellten Sensorsignal ein Ablösen einer zuletzt ausgehärteten und am Wannenboden (2) anhaftenden Schicht (Kn) des Körpers (K) vom Wannenboden (2) und/oder eine Ablösehöhe und/oder eine Ablösegeschwindigkeit einer zuletzt ausgehärteten und am Wannenboden (2) anhaftenden Schicht (Kn) des Körpers (K) vom Wannenboden (2) und/oder ein Antasten des Wannenbodens (2) und/oder ein Anpressdruck einer in der Wanne (3) beweglichen Rakel (23) auf den Wannenboden (2) und/oder ein fehlerhaft von der Bauplattform (4) abgelöster Körper (K) und/oder eine Wannenalterung und/oder ein unerwartetes Anhaften des Körpers (K) am Wannenboden (2) bei Zufuhr eines Inhibitormediums (Mi) in die Kammer (6) und an die durch Strahlung härtbare Substanz (S) und/oder ein Füllstand der durch Strahlung härtbaren Substanz (S) in der Wanne (3) und/oder eine Bereitstellung der Wanne (3) und/oder ein Riss oder Loch im Wannenboden (2) oder in der Kammer (6), als Verfahrensparameter in der Verarbeitungseinheit (8) ermittelt wird.

23. Verfahren nach einem der Ansprüche 14 bis 22, **dadurch gekennzeichnet, dass** in Abhängigkeit von dem vom Sensor (5) bereitgestellten Sensorsignal, zum Ablösen einer zuletzt ausgehärteten und am Wannenboden (2) anhaftenden Schicht (Kn) des Körpers (K) vom Wannenboden (2), insbesondere während eines Wegbewegens der höhenverstellbaren Bauplattform (4) von der Ruhelage des Wannenbodens (2), ein den Wannenboden (2) von der Bauplattform (4) weg auslenkender Unterdruck in der Kammer (6) durch die Verarbeitungseinheit (8) eingestellt wird.

24. Verfahren nach einem der Ansprüche 14 bis 23, **dadurch gekennzeichnet, dass**, bevorzugt in Abhängigkeit von dem vom Sensor (5) bereitgestellten Sensorsignal, vor einem Antasten der Bauplattform (4) oder der zuletzt ausgehärteten Schicht (Kn) des Körpers (K) am Wannenboden (2), ein den Wannenboden (2) zur Bauplattform (4) auslenkender Überdruck in der Kammer (6) durch die Verarbeitungseinheit (8) eingestellt wird.

25. Verfahren nach einem der Ansprüche 14 bis 24, **dadurch gekennzeichnet, dass** die höhenverstellbare Bauplattform (4) mit einer daran und am Wannenboden (2) anhaftenden, zuletzt ausgehärteten Schicht (Kn) des Körpers (K) von einer Ruhelage des Wannenbodens (2) weg bewegt wird, ein Ablösen der zuletzt ausgehärteten und am Wannenboden (2) anhaftenden Schicht (Kn) des Körpers (K) vom Wannenboden (2) in der Verarbeitungseinheit (8) über den Sensor (5) ermittelt wird, die höhenverstellbare Bauplattform (4) in eine Höhe (Zx+1) über der Ruhelage des Wannenbodens (2) verfahren wird, welche einen Abstand zwischen der zuletzt ausgehärteten Schicht (Kn) des Körpers (K) zur Ruhelage des Wannenbodens (2) im Ausmaß mindestens der Dicke der neu zu bildenden Schicht (Kn+1) des Körpers (K) definiert, und danach die durch Strahlung härtbare Substanz (S) zur Bildung der neuen Schicht (Kn+1) des Körpers (K) selektiv mittels der Strahlungsquelle (11) durch Bestrahlung ausgehärtet wird.

26. Verfahren nach einem der Ansprüche 14 bis 25, **dadurch gekennzeichnet, dass** ein Inhibitormedium (Mi) über die Kammer (6) der durch Strahlung härtbaren Substanz (S) zugeführt wird und die höhenverstellbare Bauplattform (4) mit einer daran anhaftenden, zuletzt ausgehärteten Schicht (Kn) des Körpers (K) in eine Höhe (Zx+1) über der Ruhelage des Wannenbodens (2) verfahren wird, welche einen Abstand zwischen der zuletzt ausgehärteten Schicht (Kn) des Körpers (K) zur Ruhelage des Wannenbodens (2) mindestens im Ausmaß der Dicke der neu zu bildenden Schicht (Kn+1) des Körpers (K) definiert, während gleichzeitig zum Verfahren der höhenverstellbaren Bauplattform (4) die durch Strahlung härtbare Substanz (S) zur Bildung der neuen Schicht (Kn+1) des Körpers (K) selektiv mittels der Strahlungsquelle (11) durch Bestrahlung ausgehärtet wird.

27. Verfahren nach einem der Ansprüche 14 bis 26, **dadurch gekennzeichnet, dass** ein Inhibitormedium (Mi) über die Kammer (6) der durch Strahlung härtbaren Substanz (S) zugeführt wird und die höhenverstellbare Bauplattform (4) mit einer daran anhaftenden, zuletzt ausgehärteten Schicht (Kn) des Körpers (K) in eine Höhe (Zx+1) über der Ruhelage des Wannenbodens (2) verfahren wird, welche einen Abstand zwischen der zuletzt ausgehärteten Schicht (Kn) des Körpers (K) zur Ruhelage des Wannenbodens (2) mindestens im Ausmaß der Dicke der neu zu bildenden Schicht (Kn+1) des Körpers (K) definiert, und danach die durch Strahlung härtbare Substanz (S) zur Bildung der neuen Schicht (Kn+1) des Körpers (K) selektiv mittels der Strahlungsquelle (11) durch Bestrahlung ausgehärtet wird.

**Claims**

1. Device (1) for a plant for the layered construction of a body (K) from a radiation-hardenable substance (S), with a trough (3) having a trough floor (2) for receiving the radiation-hardenable substance (S), with a construction platform (4) arranged above the trough floor (2) and height-adjustable in relation to the trough floor (2), and with a sensor (5) interacting with the trough floor (2), the trough floor (2) being at least partially flexible, a chamber (6) being provided, the chamber (6) being delimited by an underside of the trough floor (2), the sensor (5) being set up to detect a change in volume of the chamber (6) and to provide a sensor signal from which a sign of the change in volume can be determined, the sensor (5) being set up to quantitatively detect a measured variable that is directly or indirectly proportional to the volume of the chamber or to the change in volume and to make it available as a sensor signal, **characterized in that** the sensor (5) is a pressure sensor (5a) set up to detect a pressure and/or a change in pressure corresponding to the change in volume of a compressible medium (M) accommodated in the chamber (6) and/or is a flow sensor set up and arranged to detect a substance amount change, corresponding to the change in volume, of the substance amount, enclosed in the chamber (6), of a fluid received in the chamber, the sensor (5) being set up to provide a detected pressure and/or a detected change in pressure and/or a detected change in the substance amount as a measured variable and sensor signal.

2. Device (1) according to Claim 2, **characterized in that** the sensor (5) is connected to a processing unit (8) which is set up to process the sensor signal provided by the sensor (5).

3. Device (1) according to Claim 2, **characterized in that** the sensor (5) is connected via the processing unit (8) to a drive unit (9) for the height-adjustable construction platform (4) and/or to a control unit (10) for a radiation source (11), which is provided for the radiation of the radiation-hardenable substance (S), and the processing unit (8) is set up to control the drive unit (9) for the height-adjustable construction platform (4) and/or the control unit (10) for the radiation source (11), depending on the sensor signal provided by the sensor (5).

4. Device (1) according to one of Claims 1 to 3, **characterized in that** the chamber (6) is equipped with at least one adjustable pressure source (18) for setting a resting pressure in the chamber (6) and/or an adjustable heating device (19) for setting a temperature in the chamber (6) and/or an adjustable process material source (20) for the adjustable supply of a process medium (Mi) for at least local manipulation of the solidification process of the radiation-hardenable substance (S) in the chamber (6) and/or an air flow source (21) for generating an air flow in the chamber (6).

5. Device (1) according to Claim 4 and Claim 4, **characterized in that** the sensor (5) is connected via the processing unit (8) to the adjustable pressure source (18) and/or the adjustable heating device (19) and/or the adjustable process material source (20) and/or the air flow source (21), and the processing unit (8) is set up to control the pressure source (18) and/or the heating device (19) and/or the process material source (20) and/or the air flow source (21), depending on the sensor signal provided by the sensor (5).

6. Device (1) according to one of Claims 1 to 5, **characterized in that** the trough floor (2) is at least partially transparent to radiation and preferably has a flexible, stretched film (13a).

7. Device (1) according to one of Claims 1 to 6, **characterized in that** the trough floor (2) is semi-permeable and is permeable for a process medium (Mi).

8. Device (1) according to one of Claims 1 to 7, **characterized in that** at least part of the trough floor (2) rests on an at least partially radiation-permeable, in particular transparent, carrier plate (15).

9. Device (1) according to Claim 8, **characterized in that** the carrier plate (15) is designed to be permeable to a process medium (Mp) or has elevations (16) resting on the trough floor (2) for the passage of a process medium (Mp) between the elevations (16).

10. Device (1) according to one of Claims 1 to 9, **characterized in that** a scraper (23) which can be moved in the trough (3) on the trough floor (2) is provided.

11. Device (1) according to claim 10, **characterized in that** the sensor (5) is connected via the processing unit (8) to a drive unit (24) of the scraper (23), and the processing unit (8) is set up, depending on the sensor signal provided by the sensor (5), to control the drive unit (24) of the scraper (23).

12. Device (1) according to one of Claims 1 to 11, **characterized in that** the trough floor (2) is an openable, in particular removable cover (22) of a chamber housing (7) of the chamber (6).

13. Process for building up a body (K) in layers from a radiation-hardenable substance (S), which is accommodated in a trough (3) which has a trough floor (2), in which for each layer (K1, ... Kn) to be formed of the body (K), a construction platform (4) that is height-adjustable in relation to the trough floor (2) is moved to a height above the trough floor (2), which creates a distance between the construction platform (4) or the layer (Kn) last formed of the body (K) to the trough floor (2), to the extent of at least the thickness of the layer (Kn+1) to be formed of the body (K), the radiation-hardenable substance (S) for forming the layer (Kn+1) of the body (K) is hardened selectively by means of a radiation source (11) by radiation, and the height-adjustable construction platform (4) with the hardened layer (Kn+1) of the body (K) adhering thereto is moved away from a rest position of the trough floor (2) to create space for the formation of a next layer (Kn+2) between the hardened layer (Kn+1) of the body (K) and the trough floor (2), the trough floor (2) being at least partially flexible and at least one process parameter of a sensor (5) interacting with the trough floor (2) being detected, the sensor (5) detecting a change in volume of a chamber (6) and providing a sensor signal from which a sign of the change in volume can be determined, the chamber (6) being delimited by an underside of the trough floor (2), the volume of the chamber (6) being changeable by process-related deflections of the trough floor (2) from the rest position, the sensor (5) quantitatively detecting a measured variable that is directly or indirectly proportional to the volume of the chamber (6) or to the change in volume and providing this as a sensor signal, **characterized in that** the sensor (5) is a pressure sensor (5a) or flow sensor (5b), the pressure sensor (5a) detecting as a measured variable a change in the pressure of a compressible medium (M) in the chamber (6) corresponding to the change in volume, or the flow sensor detecting as a measured variable a substance amount change, corresponding to the change in volume, of the substance amount, enclosed in the chamber (6) of a fluid.

14. Process according to Claim 13, **characterized in that** the sensor signal provided by the sensor (5) is processed in a processing unit (8) connected to the sensor (5) and at least one process parameter is set depending on the sensor signal provided by the sensor (5).

15. Process according to Claim 14, **characterized in that** the processing unit (8) compares the measured variable that is detected and provided as a sensor signal with an expected value and/or compares a profile of detected measured variables with a profile of expected values and the at least one process parameter as a function of the difference between the measured variable and the expected value and/or between the course of the measured variables and the course of the expected values.

16. Process according to Claim 14, **characterized in that** changes in the measured variable detected with the sensor (5) and provided as a sensor signal are processed in a processing unit (8) connected to the sensor (5) in a simulation model of the expected values of the construction process, and at least one process parameter is set depending on at least one detected measured value of the measured variable and/or the change in detected measured values according to the specification of the simulation model.

17. Process according to Claim 15, **characterized in that** the expected value and/or the plurality of expected values is/are calculated by the processing unit (8) as a function of at least one process parameter.

18. Process according to Claim 16, **characterized in that** the simulation model takes into account at least one set process parameter as an input value.

19. Process according to one of Claims 14 to 18, **characterized in that**, on the basis of the sensor signal provided by the sensor (5), the height of the construction platform (4) and/or the last-hardened layer (Kn) of the body (K) in relation to the rest position of the trough floor (2) and/or a movement speed of the construction platform (4) and/or the size of an area of the last-hardened layer (Kn) of the body (K) is determined as a process parameter in the processing unit (8) when the trough floor (2) is deflected from the rest position by movements of the construction platform (4).

20. Process according to one of Claims 14 to 19, **characterized in that**, depending on the sensor signal provided by the sensor (5), a height adjustment of the construction platform (4) is controlled as a process parameter by the processing unit (8) by means of a drive unit (9) for the construction platform (4), said drive unit being connected to the construction platform and to the processing unit (8), and/or a radiation of the radiation-hardenable substance (S) is controlled as a process parameter by the processing unit (8) by means of a control unit (10) for the radiation source (11), said control unit being connected to the processing unit (8) and the radiation source (11).

21. Process according to one of Claims 14 to 20, **characterized in that**, depending on the sensor signal provided by the sensor (5), a static pressure in the chamber (6) is set as a process parameter by means of at least one adjustable pressure source (18) connected to the chamber (6) and the processing unit (8) and/or a temperature in the chamber (6) is set as a process parameter by means of at least one adjustable heating device (19) connected to the chamber (6) and the processing unit (8) and/or a supply of a process medium (Mp) into the chamber (6) is set as a process parameter by means of at least one adjustable process material source (20) connected to the chamber (6) and the processing unit (8) and/or an air flow in the chamber (6) is set as a process parameter by the processing unit (8) by means of at least one air flow source (21) connected to the chamber (6) and the processing unit (8).

22. Process according to one of Claims 14 to 21, **characterized in that**, from the sensor signal provided by the sensor (5), a detachment of a last-hardened layer (Kn) of the body (K) adhering to the trough floor (2) from the trough floor (2) and/or a detachment severity and/or a detachment speed of a last-hardened layer (Kn) of the body (K) adhering to the trough floor (2) from the trough floor (2) and/or a touching of the trough floor (2) and/or a contact pressure of a scraper (23), movable in the trough (3), on the trough floor (2) and/or a body (K) that was incorrectly detached from the construction platform (4) and/or trough ageing and/or unexpected adhesion of the body (K) to the trough floor (2) when an inhibitor medium (Mi) is fed into the chamber (6) and to the radiation-hardenable substance (S) and/or a filling level of the radiation-hardenable substance (S) in the trough (3) and/or a provision of the trough (3) and/or a tear or hole in the trough floor (2) or in the chamber (6), is determined as a process parameter in the processing unit (8).

23. Process according to one of Claims 14 to 22, **characterized in that**, depending on the sensor signal provided by the sensor (5), in order to detach a last-hardened layer (Kn) of the body (K) adhering to the trough floor (2) from the trough floor (2), in particular while the height-adjustable construction platform (4) is being moved away from the rest position of the trough floor (2), a negative pressure in the chamber (6) that deflects the trough floor (2) away from the construction platform (4) is set by the processing unit (8).

24. Process according to one of Claims 14 to 23, **characterized in that**, preferably as a function of the sensor signal provided by the sensor (5), before the construction platform (4) or the last-hardened layer (Kn) of the body (K) touches the trough floor (2), an overpressure in the chamber (6) that deflects the trough floor (2) towards the construction platform (4) is set by the processing unit (8).

25. Process according to one of Claims 14 to 24, **characterized in that** the height-adjustable construction platform (4) with a last-hardened layer (Kn) of the body (K) adhering to the construction platform and to the trough floor (2) is moved away from a rest position of the trough floor (2), a detachment of the last-hardened layer (Kn) of the body (K) adhering to the trough floor (2) from the trough floor (2) is determined in the processing unit (8) via the sensor (5), the height-adjustable construction platform (4) is moved to a height (Zx+1) above the rest position of the trough floor (2), which creates a distance between the last-hardened layer (Kn) of the body (K) and the resting position of the trough floor (2) to the extent of at least the thickness of the layer (Kn+1) to be newly formed of the body (K), and thereafter the radiation-hardenable substance (S) is selectively radiation-hardened by means of the radiation source (11) to form the new layer (Kn+1) of the body (K).

26. Process according to one of Claims 14 to 25, **characterized in that** an inhibitor medium (Mi) is fed via the chamber (6) to the radiation-hardenable substance (S) and the height-adjustable construction platform (4), with a last-hardened layer (Kn) of the body (K) adhering to the construction platform, is moved to a height (Zx+1) above the resting position of the trough floor (2), which defines a distance between the last-hardened layer (Kn) of the body (K) and the resting position of the trough floor (2) at least to the extent of the thickness of the layer (Kn+1) to be newly formed of the body (K), while at the same time as the movement of the height-adjustable construction platform (4), the radiation-hardenable substance (S) is hardened selectively by means of the radiation source (11) by radiation to form the new layer (Kn+1) of the body (K).

27. Process according to one of Claims 14 to 26, **characterized in that** an inhibitor medium (Mi) is fed via the chamber (6) to the radiation-hardenable substance (S) and the height-adjustable construction platform (4) with a last-hardened layer (Kn) of the body (K) adhering to the construction platform is moved to a height (Zx+1) above the resting position of the trough floor (2), which defines a distance between the last-hardened layer (Kn) of the body (K) and the resting position of the trough floor (2), at least to the extent of the thickness of the layer (Kn+1) to be newly formed of the body (K), and thereafter the radiation-hardenable substance (S) is hardened selectively by radiation by means of the radiation source (11) to form the new layer (Kn+1) of the body (K).

## Revendications

1. Dispositif (1) pour une installation de construction par couches d'un corps (K) à partir d'une substance (S) durcissable par irradiation, comprenant une cuve (3) comportant un fond de cuve (2) destinée à recevoir la substance (S) durcissable par irradiation, comprenant une plate-forme de construction (4) disposée au-dessus du fond de cuve (2) et réglable en hauteur par rapport au fond de cuve (2), et comportant un capteur (5) coopérant avec le fond de cuve (2), le fond de cuve (2) étant formé au moins partiellement flexible, une chambre (6) étant fournie, la chambre (6) étant délimitée par une face inférieure du fond de cuve (2), le capteur (5) étant conçu pour détecter une variation dans le volume de la chambre (6) et pour fournir un signal de capteur à partir duquel un signe de la variation de volume peut être déterminé, le capteur (5) étant conçu pour détecter quantitativement une grandeur mesurée directement ou indirectement proportionnelle au volume de la chambre ou à la variation de volume et pour la fournir en tant que signal de capteur, **caractérisé en ce que** le capteur (5) est un capteur de pression (5a) conçu et agencé pour détecter une pression et/ou une variation de pression correspondant à la variation de volume d'un milieu (M) compressible reçu dans la chambre (6) et/ou un capteur de débit conçu et agencé pour détecter une variation de quantité de matière correspondant à la variation de volume de la quantité de matière contenue dans la chambre (6) d'un fluide reçu dans la chambre, le capteur (5) étant conçu pour fournir une pression détectée et/ou une variation de pression détectée et/ou une variation de quantité de matière détecté en tant que grandeur mesurée et signal de capteur.

2. Dispositif (1) selon la revendication 2, **caractérisé en ce que** le capteur (5) est connecté à une unité de traitement (8), laquelle est conçue pour traiter le signal de capteur fourni par le capteur (5).

3. Dispositif (1) selon la revendication 2, **caractérisé en ce que** le capteur (5) est connecté par l'intermédiaire de l'unité de traitement (8) à une unité d'entraînement (9) pour la plate-forme de construction (4) réglable en hauteur et/ou à une unité de commande (10) pour une source d'irradiation (11), laquelle est fournie pour l'irradiation de la substance (S) durcissable par irradiation, et l'unité de traitement (8) est conçue pour commander l'unité d'entraînement (9) pour la plate-forme de construction (4) réglable en hauteur et/ou l'unité de commande (10) pour la source d'irradiation (11) en fonction du signal de capteur fourni par le capteur (5).

4. Dispositif (1) selon l'une quelconque des revendications 1 à 3, **caractérisé en ce que** la chambre (6) est connectée à au moins une source de pression (18) réglable destinée à régler une pression de repos dans la chambre (6) et/ou à un dispositif de chauffage (19) réglable destiné à régler une température dans la chambre (6) et/ou à une source de matière de traitement (20) réglable destinée à alimenter de manière réglable un milieu de traitement (Mi) pour la manipulation au moins locale du processus de solidification de la substance (S) durcissable par irradiation dans la chambre (6) et/ou à une source d'écoulement d'air (21) destinée à générer un écoulement d'air dans la chambre (6).

5. Dispositif (1) selon la revendication 4 et la revendication 4, **caractérisé en ce que** le capteur (5) est connecté par l'intermédiaire de l'unité de traitement (8) à la source de pression (18) réglable et/ou au dispositif de chauffage (19) réglable et/ou à la source de matière de traitement (20) réglable et/ou à la source d'écoulement d'air (21), et l'unité de traitement (8) est conçue pour commander la source de pression (18) et/ou le dispositif de chauffage (19) et/ou la source de matière de traitement (20) et/ou la source d'écoulement d'air (21) en fonction du signal de capteur fourni par le capteur (5).

**6.** Dispositif (1) selon l'une quelconque des revendications 1 à 5, **caractérisé en ce que** le fond de cuve (2) est au moins partiellement perméable à l'irradiation et, de préférence comporte une feuille (13a) souple tendue.

**7.** Dispositif (1) selon l'une quelconque des revendications 1 à 6, **caractérisé en ce que** le fond de cuve (2) est conçu pour être semi-perméable pour laisser passer un milieu de traitement (Mi).

**8.** Dispositif (1) selon l'une quelconque des revendications 1 à 7, **caractérisé en ce qu'**au moins une partie du fond de cuve (2) repose sur une plaque porteuse (15) au moins partiellement perméable à l'irradiation, en particulier transparente.

**9.** Dispositif (1) selon la revendication 8, **caractérisé en ce que** la plaque porteuse (15) est conçue pour être perméable à un fluide de traitement (Mp) ou comporte des saillies (16) reposant sur le fond de cuve (2) pour le passage d'un fluide de traitement (Mp) entre les saillies (16).

**10.** Dispositif (1) selon l'une quelconque des revendications 1 à 9, **caractérisé en ce que** dans la cuve (3), une racle (23) mobile est fournie sur le fond de cuve (2).

**11.** Dispositif (1) selon la revendication 10, **caractérisé en ce que** le capteur (5) est connecté par l'intermédiaire de l'unité de traitement (8) à une unité d'entraînement (24) de la racle (23), et l'unité de traitement (8) est conçue pour commander l'unité d'entraînement (24) de la racle (23) en fonction du signal de capteur fourni par le capteur (5).

**12.** Dispositif (1) selon l'une quelconque des revendications 1 à 11, **caractérisé en ce que** le fond de cuve (2) est un couvercle (22) ouvrable, en particulier amovible d'un boîtier de chambre (7) de la chambre (6).

**13.** Procédé de construction par couches d'un corps (K) à partir d'une substance (S) durcissable par irradiation qui est reçue dans une cuve (3), laquelle comporte un fond de cuve (2), selon lequel pour chaque couche (K1, ... Kn) du corps (K), une plate-forme de construction (4) réglable en hauteur par rapport au fond de cuve (2) est déplacée à une hauteur au-dessus du fond de cuve (2), laquelle définit une distance entre la plate-forme de construction (4) ou la couche (Kn) formée en dernier du corps (K) jusqu'au fond de cuve (2) à raison d'au moins l'épaisseur de la couche (Kn+1) à former du corps (K), la substance (S) durcissable par irradiation, pour former la couche (Kn+1) du corps (K), est sélectivement durcie par irradiation au moyen d'une source d'irradiation (11), et la plate-forme de construction (4) réglable en hauteur, avec la couche (Kn+1) durcie, adhérente à celle-ci, du corps (K), est éloignée d'une position de repos du fond de cuve (2) pour créer un espace pour la formation d'une couche (Kn+2) suivante entre la couche (Kn+1) durcie du corps (K) et le fond de cuve (2), le fond de cuve (2) étant conçu au moins partiellement flexible et au moins un paramètre de procédé étant détecté par un capteur (5) coopérant avec le fond de cuve (2), le capteur (5) détectant une variation de volume d'une chambre (6) et fournissant un signal de capteur à partir duquel un signe de la variation de volume peut être déterminé, la chambre (6) étant délimitée par une face inférieure du fond de cuve (2), le volume de la chambre (6) pouvant être modifié par des déviations du fond de cuve (2) nécessaires à la mise en œuvre du procédé à partir de la position de repos, le capteur (5) détectant quantitativement une grandeur de mesure directement ou indirectement proportionnelle au volume de la chambre (6) ou à la variation de volume et fournie en tant que signal de capteur, **caractérisé en ce que** le capteur (5) est un capteur de pression (5a) ou un capteur de débit (5b), à l'aide du capteur de pression (5a), une variation de la pression d'un milieu (M) compressible dans la chambre (6) correspondant à la variation de volume étant enregistrée en tant que grandeur mesurée ou, à l'aide du capteur de débit, une variation de quantité de matière correspondant à la variation de volume de la quantité de matière contenue dans la chambre (6) d'un fluide étant enregistrée en tant que grandeur mesurée.

**14.** Procédé selon la revendication 13, **caractérisé en ce que** le signal de capteur fourni par le capteur (5) est traité dans une unité de traitement (8) connectée au capteur (5) et au moins un paramètre de procédé est réglé en fonction du signal de capteur fourni par le capteur (5).

**15.** Procédé selon la revendication 14, **caractérisé en ce que** l'unité de traitement (8) compare la grandeur mesurée enregistrée et fournie en tant que signal de capteur avec une valeur attendue et/ou compare une courbe de grandeurs mesurées enregistrées avec une courbe de valeurs attendues et règle l'au moins un paramètre de procédé en fonction de la différence entre la grandeur mesurée et la valeur attendue et/ou entre la courbe de grandeurs mesurées et la courbe de valeurs attendues.

**16.** Procédé selon la revendication 14, **caractérisé en ce que** des variations de la grandeur mesurée enregistrée à l'aide du capteur (5) et fournie en tant que signal de capteur sont traitées dans une unité de traitement (8) connectée au capteur (5) dans un modèle de simulation des valeurs attendues du processus de construction et au moins un paramètre de procédé est réglé en fonction d'au moins une valeur mesurée enregistrée de la grandeur mesurée et/ou de la variation des valeurs mesurées enregistrées selon la consigne du modèle de simulation.

17. Procédé selon la revendication 15, **caractérisé en ce que** la valeur attendue et/ou la pluralité de valeurs attendues est/sont calculée(s) par l'unité de traitement (8) en fonction d'au moins un paramètre de procédé.

18. Procédé selon la revendication 16, **caractérisé en ce que** le modèle de simulation prend en compte au moins un paramètre de procédé réglé en tant que valeur d'entrée.

19. Procédé selon l'une quelconque des revendications 14 à 18, **caractérisé en ce que**, en fonction du signal de capteur fourni par le capteur (5), la hauteur de la plate-forme de construction (4) et/ou de la dernière couche (Kn) du corps (K) durcie en dernier par rapport à la position de repos du fond de cuve (2) et/ou à une vitesse de déplacement de la plate-forme de construction (4) et/ou à la taille d'une surface de la couche (Kn) du corps (K) durcie en dernier est déterminée en tant que paramètre de procédé dans l'unité de traitement (8) lorsque le fond de cuve (2) est dévié de la position de repos par des mouvements de la plate-forme de construction (4).

20. Procédé selon l'une quelconque des revendications 14 à 19, **caractérisé en ce que**, en fonction du signal de capteur fourni par le capteur (5), un réglage en hauteur de la plate-forme de construction (4), au moyen d'une unité d'entraînement (9) connectée à celui-ci et à l'unité de traitement (8), pour la plate-forme de construction (4), et/ou une irradiation de la substance (S) durcissable par irradiation, au moyen d'une unité de commande (10) connectée à l'unité de traitement (8) et à la source d'irradiation (11), pour la source d'irradiation (11), est commandé par l'unité de traitement (8) en tant que paramètre de procédé.

21. Procédé selon l'une quelconque des revendications 14 à 20, **caractérisé en ce que**, en fonction du signal de capteur fourni par le capteur (5), une pression de repos dans la chambre (6), au moyen d'au moins une source de pression (18) réglable connectée à la chambre (6) et à l'unité de traitement (8), et/ou une température dans la chambre (6), au moyen d'au moins un dispositif de chauffage (19) réglable connecté à la chambre (6) et à l'unité de traitement (8), et/ou une alimentation en milieu de traitement (Mp) dans la chambre (6), au moyen d'au moins une source de matière de traitement (20) réglable connectée à la chambre (6) et à l'unité de traitement (8), et/ou un écoulement d'air dans la chambre (6), au moyen d'au moins une source d'écoulement (21) d'air connectée à la chambre (6) et à l'unité de traitement (8), sont réglés en tant que paramètres de procédé par l'unité de traitement (8).

22. Procédé selon l'une quelconque des revendications 14 à 21, **caractérisé en ce que**, à partir du signal de capteur fourni par le capteur (5), un détachement du fond de cuve (2) d'une couche (Kn) du corps (K) durcie en dernier et adhérant au fond de cuve (2), et/ou une hauteur de détachement, et/ou une vitesse de détachement du fond de cuve (2) d'une couche (Kn) du corps (K) durcie en dernier et adhérant au fond de cuve (2), et/ou un palpage du fond de cuve (2), et/ou une pression d'application d'une racle (23) mobile dans la cuve (3) sur le fond de cuve (2), et/ou un corps (K) incorrectement détaché de la plate-forme de construction (4), et/ou un vieillissement de cuve, et/ou une adhérence inattendue du corps (K) au fond de cuve (2) lors de l'introduction d'un milieu inhibiteur (Mi) dans la chambre (6) et à la substance (S) durcissable par irradiation, et/ou un niveau de remplissage de la substance (S) durcissable par irradiation dans la cuve (3), et/ou une fourniture de la cuve (3), et/ou une fissure ou un trou dans le fond de cuve (2) ou dans la chambre (6), sont déterminés en tant que paramètres de procédé dans l'unité de traitement (8).

23. Procédé selon l'une quelconque des revendications 14 à 22, **caractérisé en ce que**, en fonction du signal de capteur fourni par le capteur (5), pour détacher du fond de cuve (2) une couche (Kn) du corps (K) durcie en dernier et adhérant au fond de cuve (2), en particulier lors de l'éloignement de la plate-forme de construction (4) réglable en hauteur de la position de repos du fond de cuve (2), une dépression dans la chambre (6) déviant le fond de cuve (2) de manière à l'éloigner de la plate-forme de construction (4) est réglée par l'unité de traitement (8).

24. Procédé selon l'une quelconque des revendications 14 à 23, **caractérisé en ce que**, de préférence en fonction du signal de capteur fourni par le capteur (5), avant un palpage de la plate-forme de construction (4) ou de la couche (Kn) du corps (K) durcie en dernier, sur le fond de cuve (2), une surpression dans la chambre (6) déviant le fond de cuve (2) vers la plate-forme de construction (4) est réglée par l'unité de traitement (8).

25. Procédé selon l'une quelconque des revendications 14 à 24, **caractérisé en ce que** la plate-forme de construction (4) réglable en hauteur, avec une couche (Kn) du corps (K) durcie en dernier et adhérant à celle-ci et au fond de cuve (2), est éloignée d'une position de repos du fond de cuve (2), un détachement du fond de cuve (2) de la couche (Kn) du corps (K) durcie en dernier et adhérant au fond de cuve (2) est déterminé dans l'unité de traitement (8) par l'intermédiaire du capteur (5), la plate-forme de construction (4) réglable en hauteur est déplacée à une hauteur (Zx+1) au-dessus de la position de repos du fond de cuve (2), laquelle définit une distance entre la couche (Kn) du corps (K) durcie en dernier et la position de repos du fond de cuve (2) à raison d'au moins l'épaisseur de la nouvelle couche (Kn+1) du corps (K) à former, et puis la substance (S) durcissable par irradiation, pour former la nouvelle couche (Kn+1) du corps (K) est sélectivement durcie par irradiation au moyen de la source d'irradiation (11).

26. Procédé selon l'une quelconque des revendications 14 à 25, **caractérisé en ce qu'**un milieu inhibiteur (Mi) est amené par l'intermédiaire de la chambre (6) à la substance (S) durcissable par irradiation et la plate-forme de construction (4) réglable en hauteur, avec une couche (Kn) du corps (K) durcie en dernier, est déplacée à une hauteur (Zx+1) au-dessus de la position de repos du fond de cuve (2), laquelle définit une distance entre la couche (Kn) du corps (K) durcie en dernier et la position de repos du fond de cuve (2) au moins à raison de l'épaisseur de la nouvelle couche (Kn+1) du corps (K) à former, tandis que simultanément au déplacement de la plate-forme de construction (4) réglable en hauteur, la substance (S) durcissable par irradiation, pour former la nouvelle couche (Kn+1) du corps (K), est durcie sélectivement par irradiation au moyen de la source d'irradiation (11).

27. Procédé selon l'une quelconque des revendications 14 à 26, **caractérisé en ce qu'**un milieu inhibiteur (Mi) est amené par l'intermédiaire de la chambre (6) à la substance (S) durcissable par irradiation et la plate-forme de construction (4) réglable en hauteur, avec une couche (Kn) du corps (K) durcie en dernier, est déplacée à une hauteur (Zx+1) au-dessus de la position de repos du fond de cuve (2), laquelle définit une distance entre la couche (Kn) du corps (K) durcie en dernier et la position de repos du fond de cuve (2), au moins à raison de l'épaisseur de la nouvelle couche (Kn+1) du corps (K) à former, et puis la substance (S) durcissable par irradiation, pour former la nouvelle couche (Kn+1) du corps (K) est durcie sélectivement par irradiation au moyen de la source d'irradiation (11).

FIG. 1

FIG. 2

FIG. 3

FIG. 4

FIG. 5

FIG. 6a

FIG. 6b

EP 3 860 827 B1

FIG. 6c

EP 3 860 827 B1

FIG. 6d

FIG. 7

EP 3 860 827 B1

FIG. 8

EP 3 860 827 B1

FIG. 9

FIG. 10

EP 3 860 827 B1

EP 3 860 827 B1

FIG. 11

FIG. 12

EP 3 860 827 B1

FIG. 13

FIG. 14

FIG. 15

FIG. 16

FIG. 17

FIG. 18a

FIG. 18b

EP 3 860 827 B1

FIG. 18c

FIG. 19

FIG. 20a

EP 3 860 827 B1

FIG. 20b

EP 3 860 827 B1

FIG. 21

FIG. 22

FIG. 23a

FIG. 23b

FIG. 23c

FIG. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2173538 B2
- US 20180194080 A1
- AT 518566 A1
- US 20150064298 A1